(19)

Europäisches Patentamt

European Patent Office

Office européen des brevets

(11) **EP 4 274 146 A1**

(12) **EUROPEAN PATENT APPLICATION**

(43) Date of publication:
**08.11.2023 Bulletin 2023/45**

(21) Application number: **23170815.7**

(22) Date of filing: **28.04.2023**

(51) International Patent Classification (IPC):
**H04L 5/00** *(2006.01)*

(52) Cooperative Patent Classification (CPC):
**H04L 5/0044; H04L 5/0023; H04L 5/0053;**
H04L 5/0051; H04L 5/0055

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.05.2022 US 202263338460 P**
**19.04.2023 US 202318302797**

(71) Applicant: **Acer Incorporated**
**New Taipei City 221 (TW)**

(72) Inventors:
• LO, Li-Chung
  c/o Acer Incorporated, New Taipei City 221,
  Taiwan
  ( R.O.C.) (TW)
• LEE, Chien-Min
  c/o Acer Incorporated, New Taipei City 221,
  Taiwan
  ( R.O.C.) (TW)
• CHEN, Jen-Hsien
  c/o Acer Incorporated, New Taipei City 221,
  Taiwan
  ( R.O.C.) (TW)

(74) Representative: **Haseltine Lake Kempner LLP**
**One Portwall Square**
**Portwall Lane**
**Bristol BS1 6BH (GB)**

(54) **METHOD AND USER EQUIPMENT FOR RECEPTION OF PHYSICAL DOWNLINK SHARED CHANNEL AND TRANSMISSION OF PHYSICAL UPLINK CONTROL CHANNEL**

(57)    A method and a user equipment for reception of physical downlink shared channel and transmission of physical uplink control channel are provided. The method includes: receiving a first downlink control information; in response to a first field being included in the first downlink control information, obtaining a codepoint from the first field, wherein the codepoint is associated with a selection of at least one transmission configuration indicator state; and receiving the physical downlink shared channel according to the first downlink control information.

FIG. 61

**Description**

**BACKGROUND**

Technical Field

The disclosure relates to wireless communication technology, and particularly related to a method and a user equipment (UE) for reception of a physical downlink shared channel (PDSCH) and transmission of a physical uplink control channel (PUCCH).

Description of Related Art

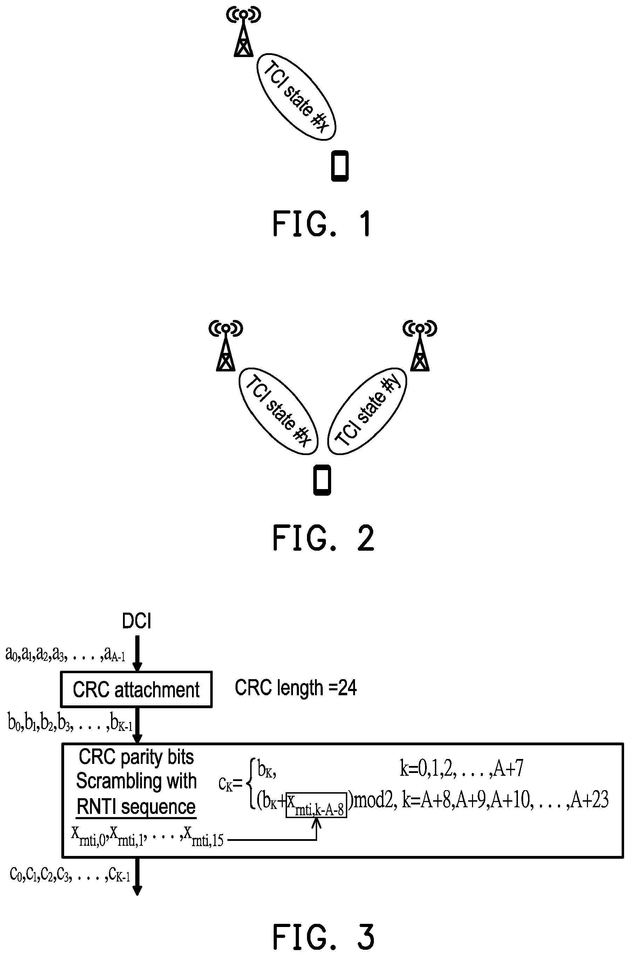

FIG. 1 illustrates a schematic diagram of a Unified transmission configuration indicator (TCI) framework on a single-transmission reception point (TRP) use case. If a UE is served by a single-TRP (S-TRP), the same downlink (DL) beam or uplink (UL) beam (i.e., the beam applying TCI state #x) may be used for channels, signals, or component carriers (CCs) between the TRP and the UE such that signaling overhead between the TRP and the UE may be reduced. The beam between the TRP and the UE may be updated by a downlink control information (DCI) based beam updating mechanism or a fast beam updating mechanism.

FIG. 2 illustrates a schematic diagram of a unified TCI framework on a multi-TRPs (M-TRP) use case. 3GPP 5G New Radio (NR) Release 18 specifies an extension of unified TCI framework in Release 17 for indication of multiple DL or UL TCI states. If a UE is served by M-TRP including first TRP and second TRP as shown in FIG. 2, the same first DL beam or first LTL beam (i.e., the beam applying TCI state #x) may be used for the first subset of channels, signals, or CCs between the first TRP and the UE. Similarly, the same second DL beam or second UL beam (i.e., the beam applying TCI state #y) may be used for the second subset of channels, signals, or CCs between the second TRP and the UE.

Although a UE may be served by two or more beams from the different TRP, both the S-TRP use case and the M-TRP use case for PDSCH/PUCCH scheduling should be considered for the UE according to, for example, scheduling flexibility and/or channel quality.

**SUMMARY**

The disclosure is directed to a method and a UE for reception of PDSCH and transmission of PUCCH. The disclosure provides a way to perform PDSCH/PUCCH scheduling for the UE served by M-TRP or a S-TRP.

The present disclosure is directed to method for reception of a physical downlink shared channel, adapted to a communication device, wherein the method including: receiving a first downlink control information; in response to a first field being included in the first downlink control information, obtaining a codepoint from the first field, wherein the codepoint is associated with a selection of at least one transmission configuration indicator state; and receiving the physical downlink shared channel according to the first downlink control information.

The present disclosure is directed to a method for transmission of a physical uplink control channel, adapted to a communication device, wherein the method including: receiving a first downlink control information; in response to a first field being included in the first downlink control information, obtaining a codepoint from the first field, wherein the codepoint is associated with a selection of at least one transmission configuration indicator state; and transmitting the physical uplink control channel according to the first downlink control information.

The present disclosure is directed to a user equipment for reception of a physical downlink shared channel, including: a transceiver and a processor. The processor is coupled to the transceiver, wherein the processor is configured to: receive, via the transceiver, a first downlink control information; in response to a first field being included in the first downlink control information, obtain a codepoint from the first field, wherein the codepoint is associated with a selection of at least one transmission configuration indicator state; and receive, via the transceiver, the physical downlink shared channel according to the first downlink control information.

The present disclosure is directed to a user equipment for transmission of a physical uplink control channel, including: a transceiver and a processor. The processor is coupled to the transceiver, wherein the processor is configured to: receive, via the transceiver, a first downlink control information; in response to a first field being included in the first downlink control information, obtain a codepoint from the first field, wherein the codepoint is associated with a selection of at least one transmission configuration indicator state; and transmit, via the transceiver, the physical uplink control channel according to the first downlink control information.

Based on the above description, the disclosure provides a way to instruct the UE to apply one or more specific TCI states for the reception of PDSCH or the transmission of PUCCH by an implicit manner or an explicit manner, so as to reduce signaling overhead between the base station (BS) and the UE.

To make the aforementioned more comprehensible, several embodiments accompanied with drawings are described in detail as follows.

## BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 illustrates a schematic diagram of a unified TCI framework on a S-TRP use case.

FIG. 2 illustrates a schematic diagram of a unified TCI framework on a multi-TRPs use case.

FIG. 3 illustrates a schematic diagram of DCI generation according to one embodiment of the present disclosure.

FIG. 4 illustrates a table of beam reporting and CSI reporting according to one embodiment of the present disclosure.

FIG. 5 illustrates a schematic diagram of MAC CE and DCI for PDSCH reception according to one embodiment of the present disclosure.

FIG. 6 illustrates a schematic diagram of a TCI field in DCI for PDSCH reception according to one embodiment of the present disclosure.

FIG. 7 illustrates an antenna port indication table of an antenna port(s) field in DCI for PDSCH reception according to one embodiment of the present disclosure.

FIG. 8 illustrates an antenna port indication table of an antenna port(s) field with value "9-12" in DCI for PDSCH reception according to one embodiment of the present disclosure.

FIG. 9 illustrates a schematic diagram of PDSCH reception based on a TCI state according to one embodiment of the present disclosure.

FIG. 10 illustrates a schematic diagram of PDSCH reception based on two TCI states according to one embodiment of the present disclosure.

FIG. 11 illustrates a schematic diagram of PUCCH transmission based on a PRI according to one embodiment of the present disclosure.

FIG. 12 illustrates a schematic diagram of PUCCH transmission based on a PRI according to one embodiment of the present disclosure.

FIG. 13 illustrates a schematic diagram of PDSCH reception based on a default TCI state according to one embodiment of the present disclosure.

FIG. 14 illustrates a schematic diagram of a unified beam indication by a DCI without DL assignment according to one embodiment of the present disclosure.

FIG. 15 and FIG. 16 illustrate schematic diagrams of a unified beam indication by a DCI with DL assignment according to one embodiment of the present disclosure.

FIG. 17 illustrates a schematic diagram of the improvements for the unified TCI framework according to one embodiment of the present disclosure.

FIG. 18 illustrates a schematic diagram of unified beam indication for the unified TCI framework according to one embodiment of the present disclosure.

FIG. 19 illustrates a schematic diagram of TCI state subset selection according to one embodiment of the present disclosure.

FIG. 20 illustrates a schematic diagram of a flexible TCI state selection according to one embodiment of the present disclosure.

FIG. 21 illustrates a schematic diagram of an explicit TCI state selection according to one embodiment of the present disclosure.

FIG. 22 illustrates a schematic diagram of an explicit TCI state selection based on a codepoint according to one embodiment of the present disclosure.

FIG. 23 illustrates a schematic diagram of an implicit TCI state selection based on an antenna port(s) field according to one embodiment of the present disclosure.

FIG. 24 illustrates a table of the preconfigured association according to one embodiment of the present disclosure.

FIG. 25 illustrates a schematic diagram of an implicit TCI state selection based on the value of the antenna port(s) field according to one embodiment of the present disclosure.

FIG. 26 illustrates a schematic diagram of an implicit TCI state selection embedded in DCI with CRC parity bits scrambling according to one embodiment of the present disclosure.

FIG. 27 illustrates a schematic diagram of DCI generation according to one embodiment of the present disclosure.

FIG. 28 illustrates a schematic diagram of an implicit TCI state selection based on a TCI field according to one embodiment of the present disclosure.

FIG. 29 illustrates a schematic diagram of an implicit TCI state selection based on a predetermined codepoint of a TCI field according to one embodiment of the present disclosure.

FIG. 30 and FIG. 31 illustrate schematic diagrams of an implicit TCI state selection based on a predetermined codepoint of a TCI field according to one embodiment of the present disclosure.

FIG. 32 illustrates a schematic diagram of an implicit TCI state selection based on a MAC CE according to one embodiment of the present disclosure.

FIG. 33 illustrates tables of association between the field in the MAC CE and the TCI field in the DCI according to one embodiment of the present disclosure.

FIG. 34 illustrates a schematic diagram of an implicit TCI state selection for the PDSCH reception based on a MAC CE according to one embodiment of the present disclosure.

FIG. 35 illustrates a schematic diagram of the functionality of the TCI state according to one embodiment of the present disclosure.

FIG. 36 illustrates a schematic diagram of TCI state for the L1 based beam updating according to one embodiment of the present disclosure.

FIG. 37 illustrates a schematic diagram of TCI state for the scheduled PDSCH reception according to one embodiment of the present disclosure.

FIG. 38 illustrates a schematic diagram of L1 based beam updating according to one embodiment of the present disclosure.

FIG. 39 illustrates a schematic diagram of TCI state for the scheduled PDSCH reception and the L1 based beam updating according to one embodiment of the present disclosure.

FIG. 40 illustrates a table of a new field of a DCI according to one embodiment of the present disclosure.

FIG. 41 illustrates a schematic diagram of TCI state subset selection according to one embodiment of the present disclosure.

FIG. 42 illustrates a schematic diagram of a flexible TCI state selection according to one embodiment of the present disclosure.

FIG. 43 illustrates a schematic diagram of a flexible TCI state selection for PUCCH transmission according to one embodiment of the present disclosure.

FIG. 44 and FIG. 45 illustrate schematic diagrams of an explicit TCI state selection based on a codepoint according to one embodiment of the present disclosure.

FIG. 46 illustrates a schematic diagram of an implicit TCI state selection based on an antenna port(s) field according to one embodiment of the present disclosure.

FIG. 47 illustrates a table of the preconfigured association according to one embodiment of the present disclosure.

FIG. 48 illustrates a schematic diagram of an implicit TCI state selection embedded in DCI with CRC parity bits scrambling according to one embodiment of the present disclosure.

FIG. 49 illustrates a schematic diagram of DCI generation according to one embodiment of the present disclosure.

FIG. 50 illustrates a schematic diagram of an implicit TCI state selection based on a TCI field according to one embodiment of the present disclosure.

FIG. 51 illustrates a schematic diagram of an implicit TCI state selection based on a predetermined codepoint of a TCI field according to one embodiment of the present disclosure.

FIG. 52 illustrates a schematic diagram of an implicit TCI state selection based on a predetermined codepoint of a TCI field according to one embodiment of the present disclosure.

FIG. 53 illustrates a schematic diagram of an implicit TCI state selection based on a MAC CE according to one embodiment of the present disclosure.

FIG. 54 illustrates tables of association between the field in the MAC CE and the TCI field in the DCI according to one embodiment of the present disclosure.

FIG. 55 illustrates a schematic diagram of an implicit TCI state selection based on a PRI field according to one embodiment of the present disclosure.

FIG. 56 illustrates a table of association among the TCI field, the PUCCH resource indicated by the PRI field, and the TCI state applied for PUCCH transmission according to one embodiment of the present disclosure.

FIG. 57 illustrates a schematic diagram of the functionality of the TCI state according to one embodiment of the present disclosure.

FIG. 58 illustrates a schematic diagram of an implicit TCI state determination based on one or more TCI states applied for the schedule PDSCH according to one embodiment of the present disclosure.

FIG. 59 illustrates a schematic diagram of a conflict of one or more TCI states according to one embodiment of the present disclosure.

FIG. 60 illustrates a schematic diagram of PDSCH reception based on one or more default TCI states according to one embodiment of the present disclosure.

FIG. 61 illustrates a flowchart of a method for reception of a PDSCH according to one embodiment of the present disclosure.

FIG. 62 illustrates a flowchart of a method for transmission of a PUCCH according to one embodiment of the present disclosure.

FIG. 63 illustrates a schematic diagram of a communication device 100 according to one embodiment of the present disclosure.

## DESCRIPTION OF THE EMBODIMENTS

The abbreviations in the disclosure are defined as follows:

| Abbreviation | Full name |
|---|---|
| ACK | Acknowledgment |
| CC | component carrier |
| CDM | code division multiplexing |
| CG | configured grant |
| CRC | Cyclic redundancy check |
| CS | Configured Scheduling |
| CSI-RS | Channel state information reference signal |
| CORESET | Control Resource Set |
| DCI | downlink control information |
| DM-RS | demodulation reference signal |
| DL | downlink |
| DRX | discontinuous reception |
| FDRA | frequency domain resource allocation |
| TDRA | time domain resource allocation |
| gNodeB | next Generation Node B |
| HARQ | Hybrid Automatic Repeat request |
| ID | identity |
| MAC | medium access control |
| MAC CE | MAC control element |
| MCS | modulation coding scheme |
| MIMO | multiple input multiple output |
| mTRP (M-TRP) | multiple TRP |
| NR | new radio |
| PDCCH | physical downlink control channel |
| PDSCH | physical downlink shared channel |
| PUCCH | physical uplink control channel |
| PUSCH | physical uplink share channel |
| QCL | quasi co-located |
| RNTI | Radio Network Temporary Identifier |
| RRC | radio resource control |
| RS | reference signal |
| RX beam | receiving beam |
| SRS | sound reference signal |
| SS | search space |
| SSB | Synchronization signal block |
| SSBRI | Synchronization signal block resource indicator |
| SPS | Semi Persistent Scheduling |
| sTRP (S-TRP) | single TRP |
| TCI | Transmission Configuration Indicator |
| TRP | transmission reception point |
| Tx beam | transmitted beam |
| UE | user equipment |
| UL | uplink |

(continued)

| Abbreviation | Full name |
|---|---|
| WID | working item description |
| RI | rank indicator |
| PMI | precoder matrix indicator |
| CQI | channel quality indicator |
| TB | transport block |
| SFN | single frequency network |
| TDM | time domain multiplexing |
| BWP | bandwidth part |
| RV | Redundancy version |
| NDI | New data indicator |
| L1 | layer one |
| A-CSI-RS | aperiodic CSI-RS |

A RS in the disclosure may include a DL RS and/or a LTL RS.

A DL RS configuration in the disclosure may include: a DM-RS group, a DM-RS group index, a DM-RS resource, a DM-RS resource index, a DM-RS port index, a DM-RS port, a CSI-RS resource set index, a CSI-RS resource set, a CSI-RS resource index, a CSI-RS resource, a CSI-RS port index, a CSI-RS port, a SSB resource set index, a SSB resource set, a SSB resource index, an SSB resource, a SSB port index, or a SSB port, but not limited thereto.

A LTL RS configuration in the disclosure may include: a DM-RS group, a DM-RS group index, a DM-RS resource, a DM-RS resource index, a DM-RS port index, a DM-RS port, a RACH group, a RACH group index, a RACH resource, a RACH resource index, a SRS resource set index, a SRS resource set, a SRS resource index, a SRS resource, a SRS port index, or a SRS port, but not limited thereto.

A CSI-RSI in the disclosure may include: a CSI-RS resource set index, a CSI-RS resource set, a CSI-RS resource index, a CSI-RS resource, a CSI-RS port index, or a CSI-RS port, but not limited thereto.

An SSB in the disclosure may include: a SSB resource set index, a SSB resource set, a SSB resource index, a SSB resource, a SSB port index, or a SSB port, but not limited thereto.

An SRS in the disclosure may include: a SRS resource set index, a SRS resource set, a SRS resource index, a SRS resource, a SRS port index, or a SRS port, but not limited thereto.

A beam in the disclosure may include: an antenna, an antenna port, an antenna element, a group of antennas, a group of antenna port, a group of antenna element, a spatial domain filter, a reference signal resource, a TCI state, or a QCL assumption, but not limited thereto. For example, a first beam may be represented as a first antenna port or a first group of antenna port or a first spatial domain filter. For example, a first beam direction may be represented as a QCL assumption or a spatial domain filter.

A spatial filter in the disclosure may include: a spatial Rx filter or a spatial Tx filter.

A spatial Rx filter in the disclosure may include a Rx beam, a spatial Rx parameter, a spatial domain receive filter, or a panel, but not limited thereto.

A spatial Tx filter in the disclosure may include: a Tx beam, a spatial Tx parameter, a spatial domain transmission filter, or a panel, but not limited thereto.

A TRP in the disclosure may include: a BS, a cell, a serving cell, a gNodeB, a panel, an unlicensed cell, an unlicensed serving cell, an unlicensed TRP, a gNodeB, an eNodeB, or an eNB, but not limited thereto.

A search space set group (SSSG) in the disclosure may include: a search space group (SSG), a CORESET, a *CORESETpoolIndex*, or a CORESET group, but not limited thereto.

A configured grant in the disclosure may include: a configured grant or a *configuredGrantConfigIndex*, but not limited thereto.

A SPS configuration in the disclosure may include a *SPS-ConfigIndex,* but not limited thereto.

A codepoint in the disclosure may include: an Index, a value, or an identity, but not limited thereto.

A PDSCH antenna port in the disclosure may include: a DM-RS port of a PDSCH, but not limited thereto.

An index or an identity in the disclosure may include: a *CORESETPoolIndex,* a TRP ID, or a panel ID, but not limited thereto.

In the disclosure, a UE may be configured with at least one of following for multiple TRP operation: a set of *CORESETPoolIndex,* a set of TRPs, or a set of panels, but not limited thereto.

A L1 based beam updating in the disclosure may include: a unified beam updating, a common beam updating, or a unified TCI framework, but not limited thereto.

A PDSCH in the disclosure may also refer to: a PUSCH, a DL assignment, a SPS scheduling, a configured grant, but not limited thereto.

A communication device in the disclosure may be represented by UE or BS (e.g., gNodeB), but not limited thereto.

Combinations of embodiments disclosed in the disclosure is not precluded. All steps in each embodiment may not be performed in a step-by-step way. Embodiments in the disclosure may apply for an unlicensed band, a licensed band, a non-DRX mode, a DRX mode, or power saving, but not limited thereto.

FIG. 3 illustrates a schematic diagram of DCI (e.g., format 1_1 or 1_2) generation according to one embodiment of the present disclosure. An error detection may be provided for a DCI transmission through a CRC. Assume that a DCI includes a bit stream $\{a_0, a_1, a_2, a_3, ..., a_{A-1}\}$. A BS may perform a CRC attachment on the DCI by attaching a plurality of CRC parity bits to the bit stream $\{a_0, a_1, a_2, a_3, ..., a_{A-1}\}$ to generate a bit stream $\{b_0, b_1, b_2, b_3, ..., b_{K-1}\}$, wherein the plurality of CRC parity bits may include, for example, 24 bits (i.e., CRC length = 24). After the CRC attachment, the BS may scramble the DCI with the CRC parity bits according to the corresponding RNTI as shown in equation (1), so as to generate a bit stream $\{c_0, c_1, c_2, c_3, ..., c_{K-1}\}$, wherein the bit stream $\{c_0, c_1, c_2, c_3, ..., c_{K-1}\}$ is the DCI with the CRC parity bits scrambled with the corresponding RNTI, and $x_{rnti,i}$ is the i-th bit of the RNTI.

$$c_k = \begin{cases} b_k, & k = 0, 1, 2, ..., A+7 \\ (b_k + x_{rnti,k-A-8}) \bmod 2, & k = A+8, A+9, A+10, ..., A+23 \end{cases} \quad ...(1)$$

After the UE receiving the DCI from the BS, the UE may perform the CRC for the DCI according to the RNTI. Specifically, the UE may unscramble the scrambled bits of the DCI according to the corresponding RNTI so as to obtain the DCI with the parity bits. After that, the UE may perform the CRC for the DCI with the parity bits.

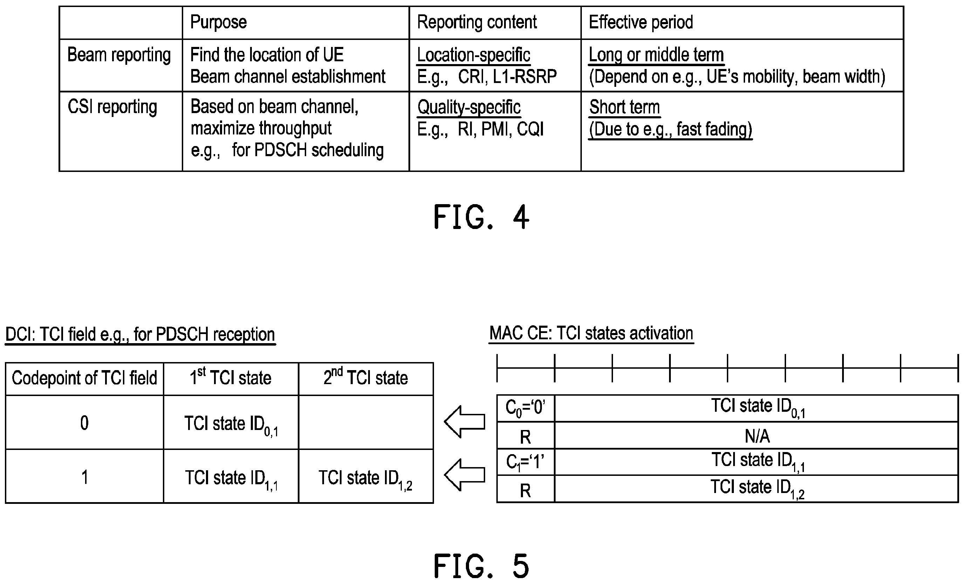

FIG. 4 illustrates a table of beam reporting and CSI reporting according to one embodiment of the present disclosure. A UE may perform a beam reporting for a BS. The beam reporting may be used for finding the location of the UE or establishing a beam channel between the UE and the BS. The BS may obtain location-specific information from the beam reporting, such as CRI or L1 reference signal received power (L1-RSRP). The beam reporting may affect the transmission between the BS and the UE in the long or middle term (e.g., depend on US's mobility or beam width). On the other hand, a UE may perform a CSI reporting for a BS based on an established beam channel. The CSI reporting may be used for maximizing the throughput (e.g., for PDSCH scheduling) of the transmission between the BS and the UE. The BS may obtain quality-specific information from the CSI reporting, such as a RI, a PMI, or a CQI. The CSI reporting may affect the transmission between the BS and the UE in the short term (e.g., due to fast fading).

FIG. 5 illustrates a schematic diagram of MAC CE and DCI for PDSCH reception according to one embodiment of the present disclosure. A MAC CE may include a field $C_i$ and a corresponding reserved field (R field). The field $C_i$ may be associated with a TCI state $ID_{i,1}$ preconfigured to the UE and may indicate whether an octet containing a TCI state $ID_{i,2}$ is present in the MAC CE, wherein i may be the index of codepoints of the TCI field. If the field $C_i$ is set to "0", the octet containing TCI state $ID_{i,2}$ may not be present in the MAC CE. If the field $C_i$ is set to "1", the octet containing TCI state $ID_{i,2}$ may be present in the MAC CE. A DCI may include a TCI field. TCI state $ID_{i,j}$ may denote the j-th TCI state indicated by the i-th codepoint in the TCI field, wherein i may be the index of the codepoint of the TCI field.

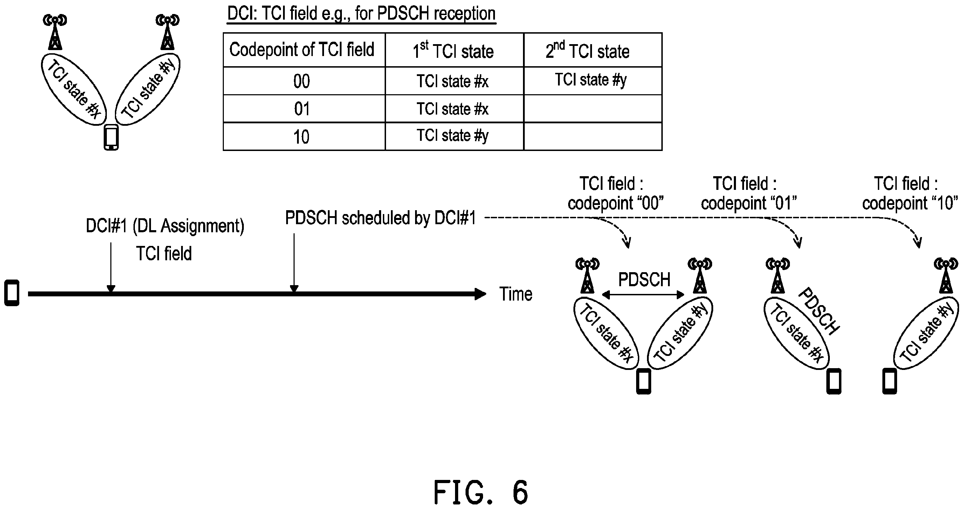

FIG. 6 illustrates a schematic diagram of a TCI field in DCI for PDSCH reception according to one embodiment of the present disclosure. The UE may receive the scheduled PDSCH according to one or more TCI states indicated by a TCI field in a DCI#1, wherein the DCI#1 is associated with a DL assignment. The DM-RS port for the scheduled PDSCH may be quasi co-located with the TCI state indicated by the TCI field. For example, if the codepoint of the TCI field is "00", the UE may apply a TCI state #x and a TCI state #y for PDSCH reception, wherein the TCI state #x and the TCI state #y are used for receiving PDSCH data from different TRPs respectively. If the codepoint of the TCI field is "01", the UE may apply TCI state #x for PDSCH reception. If the codepoint of the TCI field is "10", the LTE may apply TCI state #y for PDSCH reception. The PDSCH scheduling between M-TRP and S-TRP may be allowed to the BS or UE according to a scheduling flexibility or a CSI reporting (e.g., including a RI, a PMI, or a CQI).

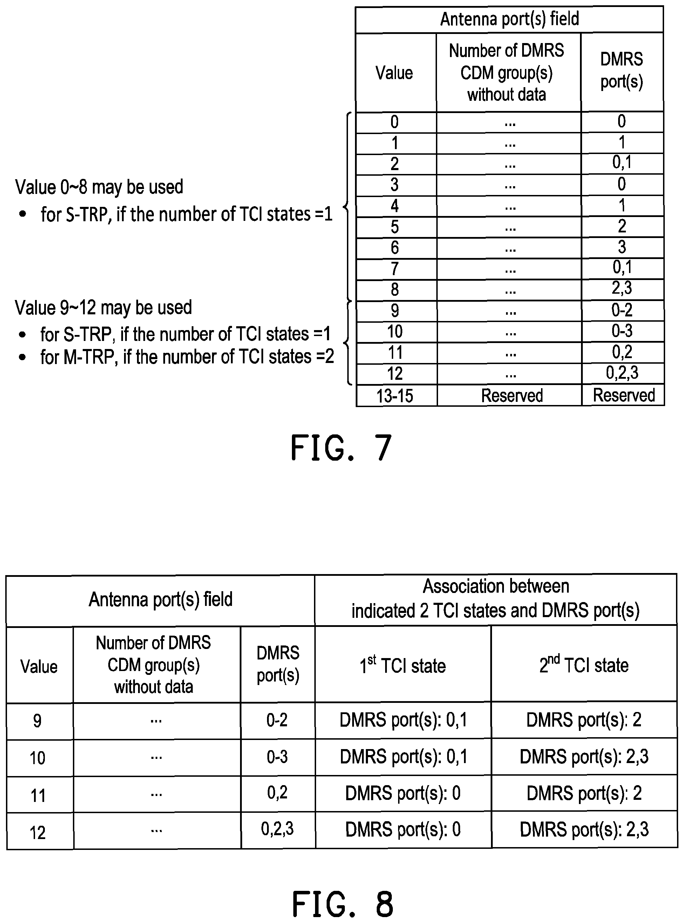

FIG. 7 illustrates an antenna port indication table of an antenna port(s) field in DCI for PDSCH reception according to one embodiment of the present disclosure. The UE may receive the scheduled PDSCH according to one or more antenna ports indicated by an antenna port(s) field in a DCI, wherein the DCI may be used for PDSCH demodulation. Specifically, the table including an association among a value, the number of one or more DM-RS CDM groups, and one or more DM-RS ports. The UE may pre-store the table. After the UE receiving a DCI, the LTE may obtain a value from the antenna port(s) field of the DCI. The UE may apply the one or more DM-RS ports associated with the value for PDSCH demodulation. Value "0-8" of the antenna port(s) field may be used for S-TRP use case and value "9-12" of the antenna port(s) field may be used for S-TRP use case or M-TRP use case.

FIG. 8 illustrates an antenna port indication table of an antenna port(s) field with value "9-12" in DCI for PDSCH reception according to one embodiment of the present disclosure, wherein the table may be prestored in the UE. Assume that the TCI field in the DCI instructs the LTE to apply two TCI sates (i.e., the first TCI state and second TCI state) for PDSCH reception, and the antenna port(s) field in the DCI indicates multiple DM-RS ports within different CDM groups to the LTE. The UE may determine the relationship among the first TCI state, the second TCI state, and the multiple antenna ports according to the prestored table. For example, if the value of the antenna port(s) field in the DCI is "9", the LTE may use DM-RS port 0 and DM-RS port 1 for applying the first TCI state, and the LTE may use DM-RS port 2 for applying the second TCI state. In other words, if the value of the antenna port(s) field is "9", the UE may determine (according to the prestored table) that DM-RS port 0 and DM-RS port 1 belong to one CMD group corresponding to the first TCI state and DM-RS port 2 belongs to the other CDM group corresponding to the second TCI state.

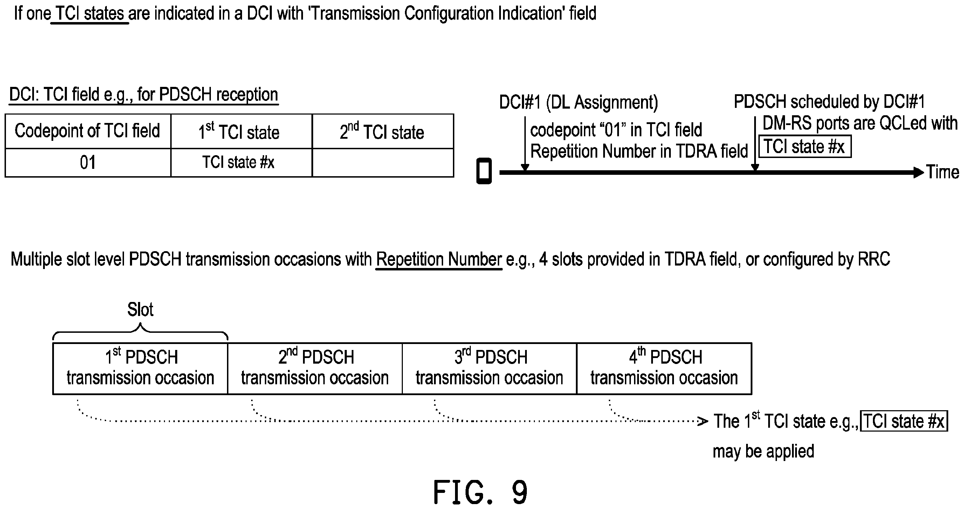

FIG. 9 illustrates a schematic diagram of PDSCH reception based on a TCI state according to one embodiment of the present disclosure. A TCI field in the DCI#1 may indicate one TCI state for the UE. For example, if the codepoint of the TCI field in the DCI#1 is set to "01", the UE may apply TCI state #x for PDSCH reception. The UE may determine that the DM-RS port for the PDSCH reception is quasi co-located with TCI state #x. A repetition number corresponding to multiple slot level PDSCH transmission occasions may be indicated by the TDRA field in the DCI#1 or may be configured by an RRC message. The UE may apply the TCI state #x on one or more slots of the PDSCH transmission occasions according to the repetition number. For example, if the repetition number indicated by the TDRA field is "4", the UE may apply the TCI state #x on four slot level PDSCH transmission occasions.

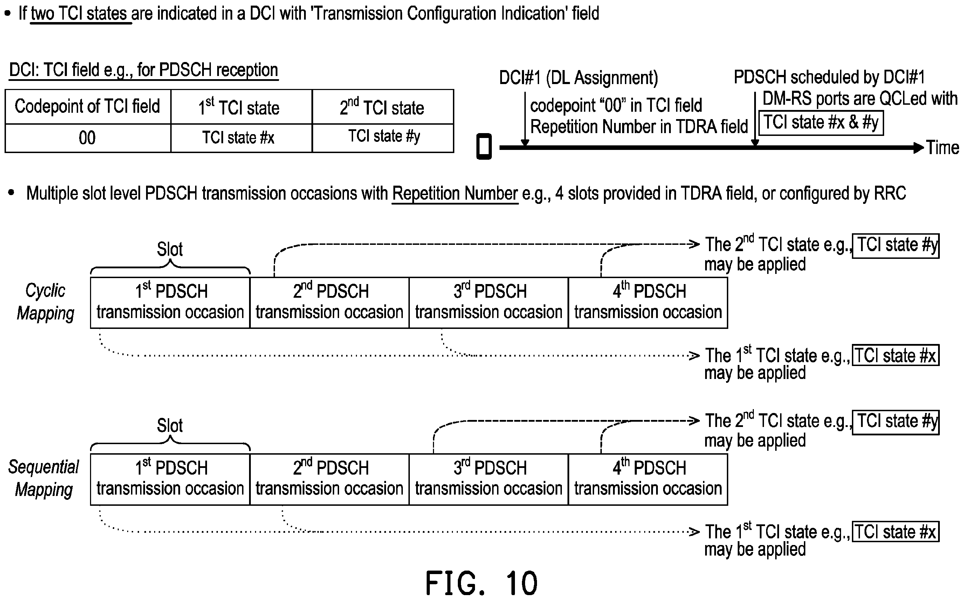

FIG. 10 illustrates a schematic diagram of PDSCH reception based on two TCI states according to one embodiment of the present disclosure. A TCI field in the DCI#1 may indicate two TCI states for the UE. For example, if the codepoint of the TCI field in the DCI#1 is set to "00", the UE may apply TCI state #x and TCI state #y for PDSCH reception. A repetition number corresponding to multiple slot level PDSCH transmission occasions may be indicated by the TDRA field in the DCI#1 or may be configured by an RRC message. If the repetition number is greater than 1 (e.g., 4 slots), the UE may apply the TCI state #x or the TCI state #y on each of the PDSCH transmission occasions according to a cyclic mapping or a sequential mapping. If the cyclic mapping is used by the UE, two TCI states may be applied to two adjacent PDSCH transmission occasions respectively. For example, the TCI state #x may be applied to the first slot and the third slot of the PDSCH transmission occasions, and the TCI state #y may be applied to the second slot and the fourth slot of the PDSCH transmission occasions. If the sequential mapping is used by the UE, two TCI states may be applied to two groups of PDSCH transmission occasion respectively, wherein each group may include one or more consecutive PDSCH transmission occasions. For example, the TCI state #x may be applied to the first slot and the second slot of the PDSCH transmission occasions, and the TCI state #y may be applied to the third slot and the fourth slot of the PDSCH transmission occasions.

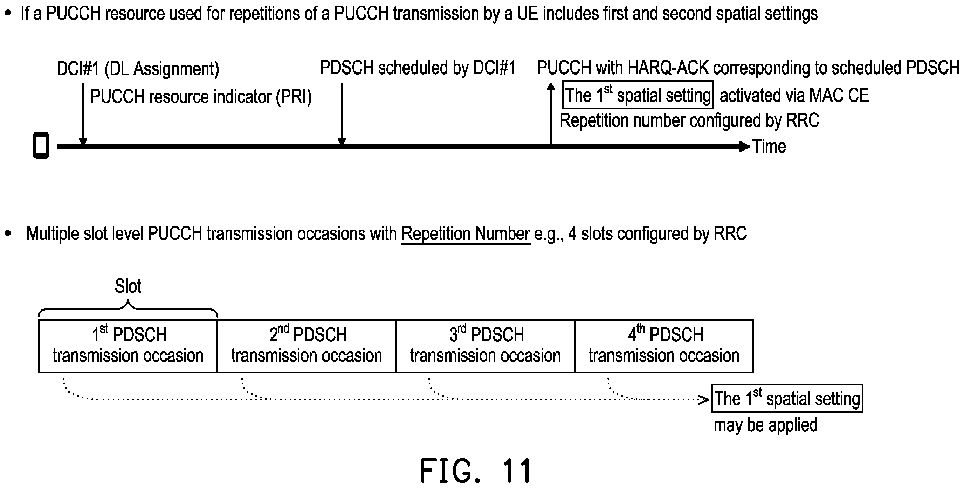

FIG. 11 illustrates a schematic diagram of PUCCH transmission based on a PRI according to one embodiment of the present disclosure. A PRI in the DCI#1 may indicate one spatial setting for the UE, wherein said spatial setting may be a spatial setting activated via a MAC CE. The UE may apply the spatial setting for PUCCH transmission. For example, the PRI in the DCI#1 may indicate a first spatial setting for the UE. A repetition number corresponding to multiple slot level PUCCH transmission occasions may be configured by an RRC message. The LTE may apply the first spatial setting on one or more slots of the PUCCH transmission occasions according to the repetition number. Fr example, if the repetition number configured by the RRC message is "4", the UE may apply the first spatial setting on four slot level PUCCH transmission occasions.

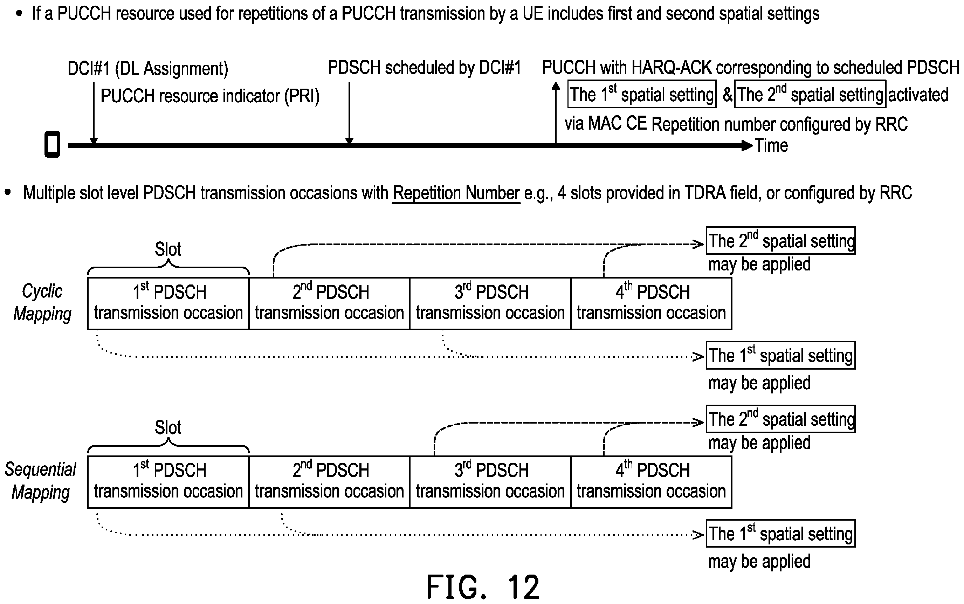

FIG. 12 illustrates a schematic diagram of PUCCH transmission based on a PRI according to one embodiment of the present disclosure. A PRI in the DCI#1 may indicate two spatial settings for the UE, wherein the two spatial settings may be spatial settings activated via a MAC CE. The UE may apply the two spatial settings for PUCCH transmission. For example, the PRI in the DCI#1 may indicate a first spatial setting and a second spatial setting for the UE. A repetition number corresponding to multiple slot level PUCCH transmission occasions may be configured by an RRC message. If the repetition number is greater than 1 (e.g., 4 slots), the UE may apply the first spatial setting or the second spatial setting on each of the PUCCH transmission occasions according to a cyclic mapping or a sequential mapping. If the cyclic mapping is used by the LTE, two spatial settings may be applied to two adjacent PUCCH transmission occasions respectively. For example, the first spatial setting may be applied to the first slot and the third slot of the PUCCH transmission occasions. If the sequential mapping is used by the UE, two spatial settings may be applied to two groups of PUCCH transmission occasion respectively, wherein each group may include one or more consecutive PUCCH transmission occasions. For example, the first spatial setting may be applied to the first slot and the second slot of the PUCCH transmission occasions, and the second spatial setting may be applied to the third slot and the fourth slot of the PUCCH transmission occasions.

In a M-TRP transmission scheme, one or more TCI states may be applied to intra slot repetitions (e.g., PDSCH transmission occasions in a slot). Assume that a UE is configured by the higher layer parameter repetition scheme, and one or more DM-RS ports within one CDM group are indicated to the UE via antenna port(s) field of a DCI. The number of PDSCH transmission occasions may be derived by the number of TCI states indicated by the TCI field of the scheduling DCI. For example, if two states (e.g., the first TCI state and the second TCI state) are indicated by the TCI field of the DCI, the UE may expect to receive two PDSCH transmission occasions, wherein the first TCI state may be applied to the first PDSCH transmission occasion and the second TCI state may be applied to the second PDSCH transmission occasion. The second PDSCH transmission occasion may have the same number of symbols as the first PDSCH transmission occasion.

In a M-TRP transmission scheme, one or more TCI states may be applied to inter slot repetitions (e.g., PDSCH transmission occasions in different slots). Assume that a UE is configured by the higher layer parameter *repetitionNumber* in *PDSCH-TimeDomainResourceAllocation*, the UE may expect to be indicated with one or more TCI states (e.g., two TCI states) by a codepoint of a TCI field in a DCI. The LTE may also expect to obtain information from the time domain resource assignment field and the antenna port(s) field of the DCI. The time domain resource assignment field may indicate an entry containing *repetitionNumber* in *PDSCH-TimeDomainResourceAllocation.* The antenna port(s) field may indicate one or more DM-RS ports within one CDM group. If two TCI states are indicated by the TCI field, the UE may expect to receive multiple slot level PDSCH transmission occasions of the same TB, wherein two TCI states are used across multiple PDSCH transmission occasions in the *repetitionNumber* consecutive slots. If one TCI state is indicated by the TCI field, the UE may expect to receive multiple slot level PDSCH transmission occasions of the same TB, wherein one TCI state is used across multiple PDSCH transmission occasions in the *repetitionNumber* consecutive slots.

In a M-TRP transmission scheme, one or more TCI states may be applied to inter slot repetitions. Assume that a UE is configured by the higher layer parameter *PDSCH-config*, wherein *PDSCH-config* indicates at least one entry containing *repetitionNumber* in PDSCH-*TimeDomainResourceAllocation*, the UE may expect to be indicated with one or more TCI states (e.g., two TCI states) by a codepoint of a TCI field in a DCI. The UE may also expect to obtain information from the time domain resource assignment field and the antenna port(s) field in the DCI. The time domain resource assignment field may indicate an entry containing *repetitionNumber* in *PDSCH-TimeDomainResourceAllocation.* The antenna port(s) field may indicate one or more DM-RS ports within one CDM group. If two TCI states are indicated by the TCI field, the UE may apply the first TCI state to the first PDSCH transmission occasion. When the value indicated by *repetitionNumber* in *PDSCH-TimeDomainResourceAllocation* is equal to two, the UE may apply the second TCI state to the second PDSCH transmission occasion. When the value indicated by *repetitionNumber* in *PDSCH-TimeDomainResourceAllocation* is greater than two, the UE may be further configured to enable *cyclicMapping* or *sequentialMapping* in *tciMapping.* When *cyclicMapping* is enabled, the first TCI state and the second TCI state may be applied to the first PDSCH transmission occasion and the second PDSCH transmission occasion respectively, and the same TCI state mapping pattern may continue to the remaining PDSCH transmission occasions. When *sequentialMapping* is enabled, the first TCI state may be applied to the first PDSCH transmission occasion and the second PDSCH transmission occasion, the second TCI state may be applied to the third PDSCH transmission occasion and the fourth PDSCH transmission occasion, and the same TCI sate mapping pattern may continue to the remaining PDSCH transmission occasions.

Regarding space division multiplexing (SDM), a TCI state to be applied may be determined by the UE according to a corresponding antenna port. Assume that a UE is configured by the higher layer parameter *repetitionNumber* in *PDSCH-TimeDomainResourceAllocation,* the LTE may expect to be indicated with multiple TCI states (e.g., two TCI states) by a codepoint of a TCI field in a DCI. The UE may also expect to obtain information from the antenna port(s) field of the DCI, wherein the antenna port(s) field may indicate multiple DM-RS ports within two different CDM groups. If an entry containing *repetitionNumber* in PDSCH-*TimeDomainResourceAllocation* is not indicated by the DCI (e.g., time domain resource assignment), the UE may determine, according to an antenna port indication table, the first TCI state may correspond to a CDM group of the antenna ports and the second TCI state may correspond to the other CDM group of the antenna ports.

Regarding SFN-SDM, when a LTE is configured with *sfnSchemePdsch* set to "sfnSchemeA" and the UE is indicated with two TCI states in a codepoint of the TCI field in a DCI scheduling a PDSCH, the UE may assume that one or more DM-RS port of the PDSCH may be quasi co-located with the DL-RSs of the two TCI states. When a UE is configured with *sfnSchemePdsch* set to "sfnSchemeB", and the LTE is indicated with two TCI states in a codepoint of the TCI field in a DCI scheduling a PDSCH, the UE may assume that one or more DM-RS ports of the PDSCH may be quasi co-located with the DL-RSs of the two TCI states except for quasi co-location parameters (e.g., Doppler shift or Doppler spread) of the second indicated TCI state.

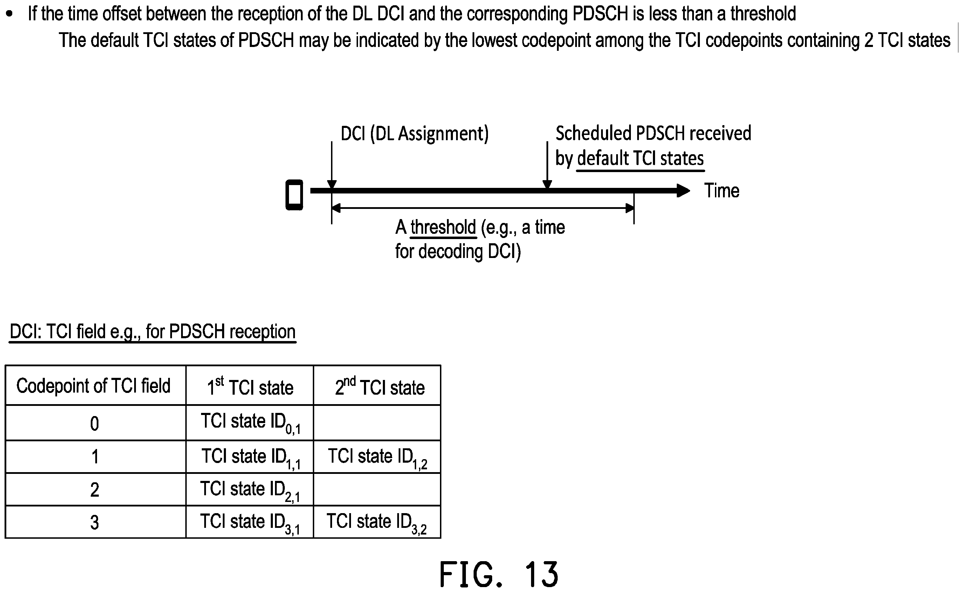

FIG. 13 illustrates a schematic diagram of PDSCH reception based on a default TCI state according to one embodiment of the present disclosure. The default TCI state may be indicated by a list of codepoints configured to the LTE via a MAC CE, wherein the list may include one or more codepoints indicating one TCI state and one or more codepoints indicating two TCI states. The LTE may determine a time offset between the reception of the DCI and the corresponding PDSCH according to the DCI. If the time offset is less than a threshold (e.g., a time for decoding DCI), the UE may determine to apply two default TCI states for the PDSCH reception according to the list. Specifically, the default TCI state may be indicated by the lowest codepoint among the plurality of codepoints of the TCI field, wherein each of the plurality of codepoints indicates two different TCI states. For example, the UE may determine that the default TCI states may be the TCI state $ID_{1,1}$ and the TCI state $ID_{1,2}$ indicated by the codepoint "1" of TCI field in response to the codepoint "1" being the lowest codepoint among the plurality of codepoints indicating two different TCI states (e.g., codepoint "1" and codepoint "3").

In one embodiment, if a UE is configured with *enable TwoDefaultTCI-States*, and at least one TCI codepoint indicates two TCI states, the UE may assume that the DM-RS ports of PDSCH or PDSCH transmission occasions of a serving cell may be quasi co-located with one or more RSs, wherein the one or more RSs are with respect to one or more QCL parameters associated with one or more TCI states, and the one or more TCI states are corresponded to the lowest codepoint among the TCI codepoints containing two different TCI states.

In one embodiment, when the UE is configured by higher layer parameter *repetitionScheme* set to "tdmSchemeA" or is configured with higher layer parameter *repetitionNumber,* and the offset between the reception of the DCI and a first PDSCH transmission occasion is less than the threshold *timeDurationForQCL*, the mapping relationship between the TCI states and the PDSCH transmission occasions (including the first PDSCH transmission occasion) may be indicated by the lowest codepoint among the plurality of codepoints of TCI field, wherein each of the plurality of codepoints may indicate two different TCI states for PDSCH reception. The lowest codepoint may be associated with a selection of multiple activated TCI states in a slot corresponding to the first PDSCH transmission occasion. In this case, if the PDSCH DM-RS and the PDCCH DM-RS overlap in at least one symbol, and the "QCL-TypeD" in both of the TCI states corresponding to the lowest codepoint is different from the "QCL-TypeD" in the PDCCH DM-RS, the UE may be expected to prioritize the reception of PDCCH associated with the CORESET. That is, the following rule may be considered by the UE: the priority of the TCI states for the PDCCH reception is higher than the priority of the TCI states for the PDSCH reception. The same rule may also be applied to the intra-band CA case (e.g., when PDSCH and the CORESET are in different component carriers).

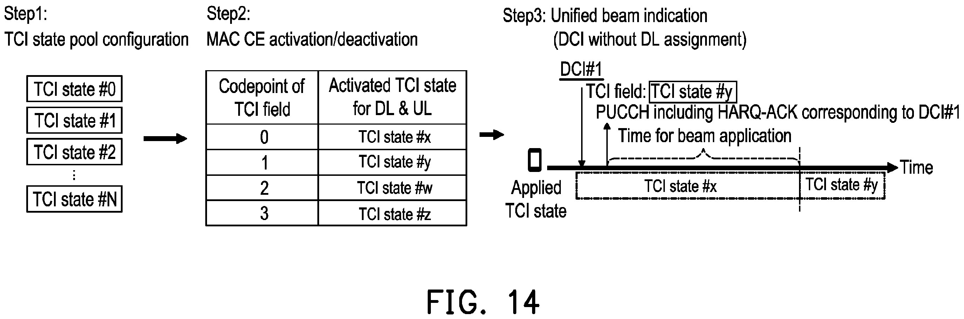

FIG. 14 illustrates a schematic diagram of a unified beam indication by a DCI without DL assignment according to one embodiment of the present disclosure. In step 1, a list of TCI states may be configured to the UE by an RRC message. For example, the RRC message may configure a TCI state pool to the UE, wherein the TCI state pool may include TCI state #0, TCI state #1, TCI state #2, ..., TCI state #N. In step 2, one or more TCI states may be activated by a MAC CE. For example, TCI state #x, TCI state #y, TCI state #w, and TCI state #z in the TCI state pool may be activated by the MAC CE. In step 3, a unified beam may be indicated by a DCI without DL assignment. For example, assume that TCI state #x is the TCI state applied by the UE currently, wherein the TCI state #x may be indicated by a previous DCI, wherein the pervious DCI may be defined as the DCI prior to the DCI#1 in the present disclosure. That is, the reception of the previous DCI is prior to a reception of the DCI#1. The TCI field of the DCI#1 may indicate TCI state #y to the UE. After a time period (e.g., time for beam application), the TCI state applied by the UE may be switched from TCI state #x to TCI state #y.

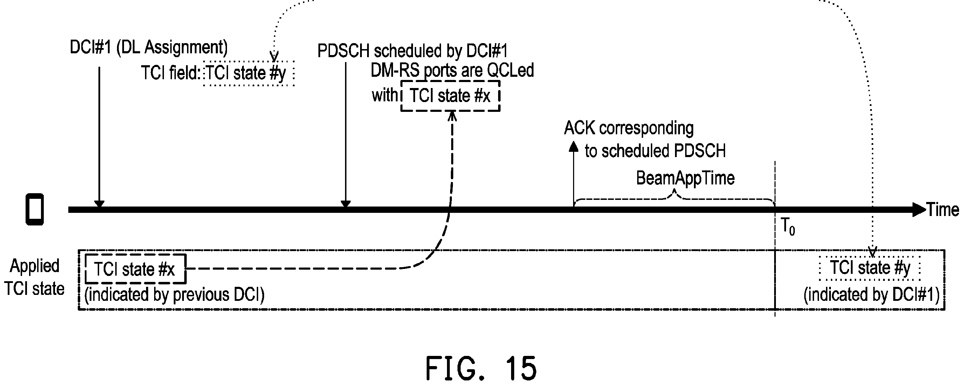

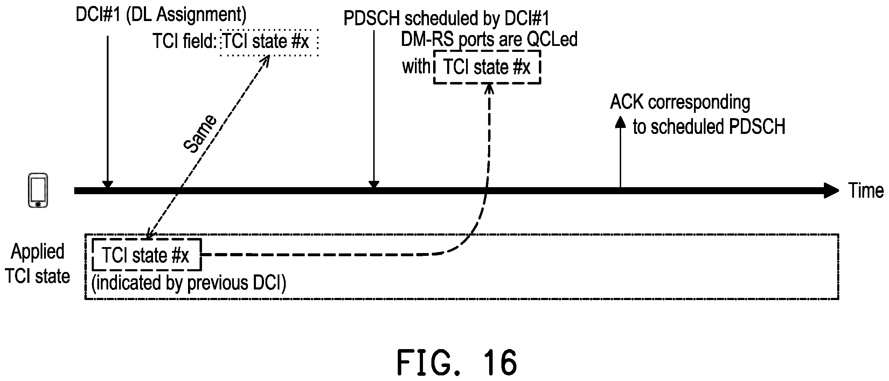

FIG. 15 and FIG. 16 illustrate schematic diagrams of a unified beam indication by a DCI with DL assignment according to one embodiment of the present disclosure. If the TCI state indicated by the DCI#1 with DL assignment (e.g., TCI state #y) is different from the TCI state indicated by the previous DCI (e.g., TCI state #x) as shown in FIG. 15, the TCI state indicated by the DCI#1 (e.g., TCI state #y) may be applied for the unified beam updating. The DM-RS port for the scheduled PDSCH may be quasi co-located with the TCI state indicated by the previous DCI. If the TCI state indicated by the DCI#1 with DL assignment is equal to the TCI state indicated by the previous DCI (e.g., TCI state #x) as shown in FIG. 16, the LTE may not perform the unified beam updating. The DM-RS port for the scheduled PDSCH may be quasi co-located with the TCI state indicated by the previous DCI. Parameter *BeamAppTime* shown in FIG. 15 may represent time for beam application.

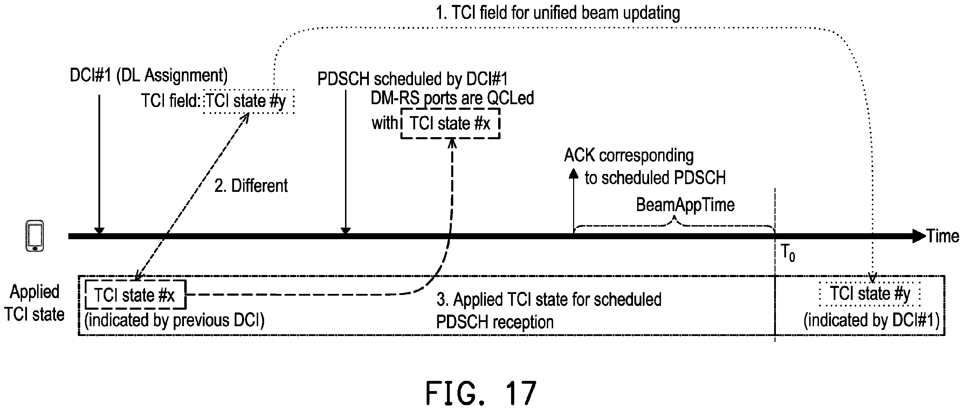

FIG. 17 illustrates a schematic diagram of the improvements for the unified TCI framework according to one embodiment of the present disclosure. Regarding improvement 1, a TCI field may be applied for the unified beam updating. That is, the TCI field in the scheduling DCI may not be applied for the scheduled PDSCH. For example, the TCI state #y indicated by the DCI#1 may be applied for the unified beam updating. The TCI state #x indicated by the pervious DCI may be applied for the PDSCH scheduled by the DCI#1. Regarding improvement 2, the performing of the unified beam updating by the UE may be triggered if the TCI state indicated by the DCI#1 with DL assignment (e.g., TCI state #y) is different from the TCI state indicated by the previous DCI (e.g., TCI state #x). Regarding improvement 3, the UE may receive the PDSCH scheduled by the DCI#1 according to the TCI state indicated by the previous DCI (e.g., TCI state #x). That is, the UE may not receive the PDSCH scheduled by the DCI#1 according to the TCI state indicated by the TCI field of the DCI#1 (e.g., TCI states #y).

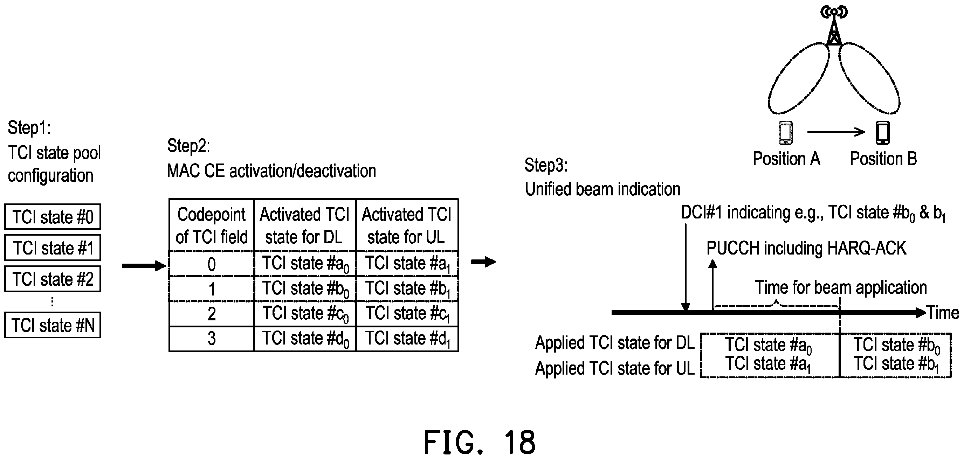

FIG. 18 illustrates a schematic diagram of unified beam indication for the unified TCI framework according to one embodiment of the present disclosure. In step 1, a list of TCI states may be configured to the UE by an RRC message. For example, the RRC message may configure a TCI state pool to the UE, wherein the TCI state pool may include TCI state #0, TCI state #1, TCI state #2, ..., TCI state #N. In step 2, one or more TCI states may be activated by a MAC CE. For example, TCI state #$a_0$, TCI state #$b_0$, TCI state #$c_0$, and TCI state #$d_0$ in the TCI state pool may be activated by the MAC CE for the DL transmission. TCI state #ai, TCI state #bi, TCI state #ci, and TCI state #$d_1$ in the TCI state pool may be activated by the MAC CE for the LTL transmission. In step 3, one or more unified beams may be indicated by a DCI. for example, assume that TCI state #$a_0$ is the TCI state applied by the UE for DL transmission currently, and TCI

state #$a_0$ is the TCI state applied by the UE for the UL transmission currently. The TCI field of the DCI#1 may indicate TCI state #$a_1$ and TCI state #bi to the UE. After a time period (e.g., time for beam application), the TCI state applied by the UE for DL transmission may be switched from TCI state #$a_0$ to TCI state #ai, and the TCI state applied by the UE for UL transmission may be switched from TCI state #$b_0$ to TCI state #bi. It should be noted that the same beam (TCI state #$a_0$ or #$b_0$) may be used for multiple DL channels/signals/CCs, and the same beam (TCI state #$a_1$ or #$b_1$) may be used for multiple UL channels/signals/CCs.

In one embodiment, the LTE may be configured with a list of *TCI-State* configurations (via a higher layer parameter such as *PDSCH-Config*) with *TCI-State ID,* wherein *TCI-State ID* may include information of source RS. The list of *TCI-State* configurations and *TCI-State ID* may be used by the UE for reception of reference signal quasi co-located with a DM-RS of PDSCH, a DM-RS of PDCCH in a CC, or a CSI-RS. In some cases, the list of *TCI-State* configurations and *TCI-State ID* may be used by the UE, if applicable, for determining a UL Tx spatial filter for a dynamic-grant, a configured-grant based PUSCH, a PUCCH resource, or an SRS.

In one embodiment, the UE may receive an activation command via a MAC CE, wherein the activation command is for mapping TCI states and/or pairs of TCI states. A TCI state for DL channels/signals may be mapped to a codepoint of the TCI field of the DCI, and a TCI state for UL channels/signals may be mapped to another codepoint of the TCI field of the DCI. The TCI field may be used for one or a set of CCs/DL BWPs. If applicable, the TCI field may be used for one or a set of CCs/UL BWPs.

In one embodiment, the UE with activated TCI state configured with *TCI-State ID* may receive a DCI (e.g., format 1_1/1_2), wherein the DCI may provide the indicated TCI state corresponding to the configured *TCI-State ID.* The DCI (e.g., format 1_1/1_2) may be with or without DL assignment. If the DCI (e.g., format 1_1/1_2) is without DL assignment, the UE may assume that a RNTI (e.g., CS-RNTI) may be used to scramble the CRC for the DCI, and the values of DCI fields may be set as following: RV field = all "1"; MCS field = all "1"; NDI = "0"; FDRA type 0 field = all "0"; FDRA type 1 field = all "1"; or *dynamicSwitch* = all "0".

In one embodiment, assume that the LTE has transmitted the last symbol of a PUCCH with HARQ-ACK information corresponding to a current DCI or a PDSCH scheduling by the current DCI, wherein the DCI indicates a TCI state and is without DL assignment. If the TCI state indicated by the current DCI is different from the TCI state indicated by the previous DCI, the TCI state indicated by the current DCI with *TCI-State ID* may be applied for a time period (e.g., time for beam application), wherein the time period may be one or more symbols after the last symbol of the PUCCH. The first slot and the symbols corresponding to the time period (e.g., time for beam application) may be both determined one the carrier with the smallest sub-carrier space (SCS) among the multiple carriers applying the TCI state. The UE may assume that the indicated TCI state with *TCI-State ID* is for both DL and UL, for DL only, or for LTL only.

In one embodiment, if the UE is configured with a TCI state with *TCI-State ID* for LTL, the UE may perform PUSCH transmission corresponding to a type 1 configured grant, a type 2 configured grant, or a dynamic grant according to a spatial relation, wherein the spatial relation is associated with the RS for determining UL Tx spatial filer or associated with the RS configured with QCL-type, wherein the QCL-type is set to "typeD" of the indicated TCI state with *TCI-State ID.*

In one embodiment, a spatial setting for a PUCCH transmission performed by the UE may be provided by an indicated TCI state.

In one embodiment, if TCI-State ID is provided to the UE, a DM-RS antenna port for PDCCH reception in a CORESET (other than a CORESTE with index 0) may be associated only with UE-specific search space (USS) sets and/or type3 PDCCH common search space (CSS) sets, and a DM-RS antenna port for PDSCH repetitions scheduled by DCI formats provided by PDCCH receptions in the CORESET may be quasi co-located with reference signals provided by the indicated TCI state.

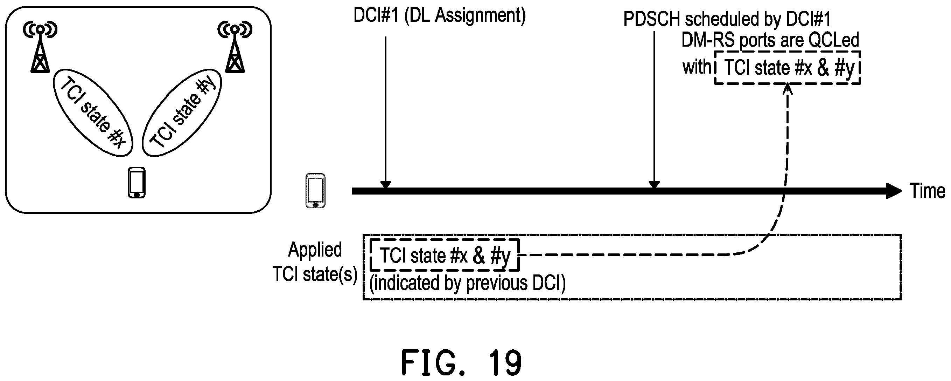

FIG. 19 illustrates a schematic diagram of TCI state subset selection according to one embodiment of the present disclosure. A UE may receive a scheduled PDSCH according to one or more TCI states indicated by a previous DCI. That is, the UE may not receive the scheduled PDSCH according to one or more TCI states indicated by a TCI field in the DCI#1. Although the UE may be served by 2 beams, PDSCH scheduling between M-TRP scheme and S-TRP scheme should be considered by the UE according to, for example, scheduling flexibility and/or channel quality between the UE and the BS.

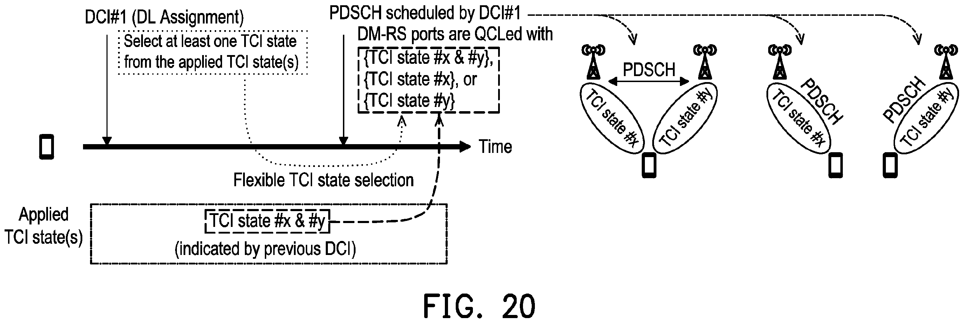

FIG. 20 illustrates a schematic diagram of a flexible TCI state selection according to one embodiment of the present disclosure. For a unified TCI framework, a dynamic PDSCH scheduling between S-TRP scheme and M-TRP scheme may be supported. A UE may determine or select one or more TCI states for receiving a scheduled PDSCH according to a scheduling DCI (e.g., DCI#1) and/or one or more applied TCI states indicated by the previous DCI (e.g., TCI state #x and/or TCI state #y).

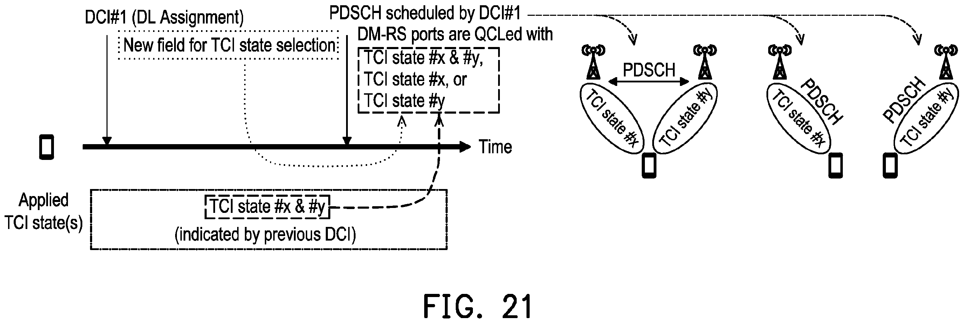

FIG. 21 illustrates a schematic diagram of an explicit TCI state selection according to one embodiment of the present disclosure. One or more TCI states (e.g., TCI state #x and #y) may be indicated to the UE by the previous DCI (e.g., by the TCI field in the DCI prior to the DCI#1), wherein the one or more TCI states may be the TCI state applied by the UE while the DCI#1 is received. The UE may receive the DCI#1 with a new field (e.g., a TCI selection field) for TCI state selection. Specifically, if a TCI selection field is included in the DCI#1, the UE determine a selection of the one or more TCI states indicated by the previous DCI according to the TCI selection field of the DCI#1. After that, the UE may receive the PDSCH scheduled by the DCI#1 according to the selection of the one or more TCI states indicated by the DCI#1.

In one embodiment, the PDSCH scheduled by the DCI#1 is corresponded to a semi persistent scheduling.

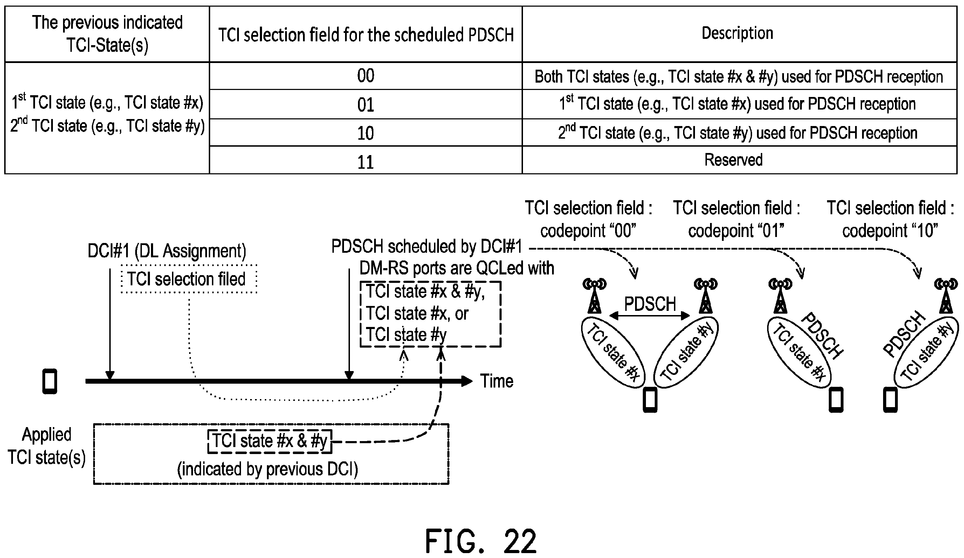

FIG. 22 illustrates a schematic diagram of an explicit TCI state selection based on a codepoint according to one embodiment of the present disclosure. A codepoint of the TCI selection field in the DCI#1 received by the UE may be associated with a selection of one or more TCI states indicated by the previous DCI (e.g., by the TCI field in the previous DCI). For example, assume that a TCI state #x and a TCI state #y are indicated to the UE by the previous DCI. If the TCI selection field is included in the DCI#1 received by the UE, the LTE may obtain a selection from the TCI selection field and may apply one or more TCI states indicated by the previous DCI to a DM-RS according to the selection. If the codepoint of the TCI selection field in the DCI#1 is "00", the LTE may apply the TCI state #x and the TCI states #y to one or more DM-RS ports and may receive the PDSCH scheduled by the DCI#1 according to the one or more DM-RS ports. If the codepoint of the TCI selection field in the DCI#1 is "01", the UE may apply the TCI state #x to the one or more DM-RS ports and may receive the PDSCH scheduled by the DCI#1 according to the one or more DM-RS ports. If the codepoint of the TCI selection field in the DCI#1 is "10", the UE may apply the TCI state #y to the one or more DM-RS ports and may receive the PDSCH scheduled by the DCI#1 according to the one or more DM-RS ports. The codepoint "11" of the TCI selection field in the DCI#1 may be reserved for other purposes.

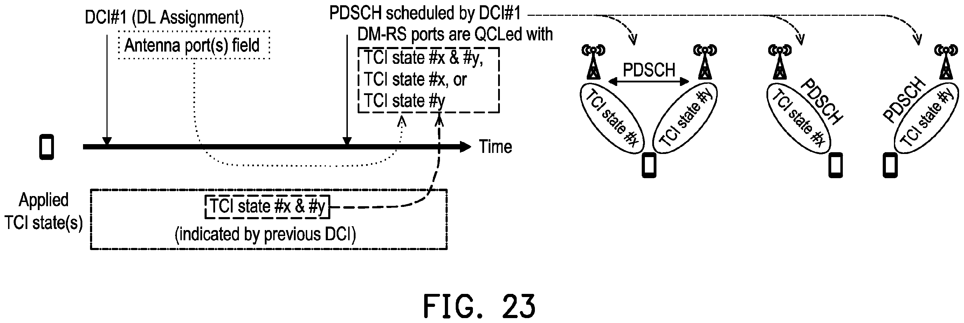

FIG. 23 illustrates a schematic diagram of an implicit TCI state selection based on an antenna port(s) field according to one embodiment of the present disclosure. In one embodiment, the implicit TCI state selection may be applied in response to the TCI selection field not being included in the scheduling DCI (e.g., DCI#1 (format 1_1/1_2)). Specifically, the UE may determine one or more TCI states to be applied from one or more TCI states indicated by the previous DCI (e.g., by the TCI field in the previous DCI) according to a preconfigured association between the one or more TCI states indicated by the pervious DCI and one or more DM-RS ports. The one or more DM-RS ports may be indicated by an antenna port(s) field of the DCI#1 (format 1_1/1_2). The UE may receive the PDSCH scheduled by the DCI#1 by the one or more DM-RS ports, wherein the one or more DM-RS ports correspond to the one or more TCI states indicated by the pervious DCI. The one or more TCI states indicated by the previous DCI (or the one or more DM-RS ports corresponding to the one or more TCI states) may be applied for a time period starting from the last symbol of PDCCH for DL assignment. In one embodiment, the preconfigured association may be configured to the UE via an RRC message.

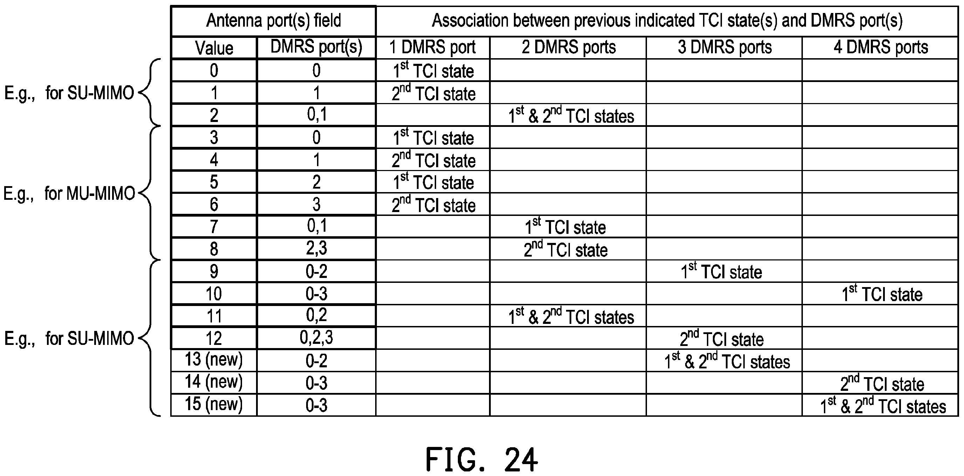

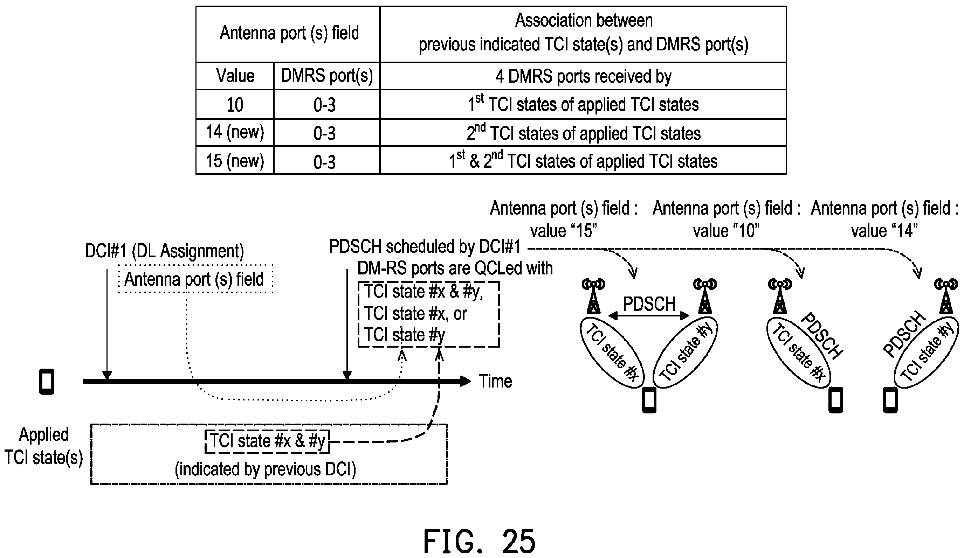

FIG. 24 illustrates a table of the preconfigured association according to one embodiment of the present disclosure. FIG. 25 illustrates a schematic diagram of an implicit TCI state selection based on the value of the antenna port(s) field according to one embodiment of the present disclosure. Each of the DM-RS ports indicated by the antenna port(s) field may be associated with one or more TCI states indicated by the pervious DCI, as shown in the table. The antenna port(s) field may represent one or more DM-RS ports for single-user MIMO (SU-MIMO) communication system or multi-user MIMO (MU-MIMO) communication system. For example, if the value of the antenna port(s) field is one of "0" to "2" and "9" to "15", the antenna port(s) field may represent one or more DM-RS ports for SU-MIMO communication system. If the value of the antenna port(s) field is one of "3" to "8", the antenna port(s) field may represent one or more DM-RS ports for MU-MIMO communication system.

For example, if the value of the antenna port(s) field is "10", the UE may determine that DM-RS ports 0-3 are associated with the first TCI state (e.g., TCI state #x) indicated by the previous DCI according to the table. Accordingly, the UE may apply the TCI state #x to the DM-RS ports 0-3 and may receive the PDSCH scheduled by the DCI#1 by the DM-RS ports 0-3. For another example, if the value of the antenna port(s) field is "14", the UE may determine that DM-RS ports 0-3 are associated with the second TCI state (e.g., TCI state #y) indicated by the previous DCI according to the table. Accordingly, the UE may apply the TCI state #y to the DM-RS ports 0-3 and may receive the PDSCH scheduled by the DCI#1 by the DM-RS ports 0-3. For another example, if the value of the antenna port(s) field is "15", the LTE may determine that DM-RS ports 0-3 are associated with the first TCI state (e.g., TCI state #x) and the second TCI state (e.g., TCI state #y) indicated by the pervious DCI according to the table. Accordingly, the UE may apply the TCI state #x and the TCI state #y to the DM-RS ports 0-3 and may receive the PDSCH scheduled by the DCI#1 by the DM-RS ports 0-3.

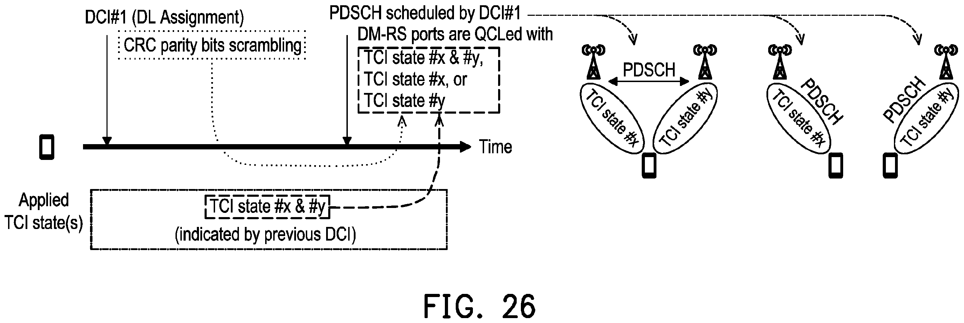

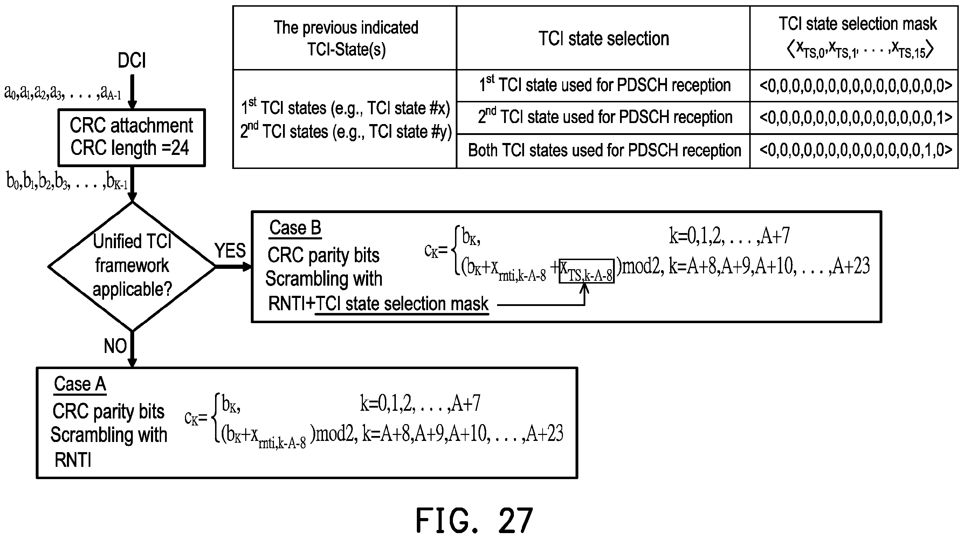

FIG. 26 illustrates a schematic diagram of an implicit TCI state selection embedded in DCI with CRC parity bits scrambling according to one embodiment of the present disclosure. FIG. 27 illustrates a schematic diagram of DCI (e.g., format 1_1/1_2) generation according to one embodiment of the present disclosure. In one embodiment, the implicit TCI state selection may be applied in response to the TCI selection field not being included in the scheduling DCI (e.g., DCI#1).

Assume that a DCI includes a bit stream $\{a_0, a_1, a_2, a_3, ..., a_{A-1}\}$. A BS may perform a CRC attachment on the DCI by attaching a plurality of CRC parity bits to the bit stream $\{a_0, a_1, a_2, a_3, ..., a_{A-1}\}$ to generate a bit stream $\{b_0, b_1, b_2, b_3, ..., b_{K-1}\}$, wherein the plurality of CRC parity bits may include, for example, 24 bits (i.e., CRC length = 24). After the CRC attachment, the BS may scramble the DCI with the CRC parity bits according to the corresponding RNTI and the TCI state selection mask as shown in equation (2) if the unified TCI framework is applicable, so as to generate a bit

stream $\{c_0, c_1, c_2, c_3, ..., c_{K-1}\}$, wherein the bit stream $\{c_0, c_1, c_2, c_3, ..., c_{K-1}\}$ is the DCI with the CRC parity bits scrambled with the corresponding RNTI and TCI state selection mask, $x_{rnti,i}$ is the i-th bit of the RNTI, and $x_{TS,i}$ is the i-th bit of the TCI state selection mask. On the other hand, the BS may scramble the DCI with the CRC parity bits according to the corresponding RNTI as shown in equation (3) if the unified TCI framework is not applicable, so as to generate a bit stream $\{c_0, c_1, c_2, c_3, ..., c_{K-1}\}$, wherein the bit stream $\{c_0, c_1, c_2, c_3, ..., c_{K-1}\}$ is the DCI with the CRC parity bits scrambled with the corresponding RNTI, and $x_{rnti,i}$ is the i-th bit of the RNTI.

$$c_k = \begin{cases} b_k, & k = 0, 1, 2, ..., A+7 \\ (b_k + x_{rnti,k-A-8} + x_{TS,k-A-8}) \bmod 2, & k = A+8, A+9, A+10, ..., A+23 \end{cases} \quad \cdots(2)$$

$$c_k = \begin{cases} b_k, & k = 0, 1, 2, ..., A+7 \\ (b_k + x_{rnti,k-A-8}) \bmod 2, & k = A+8, A+9, A+10, ..., A+23 \end{cases} \quad \cdots(3)$$

After the UE receiving the DCI (e.g., DCI#1 with DL assignment) from the BS, the UE may perform the CRC for the DCI according to the RNTI and/or the TCI state selection mask, wherein the TCI state selection mask is corresponded to one or more TCI states indicated by the pervious DCI. The TCI state selection mask is used for performing the CRC if the unified framework is applicable, and the TCI state mask is not used for performing the CRC if the unified framework is not applicable. The UE may unscramble the scrambled bits of the DCI#1, according to the RNTI and/or TCI state selection mask, to obtain the DCI with the parity bits. After that, the UE may perform the CRC for the DCI with the parity bits. If the unified framework is applicable and the CRC is successful, the UE may apply the one or more TCI states corresponding to the TCI state selection mask to one or more DM-RS ports and may receive the PDSCH scheduled by the DCI#1 by the one or more DM-RS ports.

For example, the UE may unscramble the scrambled bits of the DCI#1, according to the TCI state selection mask <0,0,0,0,0,0,0,0,0,0,0,0,0,0,0,0>, to obtain the DCI with the parity bits. After that, the UE may perform the CRC for the DCI with the parity bits. If the CRC is successful, the UE may apply the first TCI state (e.g., TCI state #x) corresponding to the TCI state selection mask <0,0,0,0,0,0,0,0,0,0,0,0,0,0,0,0> to one or more DM-RS ports and may receive the PDSCH scheduled by the DCI#1 by the one or more DM-RS ports. For another example, the UE may unscramble the scrambled bits of the DCI#1, according to the TCI state selection mask <0,0,0,0,0,0,0,0,0,0,0,0,0,0,0,1>, to obtain the DCI with the parity bits. After that, the UE may perform the CRC for the DCI with the parity bits. If the CRC is successful, the UE may apply the second TCI state (e.g., TCI state #y) corresponding to the TCI state selection mask <0,0,0,0,0,0,0,0,0,0,0,0,0,0,0,1> to one or more DM-RS ports and may receive the PDSCH scheduled by the DCI#1 by the one or more DM-RS ports. For another example, the UE may unscramble the scrambled bits of the DCI#1, according to the TCI state selection mask <0,0,0,0,0,0,0,0,0,0,0,0,0,0,1,0>, to obtain the DCI with the parity bits. After that, the UE may perform the CRC for the DCI with the parity bits. If the CRC is successful, the UE may apply the first TCI state (e.g., TCI state #x) and the second TCI state (e.g., TCI state #y) corresponding to the TCI state selection mask <0,0,0,0,0,0,0,0,0,0,0,0,0,0,1,0> to one or more DM-RS ports and may receive the PDSCH scheduled by the DCI#1 by the one or more DM-RS ports.

In one embodiment, the association between the TCI state selection mask and the one or more TCI state may be configured to the UE via an RRC message.

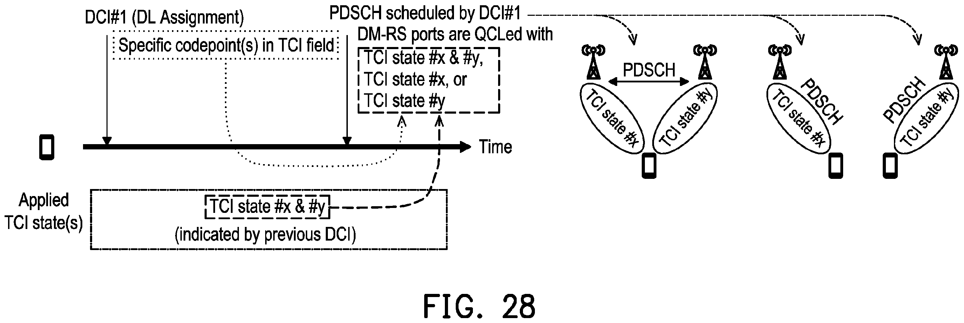

FIG. 28 illustrates a schematic diagram of an implicit TCI state selection based on a TCI field according to one embodiment of the present disclosure. In one embodiment, the implicit TCI state selection may be applied in response to the TCI selection field not being included in the scheduling DCI (e.g., DCI#1). Specifically, the UE may determine one or more TCI states to be applied from one or more TCI states indicated by the previous DCI (e.g., by the TCI field in the previous DCI) according to the TCI field in the DCI#1. The LTE may apply the determined one or more TCI states to one or more DM-RS ports and may receive the PDSCH scheduled by the DCI#1 by the one or more DM-RS ports.

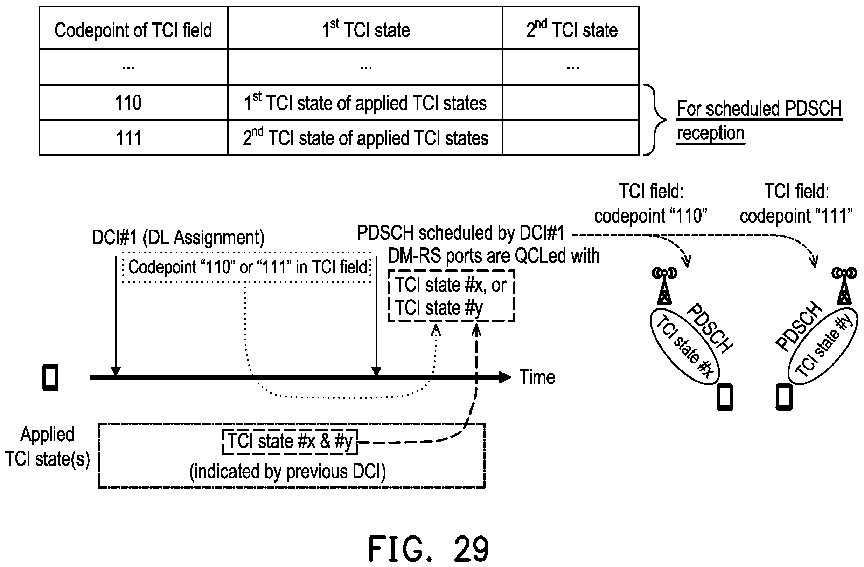

FIG. 29 illustrates a schematic diagram of an implicit TCI state selection based on a predetermined codepoint of a TCI field according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by the previous DCI. The UE may obtain a codepoint of the TCI field in the DCI#1, wherein the codepoint may be associated with a selection of one TCI state indicated by the previous DCI. If the codepoint of the TCI field is a predetermined codepoint "110", the UE may apply the first TCI state indicated by the previous DCI (e.g., TCI state #x) to one or more DM-RS ports and may receive the PDSCH scheduled by the DCI#1 by the one or more DM-RS ports. If the codepoint of the TCI field is a predetermined codepoint "111", the UE may apply the second TCI state indicated by the pervious DCI (e.g., TCI state #y) to one or more DM-RS ports and may receive the PDSCH scheduled by the DCI#1 by the one or more DM-RS ports.

In one embodiment, the association between the predetermined codepoint of the TCI field and the selection of the TCI state indicated by the previous DCI may be configured to the UE by an RRC message.

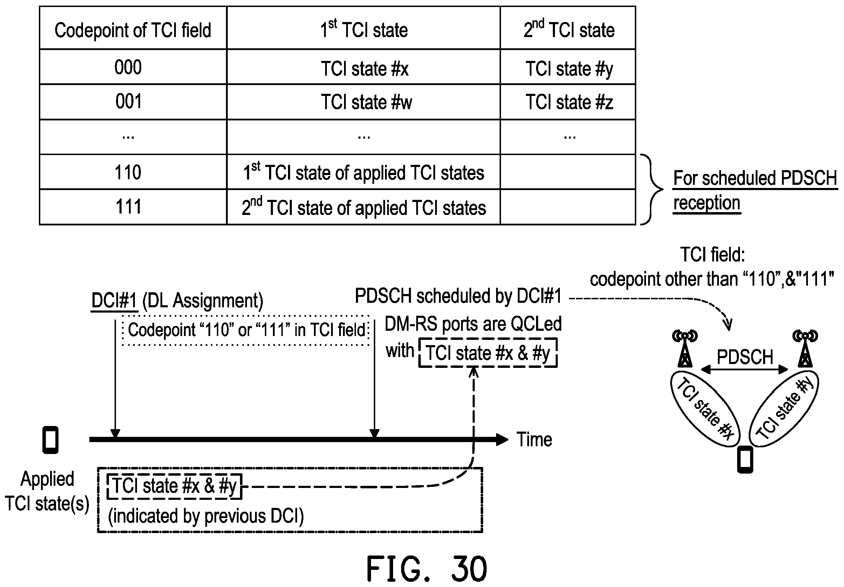

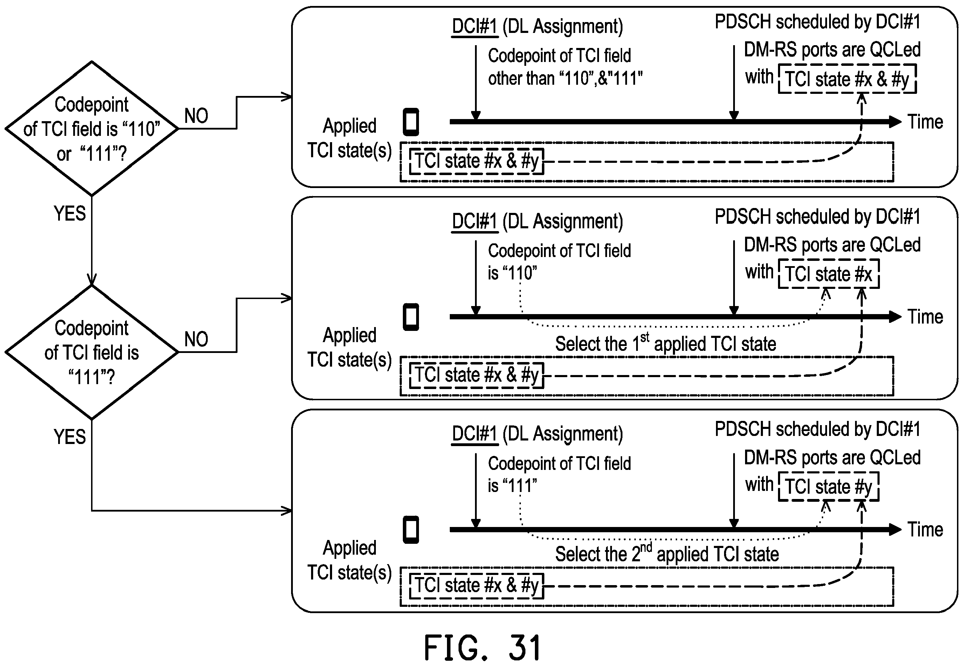

FIG. 30 and FIG. 31 illustrate schematic diagrams of an implicit TCI state selection based on a predetermined codepoint of a TCI field according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by a previous DCI. The LTE may obtain a codepoint of a TCI field in the DCI#1, wherein the codepoint may be associated with a selection of one or more TCI states indicated by the previous DCI. If the codepoint of the TCI field is a predetermined codepoint, the UE may determine or select one TCI state corresponding to the predetermined codepoint from the one or more TCI states indicated by the pervious DCI. The UE may apply the selected TCI state to one or more DM-RS ports and may receive the PDSCH scheduled by the DCI#1 by the one or more DM-RS ports. If the codepoint of the TCI field is not a predetermined codepoint, the LTE may apply the one or more TCI states indicated by the pervious DCI to one or more DM-RS ports, and the UE may receive the PDSCH scheduled by the DCI#1 by the one or more DM-RS ports. In one embodiment, the associated between the predetermined codepoint of the TCI field and the selection of the TCI state indicated by the previous DCI may be configured to the UE by an RRC message.

For example, the predetermined codepoint of the TCI field may include the predetermined codepoint "110" and the predetermined codepoint "111". If the codepoint of the TCI field is the predetermined codepoint "110", the UE may apply the first TCI state indicated by the pervious DCI (e.g., TCI state #x) to one or more DM-RS ports and may receive the PDSCH scheduled by the DCI#1 by the one or more DM-RS ports. If the codepoint of the TCI field is the predetermined codepoint "111", the LTE may apply the second TCI state indicated by the pervious DCI (e.g., TCI state #y) to one or more DM-RS ports and may receive the PDSCH scheduled by the DCI#1 by the one or more DM-RS ports. If the codepoint of the TCI field is a codepoint other than the predetermined codepoints "110" and "111", the UE may apply the first TCI state and the second TCI state indicated by the pervious DCI (e.g., TCI state #x and TCI state #y) to one or more DM-RS ports and may receive the PDSCH scheduled by the DCI#1 by the one or more DM-RS ports.

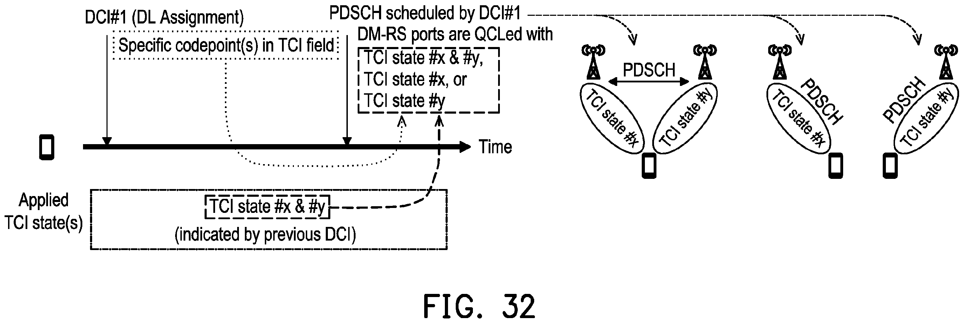

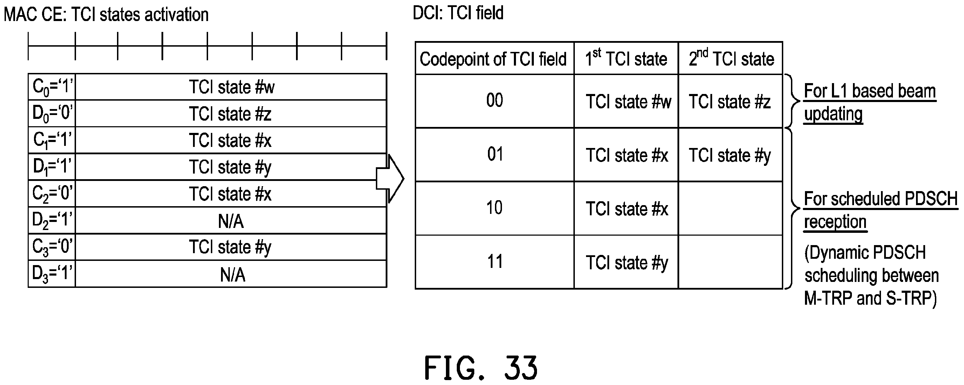

FIG. 32 illustrates a schematic diagram of an implicit TCI state selection based on a MAC CE according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by the pervious DCI. The UE may obtain a codepoint of the TCI field in the DCI#1, wherein the codepoint may be associated with a selection of one or more TCI states indicated by the pervious DCI. The functionality of the selected TCI state may be determined by the UE according to a MAC CE. FIG. 33 illustrates tables of association between the field in the MAC CE and the TCI field in the DCI (e.g., DCI#1) according to one embodiment of the present disclosure, wherein the tables of association may be configured to the UE via, for example, an RRC message. A MAC CE may include a field $C_i$ and a corresponding field $D_i$. The field $C_i$ may be associated with a first TCI state preconfigured to the UE (e.g., TCI state #w, #x, or #y as shown in the table) and may indicate whether an octet containing a second TCI state preconfigured to the UE (e.g., TCI state #z or #y as shown in the table) is present in the field $D_i$ of the MAC CE, wherein i may be the index of codepoints of the TCI field. If the field $C_i$ is set to "0", the octet containing the second TCI state may not be present in the field $D_i$ of the MAC CE. If the field $C_i$ is set to "1", the octet containing the second TCI state may be present in the field $D_i$ of the MAC CE. The field $D_i$ may indicate the functionality of the i-th codepoint of the TCI field. If the field $D_i$ is set to "0", the one or more TCI states corresponding to the i-th codepoint of the TCI field may be used for the L1 based beam updating. If the field $D_i$ is set to "1", the one or more TCI states corresponding to the i-th codepoint of the TCI field may be used for the scheduled PDSCH reception.

For example, if the first codepoint (i.e., codepoint "00") of the TCI field is obtained by the UE, the UE may determine that the TCI state #w and the TCI state #z are used for the L1 based beam updating in response to the field $D_0$ being set to "0". If the second codepoint (i.e., codepoint "01") of the TCI field is obtained by the UE, the UE may determine that the TCI state #x and the TCI state #y are used for the scheduled PDSCH reception in response to the field $D_1$ being set to "1". If the third codepoint (i.e., codepoint "10") of the TCI field is obtained by the UE, the UE may determine that the TCI state #x is used for the scheduled PDSCH reception in response to the field $D_2$ being set to "1". If the fourth codepoint (i.e., codepoint "11") of the TCI field is obtained by the UE, the UE may determine that the TCI state #y is used for the scheduled PDSCH reception in response to the field $D_3$ being set to "1".

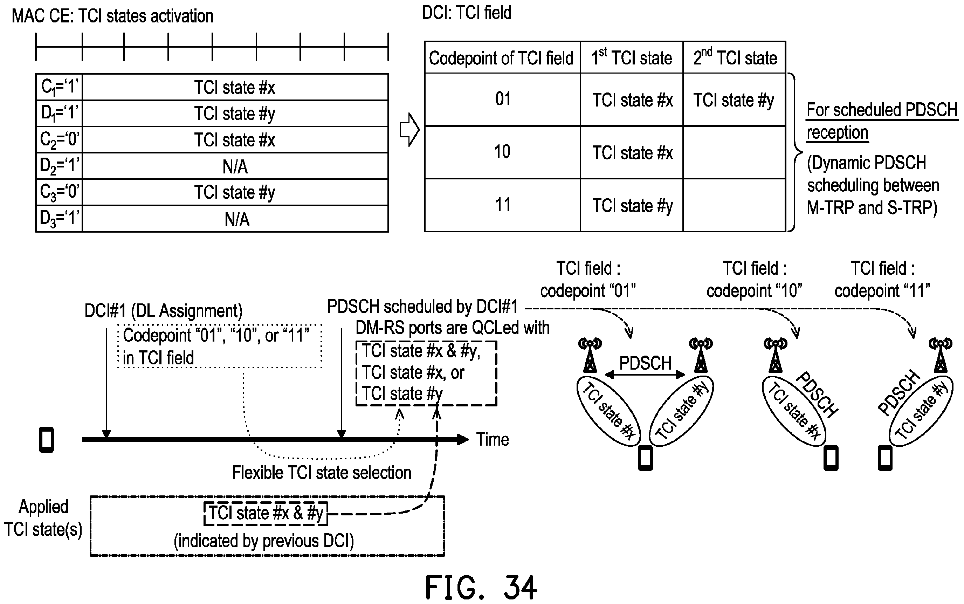

As shown in FIG. 34, FIG. 34 illustrates a schematic diagram of an implicit TCI state selection for the PDSCH reception based on a MAC CE according to one embodiment of the present disclosure. The LTE may obtain a codepoint of the TCI field in the DCI#1. If the codepoint of the TCI field is set to "01", the LTE may apply the TCI state #x and the TCI state #y to one or more DM-RS ports and may receive the PDSCH scheduled by the DCI#1 by the one or more DM-RS ports. If the codepoint of the TCI field is set to "10", the LTE may apply the TCI state #x to one or more DM-RS ports and may receive the PDSCH scheduled by the DCI#1 by the one or more DM-RS ports. If the codepoint of the TCI field is set to "11", the UE may apply the TCI state #y to one or more DM-RS ports and may receive the PDSCH scheduled by the DCI#1 by the one or more DM-RS ports.

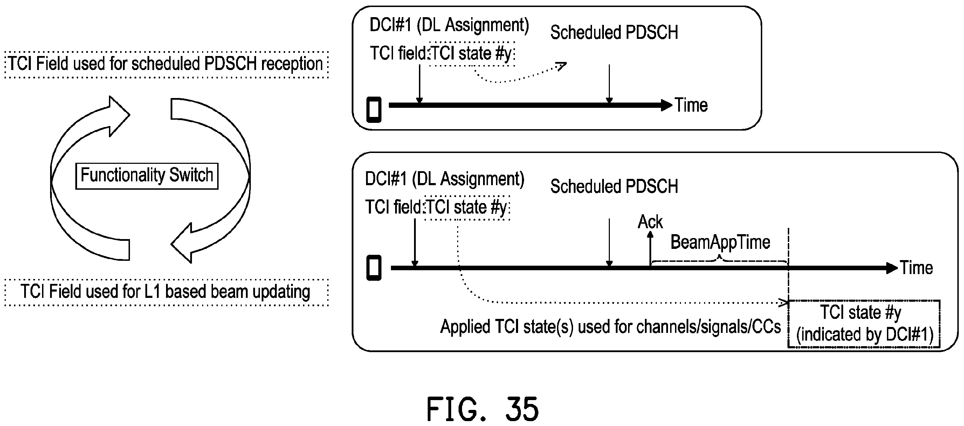

FIG. 35 illustrates a schematic diagram of the functionality of the TCI state according to one embodiment of the present disclosure. A TCI state (e.g., TCI state #y) indicated by the TCI field of the scheduled DCI (e.g., DCI#1) may be used for the scheduled PDSCH reception or for the L1 based beam updating. In other words, the functionality of the TCI state #y may be switched between the scheduled PDSCH reception and the L1 based beam updating. If the TCI state #y is used for the scheduled PDSCH reception, the UE may apply the TCI state #y to one or more DM-RS ports and may receive the PDSCH scheduled by the DCI#1 by the one or more DM-RS ports. If the TCI state #y is used for the L1 based beam updating, the LTE may apply the TCI state #y to channels/signals/CCs after a time period (e.g., *BeamAppTime*), wherein the time period may start from the ACK corresponding to the PDSCH scheduled by the DCI#1.

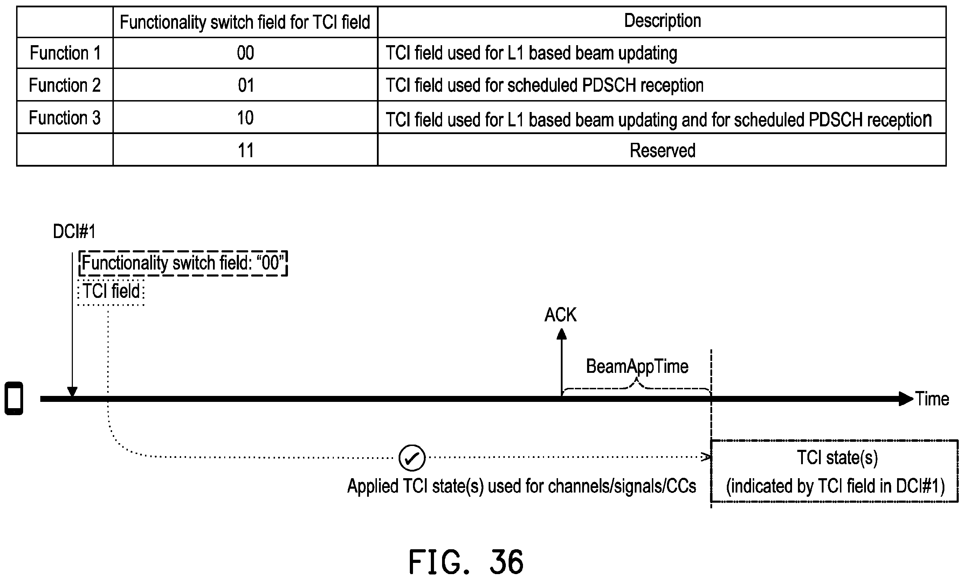

FIG. 36 illustrates a schematic diagram of TCI state for the L1 based beam updating according to one embodiment of the present disclosure. The UE may receive the DCI#1 with a TCI field and a new field (e.g., a functionality switch field). The UE may determine the functionality of one or more TCI states according to the codepoint of the functionality switch field, wherein the one or more TCI states may be associated with the codepoint of the TCI field. If the codepoint of the functionality switch field is set to "00", the UE may determine that the one or more TCI states corresponding to the TCI field may be used for the L1 based beam updating. Accordingly, the UE may apply the one or more TCI states to channels/signals/CCs after a time period (e.g., *BeamAppTime*), wherein the time period may start from the ACK corresponding to the DCI#1 (or the PDSCH scheduled by the DCI#1).

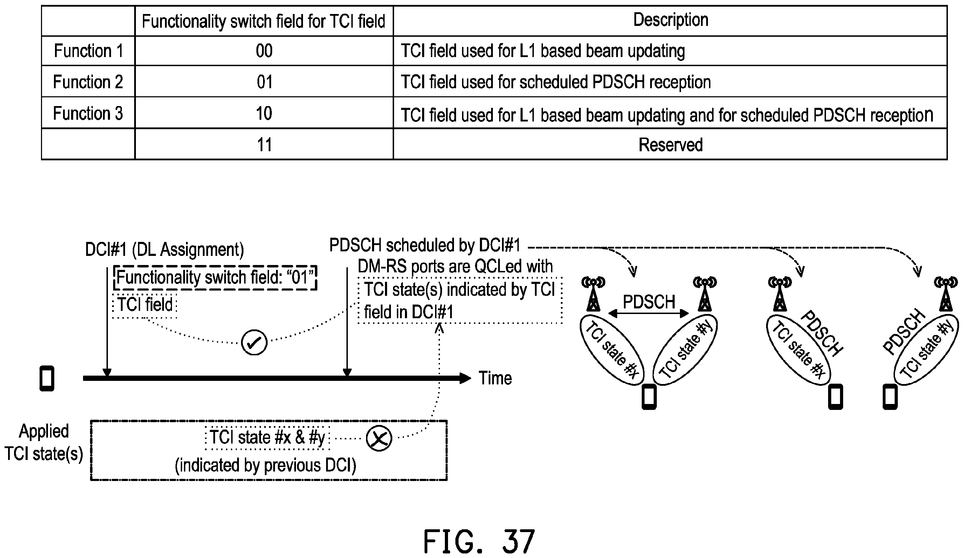

FIG. 37 illustrates a schematic diagram of TCI state for the scheduled PDSCH reception according to one embodiment of the present disclosure. The UE may receive the DCI#1 with a TCI field and a new field (e.g., a functionality switch field). The UE may determine the functionality of one or more TCI states according to the functionality switch field, wherein the one or more TCI states may be associated with the codepoint of the TCI field. If the codepoint of the functionality switch field is set to "01", the UE may determine that the one or more TCI states corresponding to the TCI field may be used for the scheduled PDSCH reception. Accordingly, the UE may apply the one or more TCI states to one or more DM-RS ports and may receive the PDSCH scheduled by the DCI#1 by the one or more DM-RS ports. The UE may not expect that the one or more TCI states indicated by the TCI field in the DCI#1 are other than the applied one or more TCI states indicated by the previous DCI.

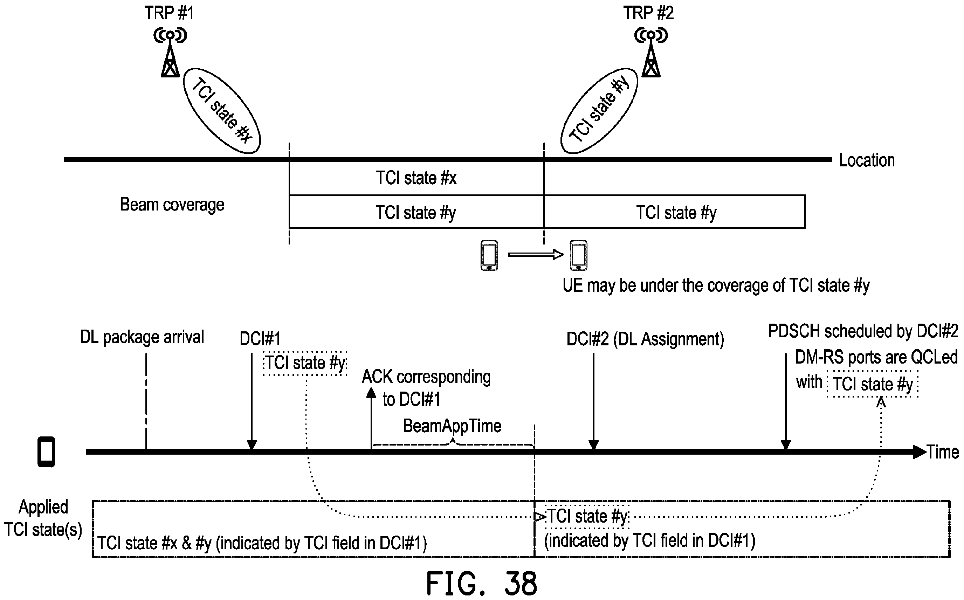

FIG. 38 illustrates a schematic diagram of L1 based beam updating according to one embodiment of the present disclosure. Assume that the UE is served by the TRP#1 and TRP#2 via the TCI state #x and TCI state #y respectively. If the LTE moves from the coverage of TCI state #x and TCI state #y to the coverage of only TCI state #y, the UE may receive a scheduled DCI (e.g., DCI#1) indicating a TCI state (e.g., TCI state #y) for the L1 based beam updating, wherein the L1 based beam updating may switch the TCI state applied by the UE from the TCI state #x and the TCI state #y to the TCI state #y. The UE may apply the TCI state #y after time point $T_0$, wherein time point $T_0$ may be a time period (e.g., *BeamAppTime)* start from the ACK#1 corresponding to the DCI#1. The applied TCI state #y may be used for, for example, receiving the PDSCH scheduled by the DCI#2, wherein the DCI#2 is later than the DCI#1.

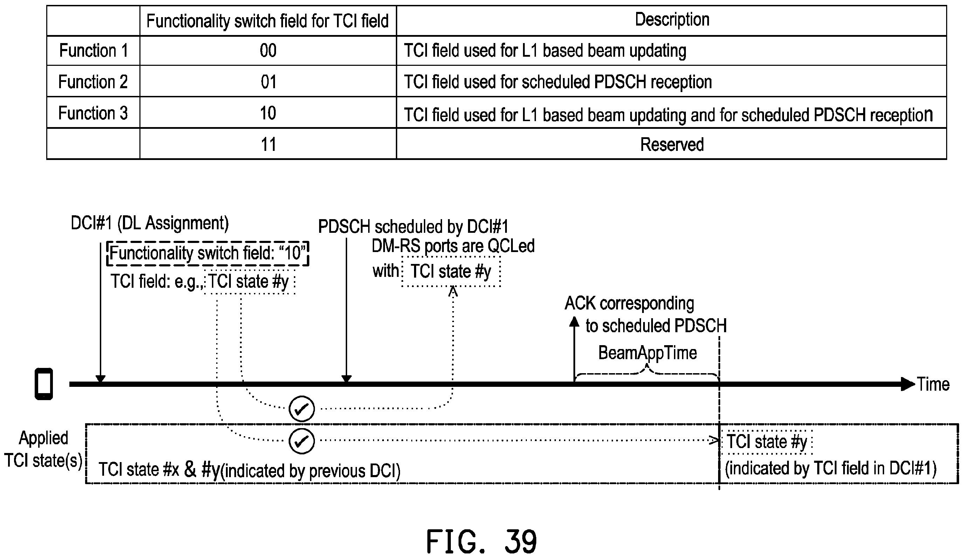

FIG. 39 illustrates a schematic diagram of TCI state for the scheduled PDSCH reception and the L1 based beam updating according to one embodiment of the present disclosure. The UE may receive the DCI#1 with a TCI field and a new field (e.g., a functionality switch field). The LTE may determine the functionality of one or more TCI states according to the functionality switch field, wherein the one or more TCI states (e.g., TCI state #y) may be associated with the codepoint of the TCI field. If the codepoint of the functionality switch field is set to "10", the UE may determine that the TCI state #y corresponding to the TCI field may be used for both the scheduled PDSCH reception and the L1 based beam updating. The LTE may apply the TCI state #y to one or more DM-RS ports and may receive the PDSCH scheduled by the DCI#1 by the one or more DM-RS ports. The UE may not expect that the one or more TCI states indicated by the TCI field in the DCI#1 are other than the applied one or more TCI states indicated by the previous DCI. On the other hand, the UE may apply the TCI state #y to channels/signals/CCs after a timer period (e.g., *BeamAppTime*), wherein the timer period may be start from the ACK corresponding to the DCI#1 (or the PDSCH scheduled by the DCI#1).

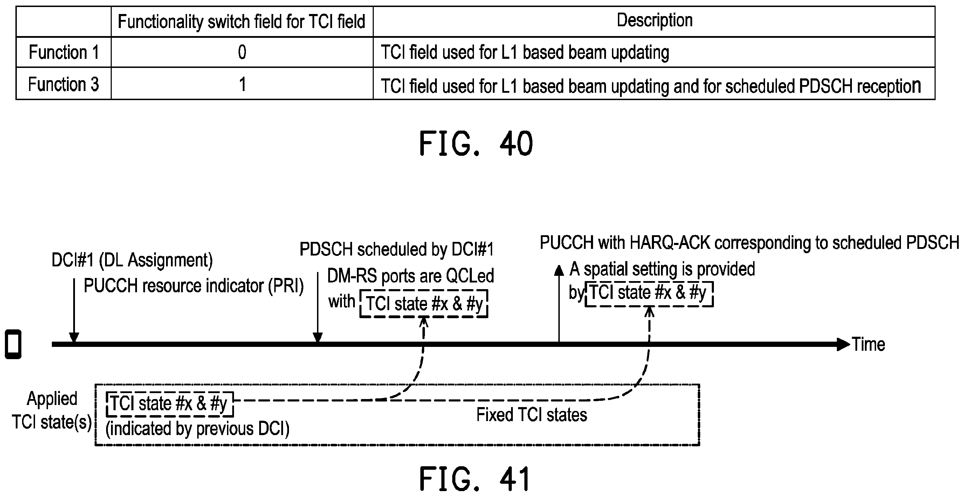

FIG. 40 illustrates a table of a new field of a DCI according to one embodiment of the present disclosure. The UE may receive a DCI with a TCI field and a new field (e.g., a functionality switch field). The UE may determine the functionality of one or more TCI states according to the functionality switch field, wherein the one or more TCI states may be associated with the codepoint of the TCI field. If the codepoint of the functionality switch field is set to "0", the UE may determine that the one or more TCI states corresponding to the TCI field may be used for the L1 based beam updating. If the codepoint of the functionality switch field is set to "1", the LTE may determine that the one or more TCI states corresponding to the TCI field may be used for the L1 based beam updating and the scheduled PDSCH reception.

In one embodiment, the UE may expect that the number of the applied TCI states indicated by the previous DCI is equal to two. The UE may not expect that the number of the applied TCI states indicated by the previous DCI is equal to one.

FIG. 41 illustrates a schematic diagram of TCI state subset selection according to one embodiment of the present disclosure. A UE may transmit a PUCCH with HARQ-ACK corresponding to a scheduled PDSCH according to a spatial setting, wherein the spatial setting may be provided by one or more fixed TCI states (e.g., TCI state #x and TCI state #y) indicated by the pervious DCI. The UE may not transmit the PUCCH with HARQ-ACK according to a spatial setting activated by a MAC CE.

In one embodiment, the PUCCH is corresponded to the scheduled PDSCH prior to the PUCCH, and the PDSCH scheduled by the DCI#1 is corresponded to a semi persistent scheduling.

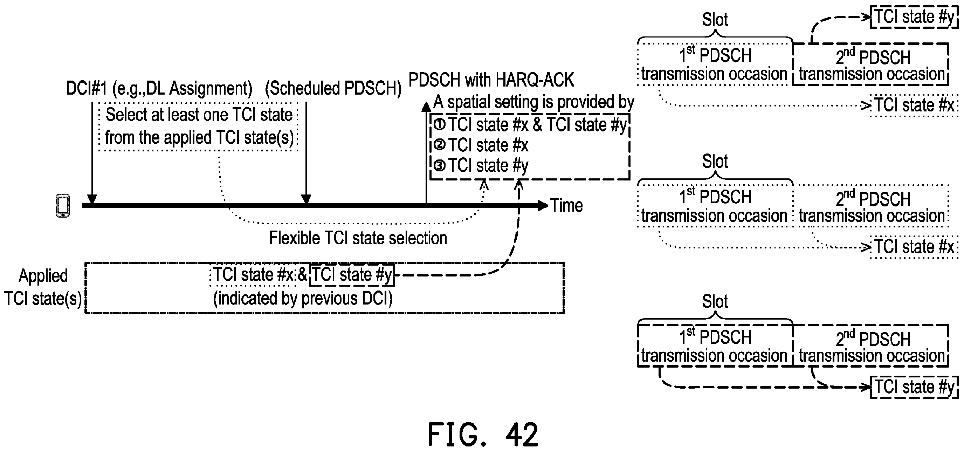

FIG. 42 illustrates a schematic diagram of a flexible TCI state selection for PUCCH transmission according to one embodiment of the present disclosure. For a unified TCI framework, a dynamic PUCCH scheduling between S-TRP scheme and M-TRP scheme may be supported. A LTE may determine or select one or more TCI states for transmitting a PUCCH according to a scheduling DCI (e.g., DCI#1) and/or one or more TCI states indicated by the pervious DCI (e.g., TCI state #x and/or TCI state #y). For example, the first slot level PUCCH transmission occasion may be transmitted by the UE via the TCI state #x, and the second slot level PUCCH transmission occasion may be transmitted by the LTE via the TCI state #y. For another example, the first slot level PUCCH transmission occasion and the second slot level PUCCH transmission occasion may be transmitted by the UE via the TCI state #x. For another example, the first slot level PUCCH transmission occasion and the second slot level PUCCH transmission occasion may be transmitted by the UE via the TCI state #y.

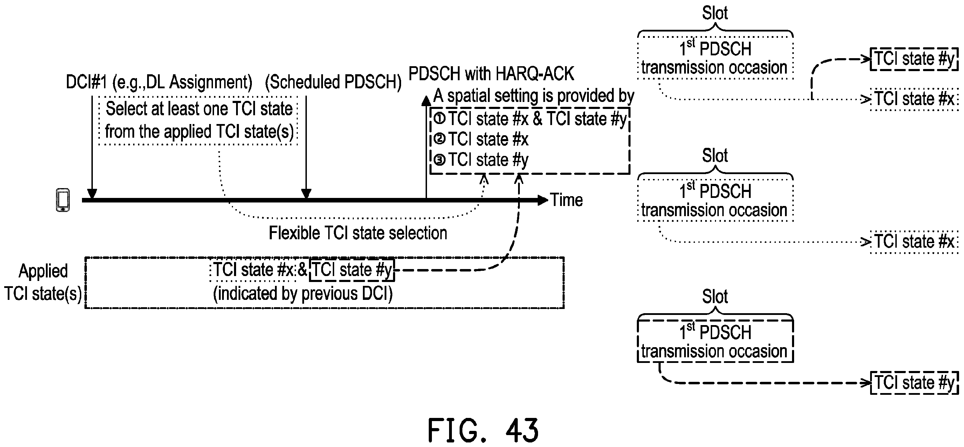

FIG. 43 illustrates a schematic diagram of a flexible TCI state selection for PUCCH transmission according to one embodiment of the present disclosure. For a unified TCI framework, a dynamic PUCCH scheduling between S-TRP scheme and M-TRP scheme may be supported. A LTE may determine or select one or more TCI states for transmitting a PUCCH according to a scheduling DCI (e.g., DCI#1) and/or one or more TCI states indicated by the pervious DCI (e.g., TCI state #x and/or TCI state #y). The PUCCH resource may be transmitted simultaneously by two TCI states (e.g., TCI state #x and TCI state #y) with the same time/frequency resource. For example, the first slot level PUCCH transmission occasion may be transmitted by the UE via the TCI state #x, the TCI state #y, or both the TCI state #x and TCI state #y.

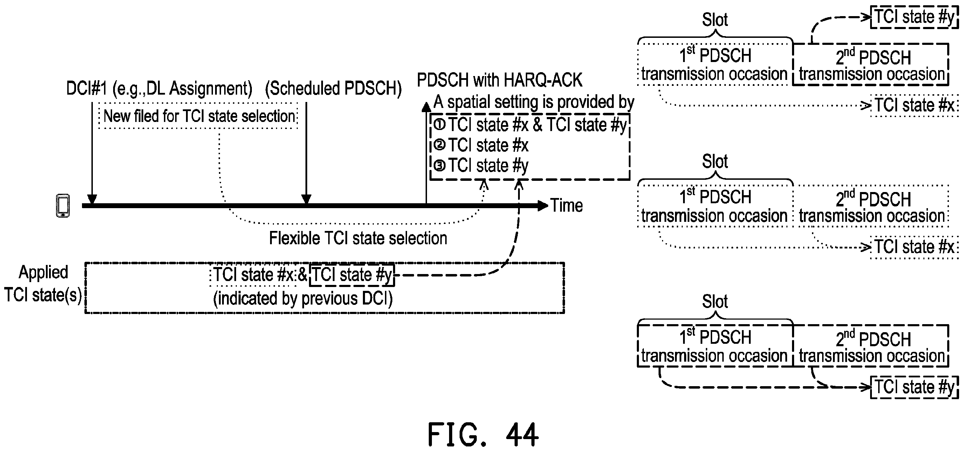

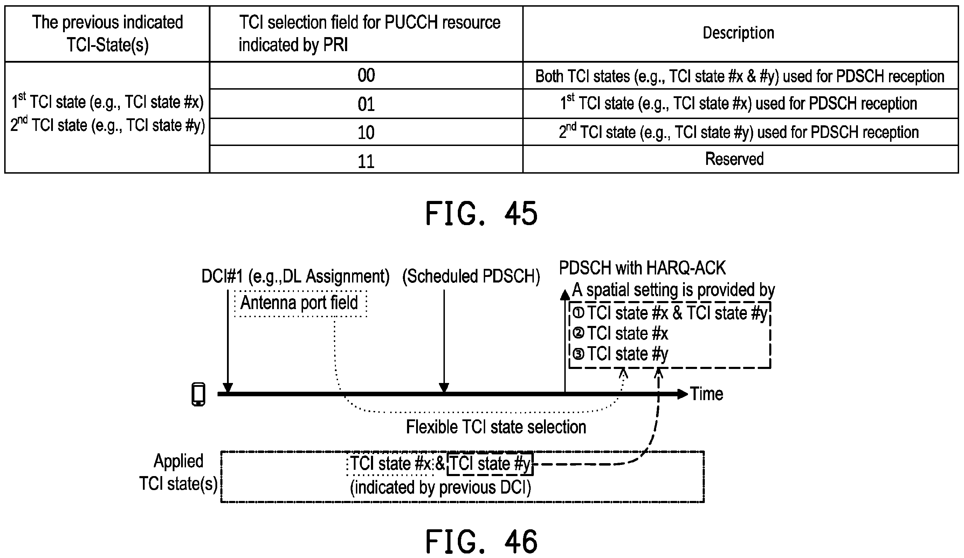

FIG. 44 and FIG. 45 illustrate schematic diagrams of an explicit TCI state selection based on a codepoint according to one embodiment of the present disclosure. A codepoint of a new field (e.g., a TCI selection field) in the DCI#1 received by the UE may be associated with a selection of one or more TCI states indicated by the previous DCI (e.g., by the TCI field in the previous DCI). For example, assume that a TCI state #x and a TCI state #y are indicated to the UE by the previous DCI. If the TCI selection field is included in the DCI#1 received by the UE, the UE may obtain a selection from the TCI selection field and may apply one or more TCI states indicated by the previous DCI to a spatial setting according to the selection. The UE may transmit the PUCCH by the spatial setting, wherein the PUCCH resource may be indicated to the UE by the physical uplink control channel resource indicator (PRI) field of the DCI#1. For example, if the codepoint of the TCI selection field in the DCI#1 is "00", the LTE may apply the TCI state #x and TCI state #y to the spatial setting and may transmit the PUCCH indicated by the PRI field according to the spatial setting. If the codepoint of the TCI selection field in the DCI#1 is "01", the UE may apply the TCI state #x to the spatial setting and may transmit the PUCCH indicated by the PRI field according to the spatial setting. If the codepoint of the TCI selection field in the DCI#1 is "10", the UE may apply the TCI state #y to the spatial setting and may transmit the PUCCH indicated by the PRI field according to the spatial setting.

FIG. 46 illustrates a schematic diagram of an implicit TCI state selection based on an antenna port(s) field according to one embodiment of the present disclosure. In one embodiment, the implicit TCI state selection may be applied in response to the TCI selection field not being included in the scheduling DCI (e.g., DCI#1 (format 1_1/1_2)). Specifically, the UE may determine one or more TCI states to be applied from one or more TCI states indicated by a previous DCI (e.g., by the TCI field in the previous DCI) according to a preconfigured association between the one or more TCI states indicated by the previous DCI and one or more DM-RS ports. The one or more DM-RS ports may be indicated by an antenna port(s) field of the DCI#1 (format 1_1/1_2). The UE may transmit the PUCCH scheduled by the DCI#1 by the one or more DM-RS ports (or the spatial setting) corresponding to the one or more TCI states indicated by the pervious DCI. The one or more TCI states indicated by the previous DCI (or the one or more DM-RS ports corresponding to the one or more TCI states) may be applied for a time period stating from the last symbol of PDCCH for DL assignment. In one embodiment, the preconfigured association may be configured to the UE via an RRC message.

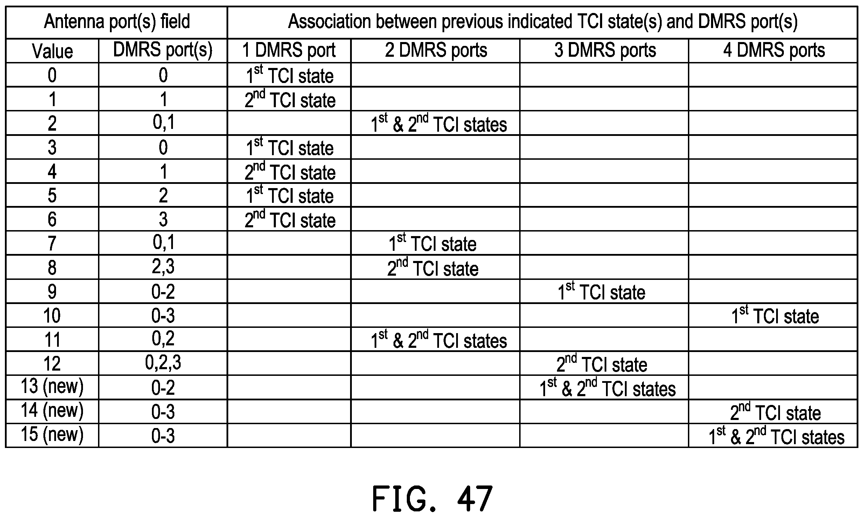

FIG. 47 illustrates a table of the preconfigured association according to one embodiment of the present disclosure. Each of the DM-RS ports indicated by the antenna port(s) field may be associated with one or more TCI states indicated by the previous DCI as shown in the table. For example, if the value of the antenna port(s) field is "10", the LTE may determine that DM-RS ports 0-3 are associated with the first TCI state (e.g., TCI state #x) indicated by the pervious DCI according to the table. Accordingly, the UE may apply the TCI state #x to the DM-RS ports 0-3 and may transmit the PUCCH by the DM-RS ports 0-3. For another example, if the value of the antenna port(s) field is "14", the UE may determine that DM-RS ports 0-3 are associated with the second TCI state (e.g., TCI state #y) indicated by the pervious DCI according to the table. Accordingly, the UE may apply the TCI state #y to the DM-RS ports 0-3 and may transmit the PUCCH by the DM-RS ports 0-3. For another example, if the value of the antenna port(s) field is "15", the UE may determine that DM-RS ports 0-3 are associated with the first TCI state (e.g., TCI state #x) and the second TCI state (e.g., TCI state #y) indicated by the pervious DCI according to the table. Accordingly, the UE may apply the TCI state #x and the TCI state #y to the DM-RS ports 0-3 and transmit the PUCCH by the DM-RS ports 0-3.

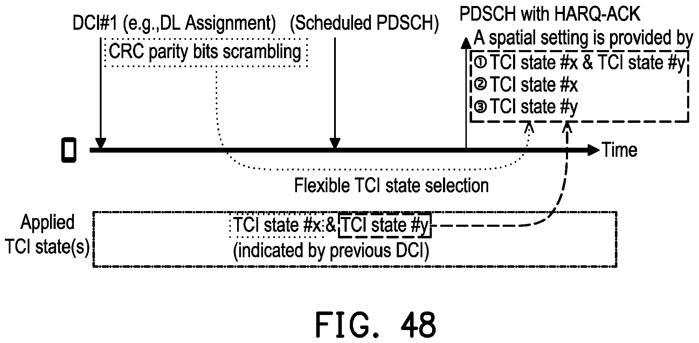

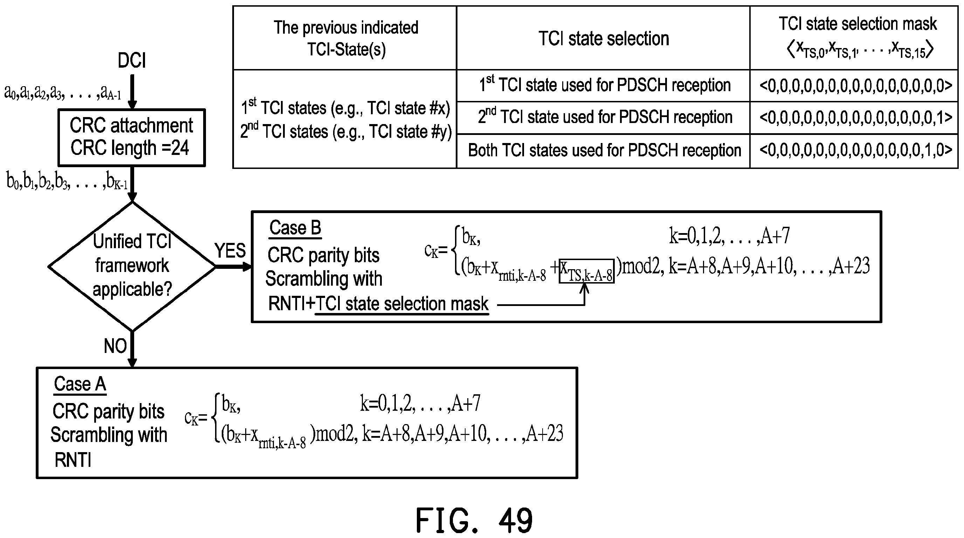

FIG. 48 illustrates a schematic diagram of an implicit TCI state selection embedded in DCI with CRC parity bits scrambling according to one embodiment of the present disclosure. FIG. 49 illustrates a schematic diagram of DCI (e.g., format 1_1/1_2) generation according to one embodiment of the present disclosure. in one embodiment, the implicit TCI state selection may be applied in response to the TCI selection field not being included in the scheduling DCI (e.g., DCI#1).

Assume that a DCI includes a bit stream $\{a_0, a_1, a_2, a_3, ..., a_{A-1}\}$. A BS may perform a CRC attachment on the DCI by attaching a plurality of CRC parity bits to the bit stream $\{a_0, a_1, a_2, a_3, ..., a_{A-1}\}$ to generate a bit stream $\{b_0, b_1, b_2, b_3, ..., b_{K-1}\}$, wherein the plurality of CRC parity bits may include, for example, 24 bits (i.e., CRC length = 24). After the CRC attachment, the BS may scramble the DCI with the CRC parity bits according to the corresponding RNTI and the TCI state selection mask as shown in equation (4) if the unified TCI framework is applicable, so as to generate a bit stream $\{c_0, c_1, c_2, c_3, ..., c_{K-1}\}$, wherein the bit stream $\{c_0, c_1, c_2, c_3, ..., c_{K-1}\}$ is the DCI with the CRC parity bits scrambled with the corresponding RNTI and TCI state selection mask, $x_{rnti,i}$ is the i-th bit of the RNTI, and $x_{TS,i}$ is the i-th bit of the TCI state selection mask. On the other hand, the BS may scramble the DCI with the CRC parity bits according to the corresponding RNTI as shown in equation (5) if the unified TCI framework is not applicable, so as to generate a bit stream $\{c_0, c_1, c_2, c_3, ..., c_{K-1}\}$, wherein the bit stream $\{c_0, c_1, c_2, c_3, ..., c_{K-1}\}$ is the DCI with the CRC parity bits scrambled with the corresponding RNTI, and $x_{rnti,i}$ is the i-th bit of the RNTI.

$$c_k = \begin{cases} b_k, & k = 0, 1, 2, ..., A+7 \\ (b_k + x_{rnti,k-A-8} + x_{TS,k-A-8}) \bmod 2, & k = A+8, A+9, A+10, ..., A+23 \end{cases} \quad \cdots (4)$$

$$c_k = \begin{cases} b_k, & k = 0, 1, 2, ..., A+7 \\ (b_k + x_{rnti,k-A-8}) \bmod 2, & k = A+8, A+9, A+10, ..., A+23 \end{cases} \quad \cdots (5)$$

After the UE receiving the DCI (e.g., DCI#1 with DL assignment) from the BS, the UE may perform the CRC for the DCI according to the RNTI and/or the TCI state selection mask, wherein the TCI state selection mask is corresponded to one or more TCI states indicated by the pervious DCI. The TCI state selection mask is used for performing the CRC if the unified framework is applicable, and the TCI state mask is not used for performing the CRC if the unified framework is not applicable. The UE may unscramble the scrambled bits of the DCI#1, according to the RNTI and/or TCI state selection mask, to obtain the DCI with the parity bits. After that, the UE may perform the CRC for the DCI with the parity bits. If the unified framework is applicable and the CRC is successful, the UE may apply the one or more TCI states corresponding to the TCI state selection mask to a spatial setting and may transmit the PUCCH by the spatial setting, wherein the PUCCH may be indicated by the PRI field in the DCI#1.

For example, the UE may unscramble the scrambled bits of the DCI#1, according to the TCI state selection mask <0,0,0,0,0,0,0,0,0,0,0,0,0,0,0,0>, to obtain the DCI with the parity bits. After that, the UE may perform the CRC for the DCI with the parity bits. If the CRC is successful, the UE may apply the first TCI state (e.g., TCI state #x) corresponding to the TCI state selection mask <0,0,0,0,0,0,0,0,0,0,0,0,0,0,0,0> to a spatial setting and may transmit the PUCCH by the spatial setting, wherein the PUCCH may be indicated by the PRI field in the DCI#1. For another example, the UE may unscramble the scrambled bits of the DCI#1, according to the TCI state selection mask <0,0,0,0,0,0,0,0,0,0,0,0,0,0,0,1>, to obtain the DCI with the parity bits. After that, the UE may perform the CRC for the DCI with the parity bits. If the CRC is successful, the UE may apply the second TCI state (e.g., TCI state #y) corresponding to the TCI state selection mask <0,0,0,0,0,0,0,0,0,0,0,0,0,0,0,1> to a spatial setting and may transmit the PUCCH by the spatial setting, wherein the PUCCH may be indicated by the PRI field in the DCI#1. For another example, the LTE may unscramble the scrambled bits of the DCI#1, according to the TCI state selection mask <0,0,0,0,0,0,0,0,0,0,0,0,0,0,1,0>, to obtain the DCI with the parity bits. After that, the UE may perform the CRC for the DCI with the parity bits. If the CRC is successful, the UE may apply the first TCI state (e.g., TCI state #x) and the second TCI state (e.g., TCI state #y) corresponding to the TCI state selection mask <0,0,0,0,0,0,0,0,0,0,0,0,0,1,0> to a spatial setting and may transmit the PUCCH by the spatial setting, wherein the PUCCH may be indicated by the PRI field in the DCI#1.

In one embodiment, the association between the TCI state selection mask and the one or more TCI states may be configured to the UE via an RRC message.

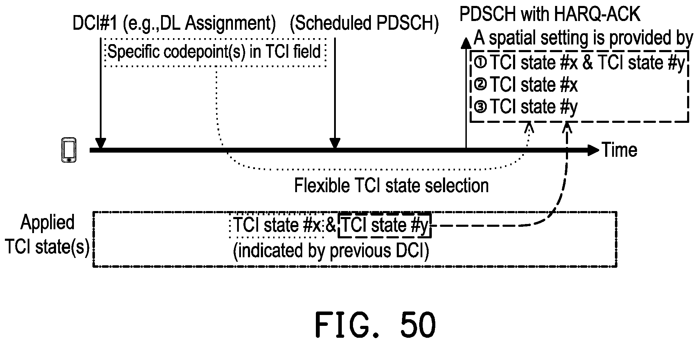

FIG. 50 illustrates a schematic diagram of an implicit TCI state selection based on a TCI field according to one embodiment of the present disclosure. In one embodiment, the implicit TCI state selection may be applied in response to the TCI selection field not being included in the scheduling DCI (e.g., DCI#1). Specifically, the UE may determine one or more TCI states to be applied from one or more TCI states indicated by the pervious DCI (e.g., by the TCI field in the pervious DCI) according to the TCI field in the DCI#1. The LTE may apply the determined one or more TCI states to a spatial setting and may transmit the PUCCH by the spatial setting, wherein the PUCCH may be indicated by the PRI field in the DCI#1.

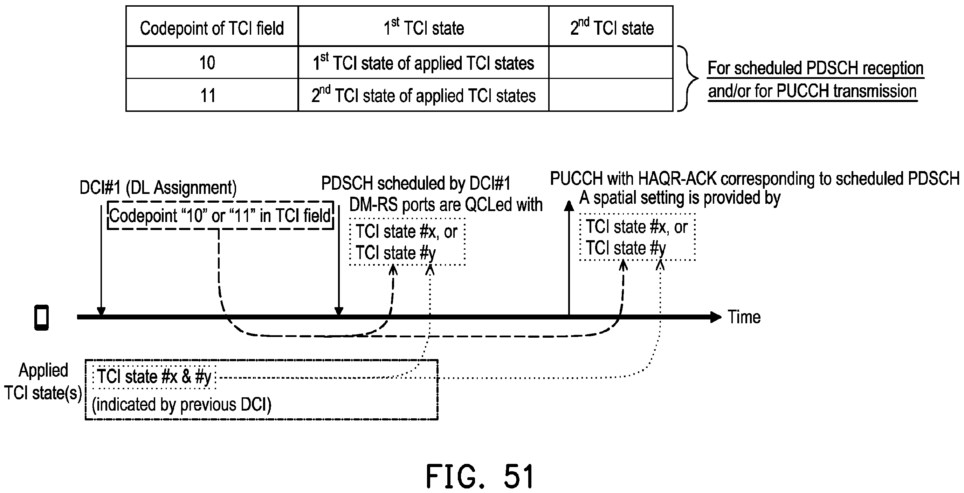

FIG. 51 illustrates a schematic diagram of an implicit TCI state selection based on a predetermined codepoint of a TCI field according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by the pervious DCI. The UE may obtain a codepoint of the TCI field in the DCI#1, wherein the codepoint may be associated with a selection of one TCI state indicated by the pervious DCI. If the codepoint of the TCI field is a predetermined codepoint "10", the UE may apply the first TCI state indicated by the pervious DCI (e.g., TCI state #x) to a spatial setting and may transmit the PUCCH by the spatial setting, wherein the PUCCH may be indicated by the PRI field in the DCI#1. If the codepoint of the TCI field is a predetermined codepoint "11", the UE may apply the second TCI state indicated by the previous DCI (e.g., TCI state #y) to a spatial setting and may transmit the PUCCH by the spatial setting, wherein the PUCCH may be indicated by the PRI field in the DCI#1.

In one embodiment, the association between the predetermined codepoint of the TCI field and the selection of the TCI state indicated by the previous DCI may be configured to the UE by an RRC message.

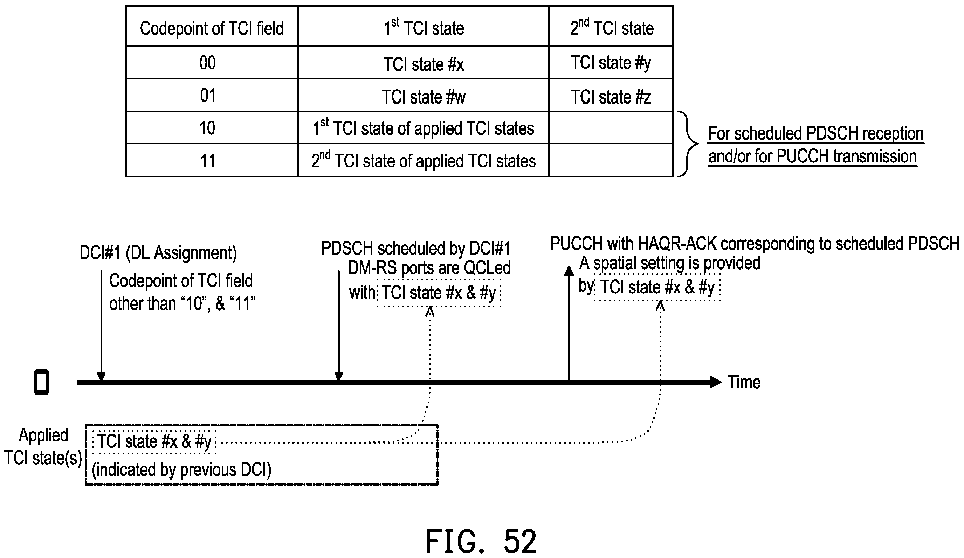

FIG. 52 illustrates a schematic diagram of an implicit TCI state selection based on a predetermined codepoint of a TCI field according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by a previous DCI. The LTE may obtain a codepoint of a TCI field in the DCI#1, wherein the codepoint may be associated with a selection of one or more TCI states indicated by the previous DCI.

If the codepoint of the TCI field is a predetermined codepoint, the LTE may determine or select one TCI state corresponding to the predetermined codepoint from the one or more TCI states indicated by the pervious DCI. The UE may apply the selected TCI state to a spatial setting and may transmit the PUCCH by the spatial setting, wherein the PUCCH may be indicated by the PRI field in the DCI#1. If the codepoint of the TCI field is not a predetermined codepoint, the UE may apply the one or more TCI states indicated by the pervious DCI to a spatial setting and may transmit the PUCCH by the spatial setting, wherein the PUCCH may be indicated by the PRI field in the DCI#1. In one embodiment, the associated between the predetermined codepoint of the TCI field and the selection of the TCI state indicated by the previous DCI may be configured to the UE by an RRC message.

For example, the predetermined codepoint of the TCI field may include predetermined codepoint "10" and predetermined codepoint "11". If the codepoint of the TCI field is the predetermined codepoint "10", the LTE may apply the first TCI state indicated by the previous DCI (e.g., TCI state #x) to a spatial setting and may transmit the PUCCH by the spatial setting, wherein the PUCCH may be indicated by the PRI field in the DCI#1. If the codepoint of the TCI field is the predetermined codepoint "11", the UE may apply the second TCI state indicated by the previous DCI (e.g., TCI state #y) to a spatial setting and may transmit the PUCCH by the spatial setting, wherein the PUCCH may be indicated by the PRI field in the DCI#1. If the codepoint of the TCI field is a codepoint other than the predetermined codepoints "10" and "11", the UE may apply the first TCI state and the second TCI state indicated by the previous DCI (e.g., TCI state #x and TCI state #y) to a spatial setting and may transmit the PUCCH by the spatial setting, wherein the PUCCH may be indicated by the PRI field in the DCI#1.

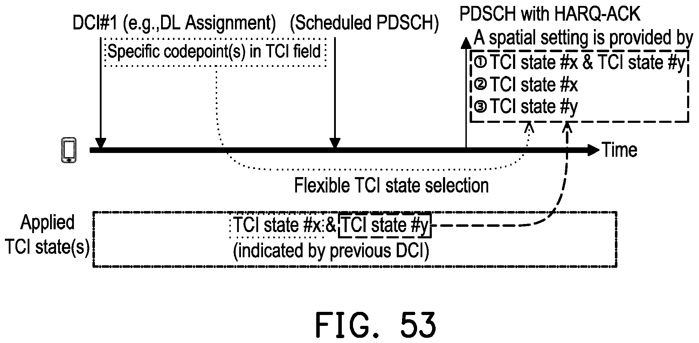

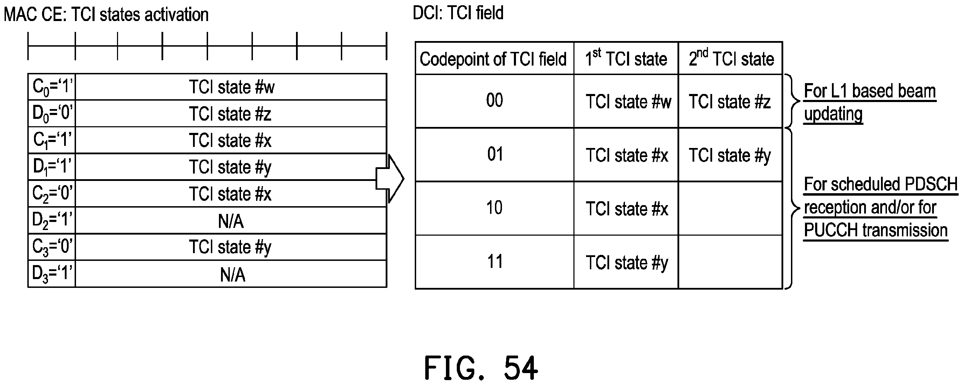

FIG. 53 illustrates a schematic diagram of an implicit TCI state selection based on a MAC CE according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the UE by the previous DCI. The UE may obtain a codepoint of the TCI field in the DCI#1, wherein the codepoint may be associated with a selection of one or more TCI states indicated by the previous DCI. The functionality of the selected TCI state may be determined by the UE according to a MAC CE. FIG. 54 illustrates tables of association between the field in the MAC CE and the TCI field in the DCI (e.g., DCI#1) according to one embodiment of the present disclosure.

A MAC CE may include a field $C_i$ and a corresponding field $D_i$. The field $C_i$ may be associated with a first TCI state preconfigured to the UE (e.g., TCI state #w, #x, or #y as shown in the table) and may indicate whether an octet containing a second TCI state preconfigured to the UE (e.g., TCI state #z or #y as shown in the table) is present in the field $D_i$ of the MAC CE, wherein $i$ may be the index of codepoints of the TCI field. If the field $C_i$ is set to "0", the octet containing the second TCI state may not be present in the field $D_i$ of the MAC CE. If the field $C_i$ is set to "1", the octet containing the second TCI state may be present in the field $D_i$ of the MAC CE. The field $D_i$ may indicate the functionality of the i-th codepoint of the TCI field. If the field $D_i$ is set to "0", the one or more TCI states corresponding to the i-th codepoint of the TCI field may be used for the L1 based beam updating. If the field $D_i$ is set to "1", the one or more TCI states corresponding to the i-th codepoint of the TCI field may be used for the PUCCH transmission, wherein the PUCCH transmission may be indicated by the PRI field of the DCI#1.

For example, regarding the codepoint corresponding to index 0 (i.e., codepoint "00") of the TCI field, the UE may determine that the TCI state #w and the TCI state #z are used for the L1 based beam updating in response to the field $D_0$ being set to "0". Regarding the codepoint corresponding to index 1 (i.e., codepoint "01") of the TCI field, the UE may determine that the TCI state #x and the TCI state #y are used for the PUCCH transmission in response to the field $D_1$ being set to "1". Regarding the codepoint corresponding to index 2 (i.e., codepoint "10") of the TCI field, the LTE may determine that the TCI state #x is used for the PUCCH transmission in response to the field $D_2$ being set to "1". Regarding the codepoint corresponding to index 3 (i.e., codepoint "11") of the TCI field, the UE may determine that the TCI state #y is used for the PUCCH transmission in response to the field $D_3$ being set to "1".

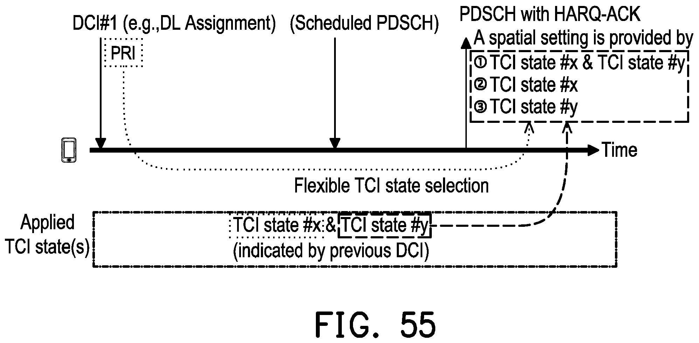

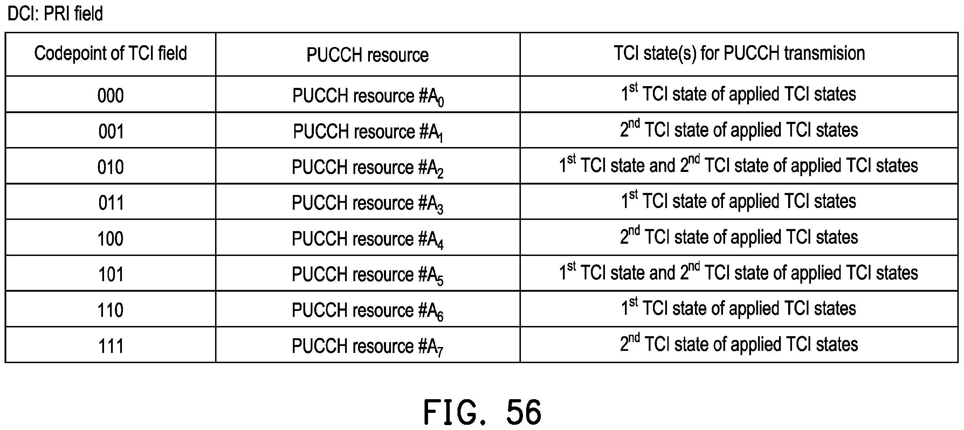

FIG. 55 illustrates a schematic diagram of an implicit TCI state selection based on a PRI field according to one embodiment of the present disclosure. FIG. 56 illustrates a table of association among the TCI field, the PUCCH resource indicated by the PRI field, and the TCI state applied for PUCCH transmission according to one embodiment of the present disclosure. In one embodiment, the implicit TCI state selection may be applied in response to the TCI selection field not being included in the scheduling DCI (e.g., DCI#1 (format 1_1/1_2)). Assume that a TCI state #x and a TCI state #y are indicated to the LTE by the pervious DCI. The LTE may obtain a codepoint of the TCI field in the DCI#1, wherein the codepoint may be associated with a selection of one or more TCI states indicated by the pervious DCI. The one or more TCI states corresponding to the codepoint may be applied by the UE for the reception of the PDSCH scheduled by the DCI#1. The one or more TCI states applied for the PDSCH may also be applied for the transmission of the PUCCH with HARQ-ACK corresponding to the PDSCH.

Specifically, a table (e.g., the table as shown in FIG. 56) of association among the TCI field in the DCI#1, the PUCCH resource indicated by the PRI field in the DCI#1, and the one or more TCI states applied for the PUCCH transmission may be preconfigured to the UE via an RRC message. After the DCI#1 is received by the UE, the UE may determine a selection of one or more TCI states indicated by the pervious DCI according to the table associated with the TCI field and the PRI field in the DCI#1. The UE may obtain a spatial setting of the PUCCH from the selection and may transmit the PUCCH according to the spatial setting. For example, if the codepoint of TCI field is set to "000", the UE may determine that the first TCI state indicated by the pervious DCI is applied for the PUCCH resource #$A_0$, wherein the PUCCH resource #$A_0$ may be one of a plurality of PUCCH resources indicated by the PRI field in the DCI#1. The UE may obtain a spatial setting corresponding to the first TCI state and may transmit the data allocated to the PUCCH resource #$A_0$ according to the spatial setting. For another example, if the codepoint of TCI field is set to "001", the UE may determine that the second TCI state indicated by the pervious DCI is applied for the PUCCH resource #$A_1$, wherein the PUCCH resource #$A_1$ may be one of a plurality of PUCCH resources indicated by the PRI field in the DCI#1. The UE may obtain a spatial setting corresponding to the second TCI state and may transmit the data allocated to the PUCCH resource #$A_1$ according to the spatial setting.

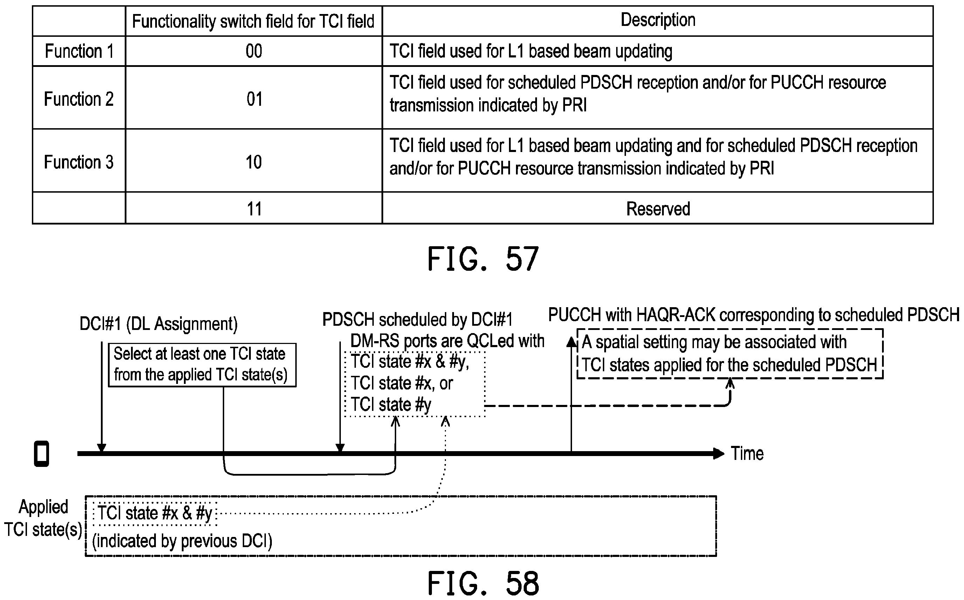

FIG. 57 illustrates a schematic diagram of the functionality of the TCI state according to one embodiment of the present disclosure. A TCI state indicated by the TCI field of the scheduled DCI (e.g., DCI#1) may be used for the PUCCH transmission indicated by the PRI field of the DCI#1 or for the L1 based beam updating. In other words, the functionality of the TCI state may be switched between the PUCCH transmission and the L1 based beam updating. If the TCI state is used for the PUCCH transmission, the UE may apply the TCI state to a spatial setting and may transmit the PUCCH by the spatial setting. If the TCI state is used for the L1 based beam updating, the UE may apply the TCI state to channels/signals/CCs after a time period (e.g., time for beam application). The UE may not expect that the one or more TCI states indicated by the TCI field in the DCI#1 are other than the applied one or more TCI states indicated by the previous DCI.

The UE may receive the DCI#1 with a TCI field and a new field (e.g., a functionality switch field). The UE may determine the functionality of one or more TCI states according to the codepoint of the functionality switch field, wherein the one or more TCI states may be associated with the codepoint of the TCI field. If the codepoint of the functionality switch field is set to "00", the UE may determine that the one or more TCI states corresponding to the TCI field may be used for the L1 based beam updating. Accordingly, the UE may apply the one or more TCI states to channels/signals/CCs after a time period. If the codepoint of the functionality switch field is set to "01", the UE may determine that the one or more TCI states corresponding to the TCI field may be used for the PUCCH transmission indicated by the PRI field in the DCI#1. Accordingly, the UE may apply the one or more TCI state to a spatial setting and may transmit the PUCCH by the spatial setting. If the codepoint of the functionality switch field is set to "10", the UE may determine that the one or more TCI states corresponding to the TCI field may be used for both the PUCCH transmission and the L1 based beam updating.

FIG. 58 illustrates a schematic diagram of an implicit TCI state determination based on one or more TCI states applied for the schedule PDSCH according to one embodiment of the present disclosure. In one embodiment, the implicit TCI state determination may be applied in response to the TCI selection field not being included in the scheduling DCI (e.g., DCI#1 (format 1_1/1_2)). Assume that one or more TCI states (e.g., TCI state #x or TCI state #y) are applied to the PDSCH reception by the UE. The UE may apply the one or more TCI states to a spatial setting and may transmit the PUCCH by the spatial setting, wherein the PUCCH may be corresponded to the schedule PDSCH prior to the PUCCH. The PDSCH may correspond to a semi persistent scheduling.

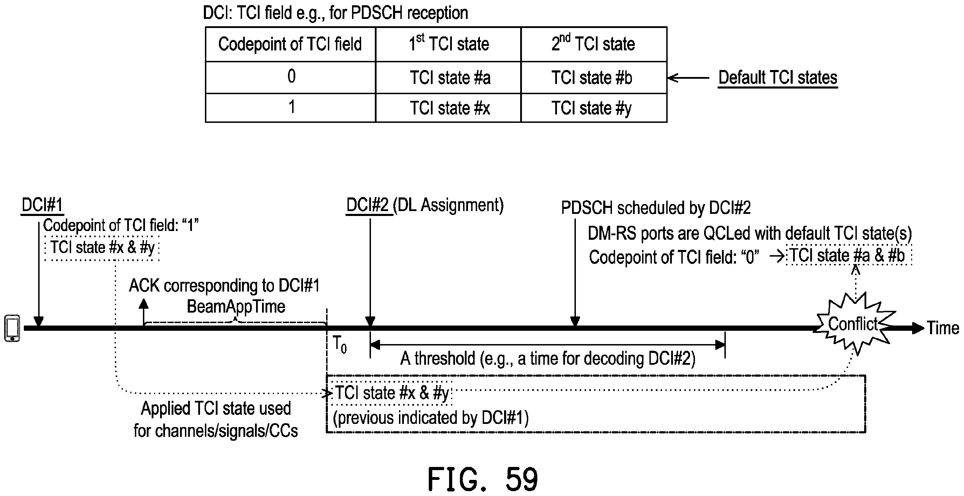

FIG. 59 illustrates a schematic diagram of a conflict of one or more TCI states according to one embodiment of the present disclosure. Assume that the TCI state #x and the TCI state #y previously indicated by the DCI#1 are applied by the UE from the time point $T_0$. The UE may determine a time offset between the reception of DCI#2 and the PDSCH scheduled by the DCI#2 according to the DCI#2. If the time offset is less than a threshold (e.g., a time for decoding DCI#2), the UE may apply one or more default TCI states to one or more DM-RS ports, wherein the one or more DM-RS ports may be quasi co-located with one or more reference signals with respect to one or more quasi co-location parameter. The UE may receive the PDSCH scheduled by the DCI#2 by the one or more DM-RS ports.

In one embodiment, the UE may obtain a list of a plurality of codepoints of TCI field from, for example, a MAC CE, wherein each of the plurality of codepoints may indicate two different TCI states. For example, if the codepoint of TCI field is set to "0", the codepoint may indicate two different TCI states including the TCI state #a and the TCI state #b. If the codepoint of the TCI field is set to "1", the codepoint may indicate two different TCI states including the TCI states #x and the TCI state #y. The UE may determine that the one or more default TCI states may be the TCI states corresponding to the lowest codepoint among the plurality of codepoints on the list. For example, the UE may determine that the one or more default TCI states may be the TCI state #a and the TCI state #b corresponding to the codepoint "0". Since the default TCI states #a and #b are different from the TCI states #x and #y previous indicated by the DCI#1, a conflict for PDSCH reception may occur.

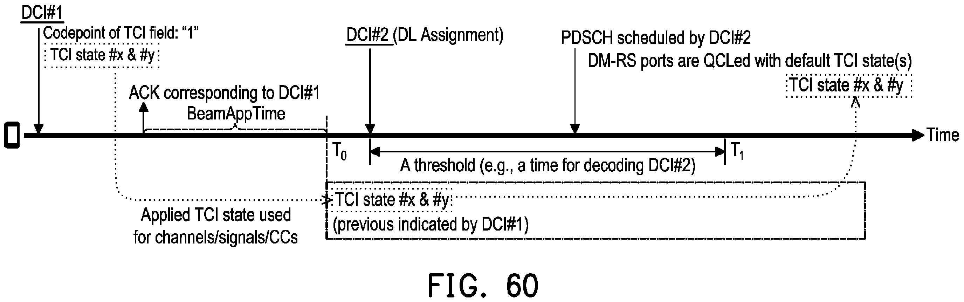

FIG. 60 illustrates a schematic diagram of PDSCH reception based on one or more default TCI states according to one embodiment of the present disclosure. Assume that the TCI state #x and the TCI state #y previously indicated by the DCI#1 are applied by the UE from the time point $T_0$. The UE may determine a time offset between the reception of DCI#2 and the PDSCH scheduled by the DCI#2 according to the DCI#2. If the time offset is less than a threshold (e.g., a time for decoding DCI#2), the UE may apply one or more default TCI states to one or more DM-RS ports, wherein the one or more DM-RS ports may be quasi co-located with one or more reference signals with respect to one or more quasi co-location parameter. The UE may receive the PDSCH scheduled by the DCI#2 by the one or more DM-RS ports.

In one embodiment, the one or more default TCI states may be the TCI states indicated by the previous DCI (e.g., DCI#1) or the applied TCI states for the unified TCI framework (i.e., the TCI states activate when the PDSCH scheduled by the DCI#2 is received by the UE).

In one embodiment, a plurality of IDs of CORESETs may be configured to the UE. The one or more default TCI states may be the active TCI states corresponding to the CORESET with the lowest ID of CORESET, wherein the CORESET may be the CORESET for the latest slot of PDSCH reception.

A default TCI state may be used by the UE for the A-CSI-RS reception. In one embodiment, the default TCI state may be the TCI state indicated by the previous DCI (e.g., DCI#1) or the applied TCI state for the unified TCI framework. In one embodiment, a plurality of IDs of CORESETs may be configured to the UE. The default TCI state may be the active TCI state corresponding to the CORESET with the lowest ID of CORESET, wherein the CORESET may be the CORESET for the latest slot of PDSCH reception. If there are two active TCI states corresponding to the CORESET with the lowest ID, the UE may use one of the two active TCI states for the A-CSI-RS reception.

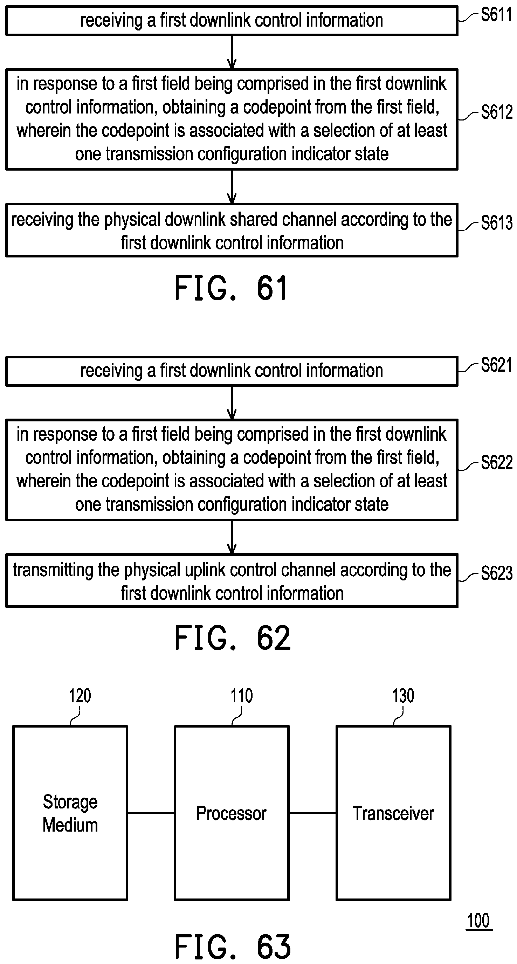

FIG. 61 illustrates a flowchart of a method for reception of a PDSCH according to one embodiment of the present disclosure. In step S611, receiving a first downlink control information. In step S612, in response to a first field being comprised in the first downlink control information, obtaining a codepoint from the first field, wherein the codepoint is associated with a selection of at least one transmission configuration indicator state. In step S613, receiving the physical downlink shared channel according to the first downlink control information.

FIG. 62 illustrates a flowchart of a method for transmission of a PUCCH according to one embodiment of the present disclosure. In step S621, receiving a first downlink control information. In step S622, in response to a first field being comprised in the first downlink control information, obtaining a codepoint from the first field, wherein the codepoint is associated with a selection of at least one transmission configuration indicator state. In step S623, transmitting the physical uplink control channel according to the first downlink control information.

FIG. 63 illustrates a schematic diagram of a communication device 100 according to one embodiment of the present disclosure, wherein the communication device 100 may include, for example, a BS or a UE. The method as shown in FIG. 1 to FIG. 62 may be implemented by the communication device 100. The communication device 100 may include a processor 110, a storage medium 120, and a transceiver 130.

The processor 110 is, for example, a graphics processing unit (GPU), an image signal processor (ISP), an image processing unit (IPU), a central processing unit (CPU), another programmable general purpose or special purpose micro control unit (MCU), a microprocessor, a digital signal processor (DSP), a programmable controller, a special application specific integrated circuit (ASIC), an arithmetic logic unit (ALU), a complex programmable logic device (CPLD), a field programmable gate array (FPGA) or other similar components or a combination of the foregoing components. The processor 110 may be coupled to the storage medium 120 and the transceiver 130, and may access and excrete a plurality of modules and various application programs stored in the store medium 120.

The storage medium 120 is, for example, any type of fixed or removable random access memory (RAM), a read-only memory (ROM), a flash memory, a hard disk drive (HDD), a solid state drive (SSD), or similar components or a combination of the foregoing components, and is configured to store the plurality of modules or various application programs that can be executed by the processor 110.

The transceiver 130 may be configured to transmit or receive wired/wireless signals. The transceiver 130 may also perform operations such as low noise amplifying, impedance matching, frequency mixing, up or down frequency conversion, filtering, amplifying, and so forth. The transceiver 130 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 130 may include an antenna array which may include one or multiple antennas to transmit and receive omni-directional antenna beams or directional antenna.

In summary, the disclosure provides a way to instruct the UE to apply one or more specific TCI states for the reception of PDSCH or the transmission of PUCCH by an implicit manner or an explicit manner. A TCI selection field may be included in a DCI received by the UE, and the UE may determine the TCI state to be applied according to the TCI selection field. If the TCI selection field is not included in the received DCI, the LTE may determine the TCI state to be applied according to an implicit indication including but not limited to: a TCI field in the DCI, an antenna port(s) field in the DCI, a CRC check result of the DCI, an indication from the previous DCI, a default TCI, or a control resource set configured to the LTE. Since the base station may indicate, to the UE, the TCI state to be applied without sending additional signaling to the UE, the signaling overhead between the base station and the UE may be reduced.

**Claims**

1. A method for reception of a physical downlink shared channel, adapted to a communication device (100), wherein the method comprising:

   receiving a first downlink control information;
   in response to a first field being comprised in the first downlink control information, obtaining a codepoint from the first field, wherein the codepoint is associated with a selection of at least one transmission configuration indicator state; and
   receiving the physical downlink shared channel according to the first downlink control information.

2. The method of claim 1, wherein the step of receiving the physical downlink shared channel according to the first downlink control information comprising:

   in response to the codepoint being a first codepoint, applying a first transmission configuration indicator state of the at least one transmission configuration indicator state to a demodulation reference signal port according to the selection; and
   receiving the physical downlink shared channel by the demodulation reference signal port.

3. The method of claim 2, wherein the step of receiving the physical downlink shared channel according to the first downlink control information comprising:

   in response to the codepoint being a second codepoint, applying a second transmission configuration indicator state of the at least one transmission configuration indicator state to the demodulation reference signal port according to the selection; and
   receiving the physical downlink shared channel by the demodulation reference signal port.

4. The method of claim 1, wherein the step of receiving the physical downlink shared channel according to the first downlink control information comprising:

   in response to the codepoint being a third codepoint, applying a first transmission configuration indicator state and a second transmission configuration indicator state of the at least one transmission configuration indicator state to a demodulation reference signal port according to the selection; and
   receiving the physical downlink shared channel by the demodulation reference signal port.

5. The method of claim 1, wherein the at least one transmission configuration indicator state is indicated to the communication device (100) by a transmission configuration indicator field.

6. The method of claim 5, further comprising:

receiving a second downlink control information, wherein the at least one transmission configuration indicator state is indicated by the transmission configuration indicator field of the second downlink control information.

7. The method of claim 6, wherein
a reception of the second downlink control information is prior to a reception of the first downlink control information.

8. The method of claim 5, further comprising:

in response to the first field not being comprised in the first downlink control information, determining the at least one transmission configuration indicator state according to the transmission configuration indicator field; applying the at least one transmission configuration indicator state to a demodulation reference signal port; and receiving the physical downlink shared channel by the demodulation reference signal port.

9. The method of claim 5, further comprising:

in response to the first field not being comprised in the first downlink control information, applying a first transmission configuration indicator state of the at least one transmission configuration indicator state to a demodulation reference signal port; and
receiving the physical downlink shared channel by the demodulation reference signal port.

10. The method of claim 5, further comprising:

in response to the first field not being comprised in the first downlink control information, applying a first transmission configuration indicator state and a second transmission configuration indicator state of the at least one transmission configuration indicator state to a demodulation reference signal port; and
receiving the physical downlink shared channel by the demodulation reference signal port.

11. The method of claim 1, further comprising:
determining a second selection of the at least one transmission configuration indicator state according to a physical uplink control channel resource indicator field of the first downlink control information.

12. The method of claim 11, further comprising:

obtaining a spatial setting of a physical uplink control channel from the second selection; and
transmitting the physical uplink control channel according to the spatial setting.

13. The method of claim 12, wherein
the physical uplink control channel is transmitted with a hybrid automatic repeat request acknowledgement corresponding to the physical downlink shared channel.

14. The method of claim 1, wherein the step of receiving the physical downlink shared channel according to the first downlink control information comprising:

determining a time offset between the first downlink control information and the physical downlink shared channel according to the first downlink control information;
in response to the time offset being less than a threshold, determining that a demodulation reference signal port of the physical downlink shared channel is quasi co-located with at least one reference signal with respect to at least one quasi co-location parameter, wherein the quasi co-location parameter is associated with a default transmission configuration indicator state; and
receiving the physical downlink shared channel by the demodulation reference signal port.

15. The method of claim 14, further comprising:

obtaining a list of a plurality of codepoints from a medium access control control element, wherein each of the plurality of codepoints indicates two different transmission configuration indicator states, wherein
the default transmission configuration indicator state is a transmission configuration indicator state corresponding to a lowest codepoint among the plurality of codepoints.

**16.** The method of claim 14, wherein
the default transmission configuration indicator state is the at least one transmission configuration indicator state.

**17.** The method of claim 16, further comprising:
receiving a second downlink control information, wherein the default transmission configuration indicator state is the at least one transmission configuration indicator state indicated by the second downlink control information.

**18.** The method of claim 14, wherein the default transmission configuration indicator state is a transmission configuration indicator state activated when the physical downlink shared channel is received.

**19.** The method of claim 14, wherein the default transmission configuration indicator state is a transmission configuration indicator state corresponding to a control resource set configured to the communication device (100).

**20.** The method of claim 1, further comprising:

in response to the first field not being comprised in the first downlink control information, determining a first transmission configuration indicator state of the at least one transmission configuration indicator state according to a preconfigured association between the first transmission configuration indicator state and a demodulation reference signal port, wherein the demodulation reference signal port is indicated by an antenna port field of the first downlink control information; and
receiving the physical downlink shared channel by the demodulation reference signal port.

**21.** The method of claim 1, further comprising:

in response to the first field not being comprised in the first downlink control information, performing a cyclic redundancy check for the first downlink control information by a first mask, wherein the first mask is corresponded to a first transmission configuration indicator state of the at least one transmission configuration indicator state;
in response to the cyclic redundancy check being successful, applying the first transmission configuration indicator state to a demodulation reference signal port; and
receiving the physical downlink shared channel by the demodulation reference signal port.

**22.** The method of claim 21, wherein the step of performing the cyclic redundancy check for the first downlink control information by the first mask comprising:

unscrambling a scrambled bit of the first downlink control information to obtain the first downlink control information with a parity bit; and
performing the cyclic redundancy check for the first downlink control information with the parity bit.

**23.** The method of claim 1, wherein the physical downlink shared channel is corresponded to a semi persistent scheduling.

**24.** A method for transmission of a physical uplink control channel, adapted to a communication device (100), wherein the method comprising:

receiving a first downlink control information;
in response to a first field being comprised in the first downlink control information, obtaining a codepoint from the first field, wherein the codepoint is associated with a selection of at least one transmission configuration indicator state; and
transmitting the physical uplink control channel according to the first downlink control information.

**25.** The method of claim 24, wherein the step of transmitting the physical uplink control channel according to the first downlink control information comprising:

in response to the codepoint being a first codepoint, applying a first transmission configuration indicator state of the at least one transmission configuration indicator state to a spatial setting according to the selection; and
transmitting the physical uplink control channel by the spatial setting.

**26.** The method of claim 25, wherein the step of transmitting the physical uplink control channel according to the first downlink control information comprising:

in response to the codepoint being a second codepoint, applying a second transmission configuration indicator state of the at least one transmission configuration indicator state to the spatial setting according to the selection; and

transmitting the physical uplink control channel by the spatial setting.

27. The method of claim 24, wherein the step of transmitting the physical uplink control channel according to the first downlink control information comprising:

in response to the codepoint being a second codepoint, applying a first transmission configuration indicator state and a second transmission configuration indicator in the at least one transmission configuration indicator state to a spatial setting according to the selection; and

transmitting the physical uplink control channel by the spatial setting.

28. The method of claim 24, wherein

the at least one transmission configuration indicator state is indicated to the communication device (100) by a transmission configuration indicator field.

29. The method of claim 28, further comprising:

receiving a second downlink control information, wherein the at least one transmission configuration indicator state is indicated by the transmission configuration indicator field to the communication device (100) by the second downlink control information.

30. The method of claim 24, further comprising:

in response to the first field not being comprised in the first downlink control information, determining a first transmission configuration indicator state of the at least one transmission configuration indicator state according to a preconfigured association between the first transmission configuration indicator state and a demodulation reference signal port, wherein the demodulation reference signal port is indicated by an antenna port field of the first downlink control information; and

transmitting the physical uplink control channel by the first transmission configuration indicator state.

31. The method of claim 24, further comprising:

in response to the first field not being comprised in the first downlink control information, performing a cyclic redundancy check for the first downlink control information by a first mask, wherein the first mask is corresponded to a first transmission configuration indicator state of the at least one transmission configuration indicator state;

in response to the cyclic redundancy check being successful, applying the first transmission configuration indicator state to a spatial setting; and

transmitting the physical uplink control channel by the spatial setting.

32. The method of claim 31, wherein the step of performing the cyclic redundancy check for the first downlink control information by the first mask comprising:

unscrambling a scrambled bit of the first downlink control information to obtain the first downlink control information with a parity bit; and

performing the cyclic redundancy check for the first downlink control information with the parity bit.

33. The method of claim 24, further comprising:

in response to the first field not being comprised in the first downlink control information, determining the at least one transmission configuration indicator state according to a transmission configuration indicator field;

applying the first transmission configuration indicator to a spatial setting; and

transmitting the physical uplink control channel by the spatial setting.

34. The method of claim 24, further comprising:

in response to the first field not being comprised in the first downlink control information, applying a first transmission configuration indicator state of the at least one transmission configuration indicator state to a spatial setting; and
transmitting the physical uplink control channel by the spatial setting.

35. The method of claim 24, further comprising:

    in response to the first field not being comprised in the first downlink control information, applying a first transmission configuration indicator state and a second transmission configuration indicator state of the at least one transmission configuration indicator state to a spatial setting; and
    transmitting the physical uplink control channel by the spatial setting.

36. The method of claim 24, further comprising:
    in response to the first field not being comprised in the first downlink control information, determining the selection of the at least one transmission configuration indicator state according to a physical uplink control channel resource indicator field of the first downlink control information.

37. The method of claim 36, further comprising:

    obtaining a spatial setting of a physical uplink control channel from the at least one transmission configuration indicator state; and
    transmitting the physical uplink control channel according to the spatial setting.

38. The method of claim 24, further comprising:
    receiving a physical downlink shared channel according to the first downlink control information before transmitting the physical uplink control channel.

39. The method of claim 38, wherein the physical downlink shared channel is corresponded to a semi persistent scheduling.

40. A user equipment for reception of a physical downlink shared channel, comprising:

    a transceiver; and
    a processor, coupled to the transceiver, wherein the processor is configured to:

        receive, via the transceiver, a first downlink control information;
        in response to a first field being comprised in the first downlink control information, obtain a codepoint from the first field, wherein the codepoint is associated with a selection of at least one transmission configuration indicator state; and
        receive, via the transceiver, the physical downlink shared channel according to the first downlink control information.

41. A user equipment for transmission of a physical uplink control channel, comprising:

    a transceiver; and
    a processor, coupled to the transceiver, wherein the processor is configured to:

        receive, via the transceiver, a first downlink control information;
        in response to a first field being comprised in the first downlink control information, obtain a codepoint from the first field, wherein the codepoint is associated with a selection of at least one transmission configuration indicator state; and
        transmit, via the transceiver, the physical uplink control channel according to the first downlink control information.

FIG. 1

FIG. 2

DCI

$a_0, a_1, a_2, a_3, \ldots, a_{A-1}$

| CRC attachment |

CRC length =24

$b_0, b_1, b_2, b_3, \ldots, b_{K-1}$

CRC parity bits Scrambling with RNTI sequence

$$c_K = \begin{cases} b_K, & k=0,1,2,\ldots,A+7 \\ (b_K + X_{mti,k-A-8}) \bmod 2, & k=A+8, A+9, A+10, \ldots, A+23 \end{cases}$$

$X_{mti,0}, X_{mti,1}, \ldots, X_{mti,15}$

$c_0, c_1, c_2, c_3, \ldots, c_{K-1}$

FIG. 3

| | Purpose | Reporting content | Effective period |
|---|---|---|---|
| Beam reporting | Find the location of UE<br>Beam channel establishment | Location-specific<br>E.g., CRI, L1-RSRP | Long or middle term<br>(Depend on e.g., UE's mobility, beam width) |
| CSI reporting | Based on beam channel,<br>maximize throughput<br>e.g., for PDSCH scheduling | Quality-specific<br>E.g., RI, PMI, CQI | Short term<br>(Due to e.g., fast fading) |

## FIG. 4

EP 4 274 146 A1

DCI: TCI field e.g., for PDSCH reception

| Codepoint of TCI field | $1^{st}$ TCI state | $2^{nd}$ TCI state |
|---|---|---|
| 0 | TCI state $ID_{0,1}$ | |
| 1 | TCI state $ID_{1,1}$ | TCI state $ID_{1,2}$ |

MAC CE: TCI states activation

| $C_0$='0' | TCI state $ID_{0,1}$ |
|---|---|
| R | N/A |
| $C_1$='1' | TCI state $ID_{1,1}$ |
| R | TCI state $ID_{1,2}$ |

## FIG. 5

## DCI: TCI field e.g., for PDSCH reception

| Codepoint of TCI field | 1st TCI state | 2nd TCI state |
|---|---|---|
| 00 | TCI state #x | TCI state #y |
| 01 | TCI state #x | |
| 10 | TCI state #y | |

DCI#1 (DL Assignment) TCI field

PDSCH scheduled by DCI#1

TCI field : codepoint "00"

TCI field : codepoint "01"

TCI field : codepoint "10"

Time

PDSCH

FIG. 6

| Antenna port(s) field | | |
| --- | --- | --- |
| Value | Number of DMRS CDM group(s) without data | DMRS port(s) |
| 0 | ... | 0 |
| 1 | ... | 1 |
| 2 | ... | 0,1 |
| 3 | ... | 0 |
| 4 | ... | 1 |
| 5 | ... | 2 |
| 6 | ... | 3 |
| 7 | ... | 0,1 |
| 8 | ... | 2,3 |
| 9 | ... | 0-2 |
| 10 | ... | 0-3 |
| 11 | ... | 0,2 |
| 12 | ... | 0,2,3 |
| 13-15 | Reserved | Reserved |

Value 0~8 may be used
- for S-TRP, if the number of TCI states =1

Value 9~12 may be used
- for S-TRP, if the number of TCI states =1
- for M-TRP, if the number of TCI states =2

# FIG. 7

| Antenna port(s) field | | | Association between indicated 2 TCI states and DMRS port(s) | |
| --- | --- | --- | --- | --- |
| Value | Number of DMRS CDM group(s) without data | DMRS port(s) | 1st TCI state | 2nd TCI state |
| 9 | ... | 0-2 | DMRS port(s): 0,1 | DMRS port(s): 2 |
| 10 | ... | 0-3 | DMRS port(s): 0,1 | DMRS port(s): 2,3 |
| 11 | ... | 0,2 | DMRS port(s): 0 | DMRS port(s): 2 |
| 12 | ... | 0,2,3 | DMRS port(s): 0 | DMRS port(s): 2,3 |

# FIG. 8

If one TCI states are indicated in a DCI with 'Transmission Configuration Indication' field

DCI: TCI field e.g., for PDSCH reception

| Codepoint of TCI field | 1st TCI state | 2nd TCI state |
|---|---|---|
| 01 | TCI state #x | |

DCI#1 (DL Assignment)
codepoint "01" in TCI field
Repetition Number in TDRA field

PDSCH scheduled by DCI#1
DM-RS ports are QCLed with
TCI state #x

→ Time

Multiple slot level PDSCH transmission occasions with Repetition Number e.g., 4 slots provided in TDRA field, or configured by RRC

Slot

| 1st PDSCH transmission occasion | 2nd PDSCH transmission occasion | 3rd PDSCH transmission occasion | 4th PDSCH transmission occasion |
|---|---|---|---|

➢ The 1st TCI state e.g., TCI state #x
may be applied

FIG. 9

EP 4 274 146 A1

- If <u>two TCI states</u> are indicated in a DCI with 'Transmission Configuration Indication' field

<u>DCI: TCI field e.g., for PDSCH reception</u>

| Codepoint of TCI field | 1st TCI state | 2nd TCI state |
|---|---|---|
| 00 | TCI state #x | TCI state #y |

DCI#1 (DL Assignment)
codepoint "00" in TCI field
Repetition Number in TDRA field

PDSCH scheduled by DCI#1
DM-RS ports are QCLed with
TCI state #x & #y

→Time

- Multiple slot level PDSCH transmission occasions with <u>Repetition Number</u> e.g., 4 slots provided in TDRA field, or configured by RRC

Cyclic Mapping

| Slot | | | |
|---|---|---|---|
| 1st PDSCH transmission occasion | 2nd PDSCH transmission occasion | 3rd PDSCH transmission occasion | 4th PDSCH transmission occasion |

The 2nd TCI state e.g., TCI state #y may be applied

The 1st TCI state e.g., TCI state #x may be applied

Sequential Mapping

| Slot | | | |
|---|---|---|---|
| 1st PDSCH transmission occasion | 2nd PDSCH transmission occasion | 3rd PDSCH transmission occasion | 4th PDSCH transmission occasion |

The 2nd TCI state e.g., TCI state #y may be applied

The 1st TCI state e.g., TCI state #x may be applied

FIG. 10

- If a PUCCH resource used for repetitions of a PUCCH transmission by a UE includes first and second spatial settings

DCI#1 (DL Assignment)      PDSCH scheduled by DCI#1      PUCCH with HARQ-ACK corresponding to scheduled PDSCH

PUCCH resource indicator (PRI)

The $1^{st}$ spatial setting activated via MAC CE

Repetition number configured by RRC

→Time

- Multiple slot level PUCCH transmission occasions with <u>Repetition Number</u> e.g., 4 slots configured by RRC

Slot

| $1^{st}$ PDSCH transmission occasion | $2^{nd}$ PDSCH transmission occasion | $3^{rd}$ PDSCH transmission occasion | $4^{th}$ PDSCH transmission occasion |
|---|---|---|---|

> The $1^{st}$ spatial setting may be applied

# FIG. 11

EP 4 274 146 A1

- If a PUCCH resource used for repetitions of a PUCCH transmission by a UE includes first and second spatial settings

DCI#1 (DL Assignment)      PDSCH scheduled by DCI#1      PUCCH with HARQ-ACK corresponding to scheduled PDSCH

PUCCH resource indicator (PRI)      | The 1st spatial setting | & | The 2nd spatial setting | activated

via MAC CE Repetition number configured by RRC

→ Time

- Multiple slot level PDSCH transmission occasions with <u>Repetition Number</u> e.g., 4 slots provided in TDRA field, or configured by RRC

Cyclic Mapping

Slot

| 1st PDSCH transmission occasion | 2nd PDSCH transmission occasion | 3rd PDSCH transmission occasion | 4th PDSCH transmission occasion |

| The 2nd spatial setting may be applied |

| The 1st spatial setting may be applied |

Sequential Mapping

Slot

| 1st PDSCH transmission occasion | 2nd PDSCH transmission occasion | 3rd PDSCH transmission occasion | 4th PDSCH transmission occasion |

| The 2nd spatial setting may be applied |

| The 1st spatial setting may be applied |

FIG. 12

- If the time offset between the reception of the DL DCI and the corresponding PDSCH is less than a threshold
  The default TCI states of PDSCH may be indicated by the lowest codepoint among the TCI codepoints containing 2 TCI states

DCI (DL Assignment)     Scheduled PDSCH received
                        by <u>default TCI states</u>

                                                        Time

A <u>threshold</u> (e.g., a time
for decoding DCI)

<u>DCI: TCI field e.g., for PDSCH reception</u>

| Codepoint of TCI field | 1st TCI state | 2nd TCI state |
|---|---|---|
| 0 | TCI state $ID_{0,1}$ | |
| 1 | TCI state $ID_{1,1}$ | TCI state $ID_{1,2}$ |
| 2 | TCI state $ID_{2,1}$ | |
| 3 | TCI state $ID_{3,1}$ | TCI state $ID_{3,2}$ |

FIG. 13

EP 4 274 146 A1

Step1:
TCI state pool configuration

Step2:
MAC CE activation/deactivation

Step3: Unified beam indication
(DCI without DL assignment)

TCI state #0

TCI state #1

TCI state #2

⋮

TCI state #N

| Codepoint of TCI field | Activated TCI state for DL & UL |
|---|---|
| 0 | TCI state #x |
| 1 | TCI state #y |
| 2 | TCI state #w |
| 3 | TCI state #z |

DCI#1

TCI field: TCI state #y

PUCCH including HARQ-ACK corresponding to DCI#1

Time for beam application

Applied TCI state

TCI state #x

TCI state #y

Time

FIG. 14

EP 4 274 146 A1

DCI#1 (DL Assignment)
TCI field: TCI state #y

PDSCH scheduled by DCI#1
DM-RS ports are QCLed
with TCI state #x

ACK corresponding
to scheduled PDSCH

BeamAppTime

Time

$T_0$

Applied
TCI state

TCI state #x
(indicated by previous DCI)

TCI state #y
(indicated by DCI#1)

FIG. 15

DCI#1 (DL Assignment)
TCI field: TCI state #x

PDSCH scheduled by DCI#1
DM-RS ports are QCLed
with TCI state #x

ACK corresponding
to scheduled PDSCH

Same

Time

Applied
TCI state

TCI state #x
(indicated by previous DCI)

FIG. 16

EP 4 274 146 A1

1. TCI field for unified beam updating

DCI#1 (DL Assignment)
TCI field: TCI state #y

PDSCH scheduled by DCI#1
DM-RS ports are QCLed
with TCI state #x

ACK corresponding
to scheduled PDSCH

2. Different

BeamAppTime

Time

$T_0$

Applied
TCI state

TCI state #x
(indicated by previous DCI)

3. Applied TCI state for scheduled
PDSCH reception

TCI state #y
(indicated by DCI#1)

FIG. 17

EP 4 274 146 A1

Step1:
TCI state pool configuration

| TCI state #0 |
| TCI state #1 |
| TCI state #2 |
| ⋮ |
| TCI state #N |

Step2:
MAC CE activation/deactivation

| Codepoint of TCI field | Activated TCI state for DL | Activated TCI state for UL |
|---|---|---|
| 0 | TCI state #$a_0$ | TCI state #$a_1$ |
| 1 | TCI state #$b_0$ | TCI state #$b_1$ |
| 2 | TCI state #$c_0$ | TCI state #$c_1$ |
| 3 | TCI state #$d_0$ | TCI state #$d_1$ |

Position A    Position B

Step3:
Unified beam indication

DCI#1 indicating e.g., TCI state #$b_0$ & $b_1$

PUCCH including HARQ-ACK

Time for beam application

→Time

Applied TCI state for DL
Applied TCI state for UL

| TCI state #$a_0$ TCI state #$a_1$ | TCI state #$b_0$ TCI state #$b_1$ |

FIG. 18

DCI#1 (DL Assignment)

PDSCH scheduled by DCI#1
DM-RS ports are QCLed
with TCI state #x & #y

Time

Applied
TCI state(s)

TCI state #x & #y
(indicated by previous DCI)

TCI state #x

TCI state #y

FIG. 19

EP 4 274 146 A1

DCI#1 (DL Assignment)

Select at least one TCI state
from the applied TCI state(s)

PDSCH scheduled by DCI#1
DM-RS ports are QCLed with

{TCI state #x & #y},
{TCI state #x}, or
{TCI state #y}

Time

Flexible TCI state selection

Applied
TCI state(s)

TCI state #x & #y
(indicated by previous DCI)

PDSCH

TCI state #x    TCI state #y

PDSCH

TCI state #x

PDSCH

TCI state #y

FIG. 20

DCI#1 (DL Assignment)

New field for TCI state selection

PDSCH scheduled by DCI#1
DM-RS ports are QCLed with

TCI state #x & #y,
TCI state #x, or
TCI state #y

Time

Applied
TCI state(s)

TCI state #x & #y
(indicated by previous DCI)

PDSCH

TCI state #x    TCI state #y

PDSCH
TCI state #x

PDSCH
TCI state #y

## FIG. 21

| The previous indicated TCI-State(s) | TCI selection field for the scheduled PDSCH | Description |
|---|---|---|
| 1st TCI state (e.g., TCI state #x) 2nd TCI state (e.g., TCI state #y) | 00 | Both TCI states (e.g., TCI state #x & #y) used for PDSCH reception |
| | 01 | 1st TCI state (e.g., TCI state #x) used for PDSCH reception |
| | 10 | 2nd TCI state (e.g., TCI state #y) used for PDSCH reception |
| | 11 | Reserved |

FIG. 22

EP 4 274 146 A1

FIG. 23

EP 4 274 146 A1

| Antenna port(s) field | | Association between previous indicated TCI state(s) and DMRS port(s) | | | |
|---|---|---|---|---|---|
| Value | DMRS port(s) | 1 DMRS port | 2 DMRS ports | 3 DMRS ports | 4 DMRS ports |
| 0 | 0 | 1st TCI state | | | |
| 1 | 1 | 2nd TCI state | | | |
| 2 | 0,1 | | 1st & 2nd TCI states | | |
| 3 | 0 | 1st TCI state | | | |
| 4 | 1 | 2nd TCI state | | | |
| 5 | 2 | 1st TCI state | | | |
| 6 | 3 | 2nd TCI state | | | |
| 7 | 0,1 | | 1st TCI state | | |
| 8 | 2,3 | | 2nd TCI state | | |
| 9 | 0-2 | | | 1st TCI state | |
| 10 | 0-3 | | | | 1st TCI state |
| 11 | 0,2 | | 1st & 2nd TCI states | | |
| 12 | 0,2,3 | | | 2nd TCI state | |
| 13 (new) | 0-2 | | | 1st & 2nd TCI states | |
| 14 (new) | 0-3 | | | | 2nd TCI state |
| 15 (new) | 0-3 | | | | 1st & 2nd TCI states |

E.g., for SU-MIMO { (values 0-2)

E.g., for MU-MIMO { (values 3-8)

E.g., for SU-MIMO { (values 9-15)

**FIG. 24**

| Antenna port (s) field | | Association between previous indicated TCI state(s) and DMRS port(s) |
|---|---|---|
| Value | DMRS port(s) | 4 DMRS ports received by |
| 10 | 0-3 | $1^{st}$ TCI states of applied TCI states |
| 14 (new) | 0-3 | $2^{nd}$ TCI states of applied TCI states |
| 15 (new) | 0-3 | $1^{st}$ & $2^{nd}$ TCI states of applied TCI states |

FIG. 25

FIG. 26

EP 4 274 146 A1

| The previous indicated TCI-State(s) | TCI state selection | TCI state selection mask $\langle x_{TS,0}, x_{TS,1'} \ldots, x_{TS,15} \rangle$ |
|---|---|---|
| 1st TCI states (e.g., TCI state #x) 2nd TCI states (e.g., TCI state #y) | 1st TCI state used for PDSCH reception | <0,0,0,0,0,0,0,0,0,0,0,0,0,0,0,0> |
| | 2nd TCI state used for PDSCH reception | <0,0,0,0,0,0,0,0,0,0,0,0,0,0,0,1> |
| | Both TCI states used for PDSCH reception | <0,0,0,0,0,0,0,0,0,0,0,0,0,1,0> |

DCI

$a_0, a_1, a_2, a_3, \ldots, a_{A-1}$

CRC attachment
CRC length =24

$b_0, b_1, b_2, b_3, \ldots, b_{K-1}$

Unified TCI framework applicable?

YES

**Case B**
CRC parity bits Scrambling with RNTI+TCI state selection mask

$$c_K = \begin{cases} b_K, & k=0,1,2,\ldots,A+7 \\ (b_K + x_{rnti,k-A-8} + \boxed{x_{TS,k-A-8}})\mod 2, & k=A+8,A+9,A+10,\ldots,A+23 \end{cases}$$

NO

**Case A**
CRC parity bits Scrambling with RNTI

$$c_K = \begin{cases} b_K, & k=0,1,2,\ldots,A+7 \\ (b_K + x_{rnti,k-A-8})\mod 2, & k=A+8,A+9,A+10,\ldots,A+23 \end{cases}$$

FIG. 27

FIG. 28

| Codepoint of TCI field | 1st TCI state | 2nd TCI state |
|---|---|---|
| ... | ... | ... |
| 110 | 1st TCI state of applied TCI states | |
| 111 | 2nd TCI state of applied TCI states | |

For scheduled PDSCH reception

TCI field: codepoint "110"

TCI field: codepoint "111"

DCI#1 (DL Assignment)

Codepoint "110" or "111" in TCI field

PDSCH scheduled by DCI#1
DM-RS ports are QCLed with

TCI state #x, or
TCI state #y

Time

PDSCH
TCI state #x

PDSCH
TCI state #y

Applied
TCI state(s)

TCI state #x & #y
(indicated by previous DCI)

FIG. 29

EP 4 274 146 A1

| Codepoint of TCI field | 1st TCI state | 2nd TCI state |
|---|---|---|
| 000 | TCI state #x | TCI state #y |
| 001 | TCI state #w | TCI state #z |
| ... | ... | ... |
| 110 | 1st TCI state of applied TCI states | |
| 111 | 2nd TCI state of applied TCI states | |

For scheduled PDSCH reception

EP 4 274 146 A1

TCI field:
codepoint other than "110",&"111"

DCI#1 (DL Assignment)

Codepoint "110" or "111" in TCI field

PDSCH scheduled by DCI#1
DM-RS ports are QCLed
with TCI state #x & #y

PDSCH

TCI state #x    TCI state #y

Time

Applied
TCI state(s)

TCI state #x & #y
(indicated by previous DCI)

## FIG. 30

Codepoint
of TCI field is "110"
or "111"?

NO

DCI#1 (DL Assignment)

Codepoint of TCI field
other than "110",&"111"

PDSCH scheduled by DCI#1

DM-RS ports are QCLed
with TCI state #x & #y

Applied
TCI state(s)

Time

TCI state #x & #y

YES

Codepoint
of TCI field is
"111"?

NO

DCI#1 (DL Assignment)

Codepoint of TCI field
is "110"

PDSCH scheduled by DCI#1

DM-RS ports are QCLed
with TCI state #x

Applied
TCI state(s)

Time

Select the 1st applied TCI state

TCI state #x & #y

YES

DCI#1 (DL Assignment)

Codepoint of TCI field
is "111"

PDSCH scheduled by DCI#1

DM-RS ports are QCLed
with TCI state #y

Applied
TCI state(s)

Time

Select the 2nd applied TCI state

TCI state #x & #y

FIG. 31

EP 4 274 146 A1

DCI#1 (DL Assignment)
Specific codepoint(s) in TCI field

PDSCH scheduled by DCI#1
DM-RS ports are QCLed with
TCI state #x & #y,
TCI state #x, or
TCI state #y

Time

Applied TCI state(s)
TCI state #x & #y
(indicated by previous DCI)

PDSCH

TCI state #x    TCI state #y

PDSCH

TCI state #x

PDSCH

TCI state #y

FIG. 32

MAC CE: TCI states activation

| $C_0$='1' | TCI state #w |
|---|---|
| $D_0$='0' | TCI state #z |
| $C_1$='1' | TCI state #x |
| $D_1$='1' | TCI state #y |
| $C_2$='0' | TCI state #x |
| $D_2$='1' | N/A |
| $C_3$='0' | TCI state #y |
| $D_3$='1' | N/A |

DCI: TCI field

| Codepoint of TCI field | 1st TCI state | 2nd TCI state | |
|---|---|---|---|
| 00 | TCI state #w | TCI state #z | For L1 based beam updating |
| 01 | TCI state #x | TCI state #y | |
| 10 | TCI state #x | | For scheduled PDSCH reception |
| 11 | TCI state #y | | (Dynamic PDSCH scheduling between M-TRP and S-TRP) |

FIG. 33

**MAC CE: TCI states activation**

| $C_1$='1' | TCI state #x |
|---|---|
| $D_1$='1' | TCI state #y |
| $C_2$='0' | TCI state #x |
| $D_2$='1' | N/A |
| $C_3$='0' | TCI state #y |
| $D_3$='1' | N/A |

**DCI: TCI field**

| Codepoint of TCI field | 1st TCI state | 2nd TCI state |
|---|---|---|
| 01 | TCI state #x | TCI state #y |
| 10 | TCI state #x | |
| 11 | TCI state #y | |

For scheduled PDSCH reception
(Dynamic PDSCH scheduling between M-TRP and S-TRP)

DCI#1 (DL Assignment)
Codepoint "01", "10", or "11" in TCI field

PDSCH scheduled by DCI#1
DM-RS ports are QCLed with
TCI state #x & #y,
TCI state #x, or
TCI state #y

TCI field : codepoint "01"

TCI field : codepoint "10"

TCI field : codepoint "11"

Time

Flexible TCI state selection

Applied TCI state(s)
TCI state #x & #y
(indicated by previous DCI)

PDSCH

**FIG. 34**

FIG. 35

EP 4 274 146 A1

| | Functionality switch field for TCI field | Description |
|---|---|---|
| Function 1 | 00 | TCI field used for L1 based beam updating |
| Function 2 | 01 | TCI field used for scheduled PDSCH reception |
| Function 3 | 10 | TCI field used for L1 based beam updating and for scheduled PDSCH reception |
| | 11 | Reserved |

DCI#1

Functionality switch field: "00"

TCI field

ACK

BeamAppTime

Time

Applied TCI state(s) used for channels/signals/CCs

TCI state(s)
(indicated by TCI field in DCI#1)

FIG. 36

| | Functionality switch field for TCI field | Description |
|---|---|---|
| Function 1 | 00 | TCI field used for L1 based beam updating |
| Function 2 | 01 | TCI field used for scheduled PDSCH reception |
| Function 3 | 10 | TCI field used for L1 based beam updating and for scheduled PDSCH reception |
| | 11 | Reserved |

FIG. 37

EP 4 274 146 A1

EP 4 274 146 A1

TRP #1

(((o)))

TCI state #x

TRP #2

(((o)))

TCI state #y

——————————————————————————————————————— Location

| TCI state #x | |
| --- | --- |

Beam coverage

| TCI state #y | TCI state #y |
| --- | --- |

UE may be under the coverage of TCI state #y

DL package arrival          DCI#1                                    DCI#2 (DL Assignment)          PDSCH scheduled by DCI#2
                            TCI state #y                                                           DM-RS ports are QCLed
                                        ACK corresponding                                          with TCI state #y
                                        to DCI#1
                                            BeamAppTime

————————————————————————————————————————————————————————————————————————————▶ Time

Applied
TCI state(s)

| | TCI state #y |
| --- | --- |
| TCI state #x & #y (indicated by TCI field in DCI#1) | (indicated by TCI field in DCI#1) |

## FIG. 38

| | Functionality switch field for TCI field | Description |
|---|---|---|
| Function 1 | 00 | TCI field used for L1 based beam updating |
| Function 2 | 01 | TCI field used for scheduled PDSCH reception |
| Function 3 | 10 | TCI field used for L1 based beam updating and for scheduled PDSCH reception |
| | 11 | Reserved |

FIG. 39

EP 4 274 146 A1

| | Functionality switch field for TCI field | Description |
|---|---|---|
| Function 1 | 0 | TCI field used for L1 based beam updating |
| Function 3 | 1 | TCI field used for L1 based beam updating and for scheduled PDSCH reception |

## FIG. 40

EP 4 274 146 A1

DCI#1 (DL Assignment)
PUCCH resource indicator (PRI)

PDSCH scheduled by DCI#1
DM-RS ports are QCLed
with TCI state #x & #y

PUCCH with HARQ-ACK corresponding to scheduled PDSCH
A spatial setting is provided
by TCI state #x & #y

Time

Applied
TCI state(s)

TCI state #x & #y
(indicated by previous DCI)

Fixed TCI states

## FIG. 41

FIG. 42

EP 4 274 146 A1

FIG. 43

EP 4 274 146 A1

FIG. 44

EP 4 274 146 A1

| The previous indicated TCI-State(s) | TCI selection field for PUCCH resource indicated by PRI | Description |
|---|---|---|
| 1st TCI state (e.g., TCI state #x) 2nd TCI state (e.g., TCI state #y) | 00 | Both TCI states (e.g., TCI state #x & #y) used for PDSCH reception |
| | 01 | 1st TCI state (e.g., TCI state #x) used for PDSCH reception |
| | 10 | 2nd TCI state (e.g., TCI state #y) used for PDSCH reception |
| | 11 | Reserved |

## FIG. 45

## FIG. 46

EP 4 274 146 A1

EP 4 274 146 A1

| Antenna port(s) field | | Association between previous indicated TCI state(s) and DMRS port(s) | | | |
|---|---|---|---|---|---|
| Value | DMRS port(s) | 1 DMRS port | 2 DMRS ports | 3 DMRS ports | 4 DMRS ports |
| 0 | 0 | $1^{st}$ TCI state | | | |
| 1 | 1 | $2^{nd}$ TCI state | | | |
| 2 | 0,1 | | $1^{st}$ & $2^{nd}$ TCI states | | |
| 3 | 0 | $1^{st}$ TCI state | | | |
| 4 | 1 | $2^{nd}$ TCI state | | | |
| 5 | 2 | $1^{st}$ TCI state | | | |
| 6 | 3 | $2^{nd}$ TCI state | | | |
| 7 | 0,1 | | $1^{st}$ TCI state | | |
| 8 | 2,3 | | $2^{nd}$ TCI state | | |
| 9 | 0-2 | | | $1^{st}$ TCI state | |
| 10 | 0-3 | | | | $1^{st}$ TCI state |
| 11 | 0,2 | | $1^{st}$ & $2^{nd}$ TCI states | | |
| 12 | 0,2,3 | | | $2^{nd}$ TCI state | |
| 13 (new) | 0-2 | | | $1^{st}$ & $2^{nd}$ TCI states | |
| 14 (new) | 0-3 | | | | $2^{nd}$ TCI state |
| 15 (new) | 0-3 | | | | $1^{st}$ & $2^{nd}$ TCI states |

FIG. 47

DCI#1 (e.g.,DL Assignment)   (Scheduled PDSCH)

PDSCH with HARQ-ACK

CRC parity bits scrambling

A spatial setting is provided by

① TCI state #x & TCI state #y

② TCI state #x

③ TCI state #y

Time

Flexible TCI state selection

Applied
TCI state(s)

TCI state #x & TCI state #y
(indicated by previous DCI)

FIG. 48

DCI

$a_0, a_1, a_2, a_3, \ldots, a_{A-1}$

CRC attachment
CRC length =24

$b_0, b_1, b_2, b_3, \ldots, b_{K-1}$

Unified TCI framework applicable?

YES

Case B
CRC parity bits Scrambling with
RNTI+TCI state selection mask

$$c_K = \begin{cases} b_K, & k=0,1,2,\ldots,A+7 \\ (b_K + x_{rnti,k-A-8} + \boxed{x_{TS,k-A-8}}) \bmod 2, & k=A+8, A+9, A+10, \ldots, A+23 \end{cases}$$

NO

Case A
CRC parity bits Scrambling with RNTI

$$c_K = \begin{cases} b_K, & k=0,1,2,\ldots,A+7 \\ (b_K + x_{rnti,k-A-8}) \bmod 2, & k=A+8, A+9, A+10, \ldots, A+23 \end{cases}$$

| The previous indicated TCI-State(s) | TCI state selection | TCI state selection mask $\langle x_{TS,0}, x_{TS,1}, \ldots, x_{TS,15} \rangle$ |
|---|---|---|
| 1st TCI states (e.g., TCI state #x) 2nd TCI states (e.g., TCI state #y) | 1st TCI state used for PDSCH reception | <0,0,0,0,0,0,0,0,0,0,0,0,0,0,0,0> |
| | 2nd TCI state used for PDSCH reception | <0,0,0,0,0,0,0,0,0,0,0,0,0,0,0,1> |
| | Both TCI states used for PDSCH reception | <0,0,0,0,0,0,0,0,0,0,0,0,0,0,1,0> |

FIG. 49

DCI#1 (e.g.,DL Assignment)   (Scheduled PDSCH)   PDSCH with HARQ-ACK

Specific codepoint(s) in TCI field

A spatial setting is provided by
① TCI state #x & TCI state #y
② TCI state #x
③ TCI state #y

Time

Flexible TCI state selection

Applied TCI state(s)

TCI state #x & TCI state #y
(indicated by previous DCI)

FIG. 50

| Codepoint of TCI field | 1st TCI state | 2nd TCI state |
|---|---|---|
| 10 | 1st TCI state of applied TCI states | |
| 11 | 2nd TCI state of applied TCI states | |

For scheduled PDSCH reception and/or for PUCCH transmission

DCI#1 (DL Assignment)

Codepoint "10" or "11" in TCI field

PDSCH scheduled by DCI#1
DM-RS ports are QCLed with

TCI state #x, or
TCI state #y

PUCCH with HAQR-ACK corresponding to scheduled PDSCH
A spatial setting is provided by

TCI state #x, or
TCI state #y

Time

Applied
TCI state(s)

TCI state #x & #y
(indicated by previous DCI)

FIG. 51

EP 4 274 146 A1

EP 4 274 146 A1

| Codepoint of TCI field | 1st TCI state | 2nd TCI state |
|:---:|:---:|:---:|
| 00 | TCI state #x | TCI state #y |
| 01 | TCI state #w | TCI state #z |
| 10 | 1st TCI state of applied TCI states | |
| 11 | 2nd TCI state of applied TCI states | |

For scheduled PDSCH reception and/or for PUCCH transmission

DCI#1 (DL Assignment)
Codepoint of TCI field other than "10", & "11"

PDSCH scheduled by DCI#1
DM-RS ports are QCLed with TCI state #x & #y

PUCCH with HAQR-ACK corresponding to scheduled PDSCH
A spatial setting is provided by TCI state #x & #y

Time

Applied TCI state(s)
TCI state #x & #y (indicated by previous DCI)

FIG. 52

DCI#1 (e.g.,DL Assignment)  (Scheduled PDSCH)

PDSCH with HARQ-ACK

Specific codepoint(s) in TCI field

A spatial setting is provided by

① TCI state #x & TCI state #y
② TCI state #x
③ TCI state #y

Time

Flexible TCI state selection

Applied
TCI state(s)

TCI state #x & TCI state #y
(indicated by previous DCI)

FIG. 53

EP 4 274 146 A1

MAC CE: TCI states activation

| | |
|---|---|
| $C_0$='1' | TCI state #w |
| $D_0$='0' | TCI state #z |
| $C_1$='1' | TCI state #x |
| $D_1$='1' | TCI state #y |
| $C_2$='0' | TCI state #x |
| $D_2$='1' | N/A |
| $C_3$='0' | TCI state #y |
| $D_3$='1' | N/A |

DCI: TCI field

| Codepoint of TCI field | 1st TCI state | 2nd TCI state | |
|---|---|---|---|
| 00 | TCI state #w | TCI state #z | For L1 based beam updating |
| 01 | TCI state #x | TCI state #y | |
| 10 | TCI state #x | | For scheduled PDSCH reception and/or for PUCCH transmission |
| 11 | TCI state #y | | |

FIG. 54

EP 4 274 146 A1

FIG. 55

EP 4 274 146 A1

DCI: PRI field

| Codepoint of TCI field | PUCCH resource | TCI state(s) for PUCCH transmision |
|---|---|---|
| 000 | PUCCH resource #$A_0$ | $1^{st}$ TCI state of applied TCI states |
| 001 | PUCCH resource #$A_1$ | $2^{nd}$ TCI state of applied TCI states |
| 010 | PUCCH resource #$A_2$ | $1^{st}$ TCI state and $2^{nd}$ TCI state of applied TCI states |
| 011 | PUCCH resource #$A_3$ | $1^{st}$ TCI state of applied TCI states |
| 100 | PUCCH resource #$A_4$ | $2^{nd}$ TCI state of applied TCI states |
| 101 | PUCCH resource #$A_5$ | $1^{st}$ TCI state and $2^{nd}$ TCI state of applied TCI states |
| 110 | PUCCH resource #$A_6$ | $1^{st}$ TCI state of applied TCI states |
| 111 | PUCCH resource #$A_7$ | $2^{nd}$ TCI state of applied TCI states |

FIG. 56

| | Functionality switch field for TCI field | Description |
|---|---|---|
| Function 1 | 00 | TCI field used for L1 based beam updating |
| Function 2 | 01 | TCI field used for scheduled PDSCH reception and/or for PUCCH resource transmission indicated by PRI |
| Function 3 | 10 | TCI field used for L1 based beam updating and for scheduled PDSCH reception and/or for PUCCH resource transmission indicated by PRI |
| | 11 | Reserved |

## FIG. 57

DCI#1 (DL Assignment)

Select at least one TCI state
from the applied TCI state(s)

PDSCH scheduled by DCI#1
DM-RS ports are QCLed with
TCI state #x & #y,
TCI state #x, or
TCI state #y

PUCCH with HAQR-ACK corresponding to scheduled PDSCH

A spatial setting may be associated with
TCI states applied for the scheduled PDSCH

Time

Applied
TCI state(s)

TCI state #x & #y
(indicated by previous DCI)

## FIG. 58

DCI: TCI field e.g., for PDSCH reception

| Codepoint of TCI field | 1$^{st}$ TCI state | 2$^{nd}$ TCI state |
|---|---|---|
| 0 | TCI state #a | TCI state #b |
| 1 | TCI state #x | TCI state #y |

←—— Default TCI states

DCI#1
Codepoint of TCI field: "1"
TCI state #x & #y

DCI#2 (DL Assignment)

PDSCH scheduled by DCI#2
DM-RS ports are QCLed with default TCI state(s)
Codepoint of TCI field: "0" → TCI state #a & #b

ACK corresponding to DCI#1
BeamAppTime

Conflict → Time

T₀

A threshold (e.g., a time for decoding DCI#2)

Applied TCI state used
for channels/signals/CCs

TCI state #x & #y
(previous indicated by DCI#1)

FIG. 59

EP 4 274 146 A1

DCI#1
Codepoint of TCI field: "1"
TCI state #x & #y

DCI#2 (DL Assignment)

PDSCH scheduled by DCI#2
DM-RS ports are QCLed with default TCI state(s)
TCI state #x & #y

ACK corresponding to DCI#1
BeamAppTime

$T_0$

A threshold (e.g., a time for decoding DCI#2)

$T_1$

Time

Applied TCI state used
for channels/signals/CCs

TCI state #x & #y
(previous indicated by DCI#1)

FIG. 60

EP 4 274 146 A1

```
┌─────────────────────────────────────────────────────────────────┐
│         receiving a first downlink control information          │── S611
└─────────────────────────────────────────────────────────────────┘
                               │
                               ▼
┌─────────────────────────────────────────────────────────────────┐
│ in response to a first field being comprised in the first downlink│
│ control information, obtaining a codepoint from the first field,  │── S612
│ wherein the codepoint is associated with a selection of at least  │
│    one transmission configuration indicator state                │
└─────────────────────────────────────────────────────────────────┘
                               │
                               ▼
┌─────────────────────────────────────────────────────────────────┐
│ receiving the physical downlink shared channel according to the  │── S613
│            first downlink control information                    │
└─────────────────────────────────────────────────────────────────┘
```

## FIG. 61

```
┌─────────────────────────────────────────────────────────────────┐
│         receiving a first downlink control information          │── S621
└─────────────────────────────────────────────────────────────────┘
                               │
                               ▼
┌─────────────────────────────────────────────────────────────────┐
│ in response to a first field being comprised in the first downlink│
│ control information, obtaining a codepoint from the first field,  │── S622
│ wherein the codepoint is associated with a selection of at least  │
│    one transmission configuration indicator state                │
└─────────────────────────────────────────────────────────────────┘
                               │
                               ▼
┌─────────────────────────────────────────────────────────────────┐
│ transmitting the physical uplink control channel according to the│── S623
│            first downlink control information                    │
└─────────────────────────────────────────────────────────────────┘
```

## FIG. 62

```
        120              110              130
┌───────────────┐  ┌───────────────┐  ┌───────────────┐
│               │  │               │  │               │
│    Storage    │  │               │  │               │
│    Medium     │──│   Processor   │──│  Transceiver  │
│               │  │               │  │               │
│               │  │               │  │               │
└───────────────┘  └───────────────┘  └───────────────┘
```

100

## FIG. 63

# EUROPEAN SEARCH REPORT

Application Number

EP 23 17 0815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/090507 A1 (NTT DOCOMO INC [JP]) 14 May 2021 (2021-05-14) * abstract * -& US 2022/400505 A1 (MATSUMURA YUKI [JP] ET AL) 15 December 2022 (2022-12-15) * paragraphs [0038], [0110], [0156] – [0159], [0181], [0190], [0395] * | 1-41 | INV. H04L5/00 |
| X | WO 2021/162423 A1 (LG ELECTRONICS INC [KR]) 19 August 2021 (2021-08-19) * abstract * -& EP 4 106 249 A1 (LG ELECTRONICS INC [KR]) 21 December 2022 (2022-12-21) * paragraphs [0099], [0100], [0202] – [0204], [0231], [0279] * | 1-41 | |
| X | WO 2022/072830 A1 (PARK JONGHYUN [US]; DINAN ESMAEL HEJAZI [US] ET AL.) 7 April 2022 (2022-04-07) * paragraphs [0226] – [0228], [0407], [0411], [0412] * | 1-41 | TECHNICAL FIELDS SEARCHED (IPC) |
| X | EP 3 651 397 A1 (PANASONIC IP CORP AMERICA [US]) 13 May 2020 (2020-05-13) * paragraphs [0035], [0042], [0051], [0059] – [0064], [0070] – [0086], [0114] * | 1-41 | H04L |

The present search report has been drawn up for all claims

| Place of search | Date of completion of the search | Examiner |
|---|---|---|
| The Hague | 15 September 2023 | Orozco Roura, Carles |

# EP 4 274 146 A1

## ANNEX TO THE EUROPEAN SEARCH REPORT
## ON EUROPEAN PATENT APPLICATION NO.

EP 23 17 0815

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | | Publication date | Patent family member(s) | | | Publication date |
|---|---|---|---|---|---|---|---|
| WO 2021090507 | A1 | | 14-05-2021 | CN | 114830549 | A | 29-07-2022 |
| | | | | JP | WO2021090507 | A1 | 14-05-2021 |
| | | | | US | 2022400505 | A1 | 15-12-2022 |
| | | | | WO | 2021090507 | A1 | 14-05-2021 |
| US 2022400505 | A1 | | 15-12-2022 | CN | 114830549 | A | 29-07-2022 |
| | | | | JP | WO2021090507 | A1 | 14-05-2021 |
| | | | | US | 2022400505 | A1 | 15-12-2022 |
| | | | | WO | 2021090507 | A1 | 14-05-2021 |
| WO 2021162423 | A1 | | 19-08-2021 | CN | 115039370 | A | 09-09-2022 |
| | | | | EP | 4106249 | A1 | 21-12-2022 |
| | | | | JP | 2023512770 | A | 29-03-2023 |
| | | | | KR | 20220134520 | A | 05-10-2022 |
| | | | | KR | 20230088524 | A | 19-06-2023 |
| | | | | US | 2023050015 | A1 | 16-02-2023 |
| | | | | US | 2023209562 | A1 | 29-06-2023 |
| | | | | WO | 2021162423 | A1 | 19-08-2021 |
| EP 4106249 | A1 | | 21-12-2022 | CN | 115039370 | A | 09-09-2022 |
| | | | | EP | 4106249 | A1 | 21-12-2022 |
| | | | | JP | 2023512770 | A | 29-03-2023 |
| | | | | KR | 20220134520 | A | 05-10-2022 |
| | | | | KR | 20230088524 | A | 19-06-2023 |
| | | | | US | 2023050015 | A1 | 16-02-2023 |
| | | | | US | 2023209562 | A1 | 29-06-2023 |
| | | | | WO | 2021162423 | A1 | 19-08-2021 |
| WO 2022072830 | A1 | | 07-04-2022 | EP | 4208952 | A1 | 12-07-2023 |
| | | | | US | 2023232481 | A1 | 20-07-2023 |
| | | | | WO | 2022072830 | A1 | 07-04-2022 |
| EP 3651397 | A1 | | 13-05-2020 | BR | 112020022133 | A2 | 18-05-2021 |
| | | | | CN | 112313901 | A | 02-02-2021 |
| | | | | EP | 3651397 | A1 | 13-05-2020 |
| | | | | EP | 3881473 | A1 | 22-09-2021 |
| | | | | EP | 4246823 | A2 | 20-09-2023 |
| | | | | JP | 2022511201 | A | 31-01-2022 |
| | | | | KR | 20210088442 | A | 14-07-2021 |
| | | | | SG | 11202012345P | A | 28-05-2021 |
| | | | | US | 2021112586 | A1 | 15-04-2021 |
| | | | | WO | 2020099413 | A1 | 22-05-2020 |

EPO FORM P0459

For more details about this annex : see Official Journal of the European Patent Office, No. 12/82